(19) **Europäisches Patentamt / European Patent Office / Office européen des brevets**

(11) **EP 4 727 239 A1**

(12) **EUROPEAN PATENT APPLICATION**
published in accordance with Art. 153(4) EPC

(43) Date of publication:
**15.04.2026 Bulletin 2026/16**

(21) Application number: **24843250.2**

(22) Date of filing: **29.04.2024**

(51) International Patent Classification (IPC):
**H04W 72/1268** (2023.01)   **H04W 72/232** (2023.01)
**H04W 72/0446** (2023.01)   **H04W 74/00** (2009.01)
**H04W 8/24** (2009.01)      **H04L 1/08** (2006.01)

(52) Cooperative Patent Classification (CPC):
**H04L 1/08; H04W 8/24; H04W 72/04;
H04W 72/0446; H04W 72/12; H04W 72/1268;
H04W 72/232; H04W 74/00**

(86) International application number:
**PCT/KR2024/005791**

(87) International publication number:
**WO 2025/018527 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.07.2023  KR 20230092391**

(71) Applicant: **Samsung Electronics Co., Ltd.
Suwon-si, Gyeonggi-do 16677 (KR)**

(72) Inventors:
• **PARK, Sungjin**
  **Suwon-si Gyeonggi-do 16677 (KR)**
• **KIM, Younsun**
  **Suwon-si Gyeonggi-do 16677 (KR)**
• **RYU, Hyunsuk**
  **Suwon-si Gyeonggi-do 16677 (KR)**
• **PARK, Kyoungmin**
  **Suwon-si Gyeonggi-do 16677 (KR)**

(74) Representative: **Nederlandsch Octrooibureau
P.O. Box 29720
2502 LS The Hague (NL)**

(54) **METHOD AND DEVICE FOR TRANSMITTING/RECEIVING CONTROL AND DATA INFORMATION IN WIRELESS COMMUNICATION SYSTEM**

(57)   The present disclosure relates to a 5G or 6G communication system for supporting a higher data transmission rate. A method performed by a base station in a wireless communication system, according to various embodiments of the present disclosure, may comprise the steps of: receiving, from a user equipment and through a physical random access channel (PRACH) or message 3, capability information with respect to repetitive transmission of the user equipment; identifying a repetitive transmission value on the basis of the capability information and the distance between the user equipment and the base station; and transmitting information related to the repetitive transmission value to the user equipment.

TRANSMIT AND RECEIVE REPETITION TRANSMISSION-RELATED INFORMATION VIA UPPER-LAYER SIGNAL — 2405

TRANSMIT AND RECEIVE UE CAPABILITY RELATED TO PERFORMING REPETITION TRANSMISSION — 2410

INDICATE, VIA DOWNLINK CONTROL INFORMATION, WHETHER TO PERFORM REPETITION TRANSMISSION FOR DOWNLINK DATA, UPLINK DATA, OR UPLINK CONTROL INFORMATION — 2415

UE PERFORMS, VIA CONTROL INFORMATION, DOWNLINK DATA RECEPTION, UPLINK DATA TRANSMISSION, OR UPLINK CONTROL INFORMATION TRANSMISSION — 2420

FIG.24

EP 4 727 239 A1

**Description**

[Technical Field]

The disclosure relates to a wireless communication system and, more specifically, to operations of a terminal and a base station in a satellite communication system. Specifically, the disclosure relates to a method and a device for transmitting and receiving control and data information in a satellite communication system.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As described above, and with the advancement of mobile communication systems enabling the provision of diverse services, there is a growing need for effective methods to deliver these services.

[Disclosure of Invention]

[Technical Problem]

The disclosure relates to a wireless communication system and, more specifically, to operations of a terminal and a base station in a satellite communication system. Various embodiments of the disclosure are to provide a device and a method capable of effectively providing services in a wireless communication system.

[Solution to Problem]

According to various embodiments of the disclosure, a method performed by a base station in a wireless communication system may include: receiving, from a user equipment (UE), capability information regarding repetition transmission of the UE via a physical random-access channel (PRACH) or message 3; identifying a repetition transmission value, based on the capability information and a distance between the UE and the base station; and transmitting, to the UE, information on the repetition transmission value.

[Advantageous Effects of Invention]

Embodiments of the disclosure provide a device and a method capable of effectively providing services in a wireless communication system.

Advantageous effects obtainable from the disclosure may not be limited to the above-mentioned effects, and other effects which are not mentioned herein may be clearly understood from the following description by those skilled in the art to which the disclosure pertains.

[Brief Description of Drawings]

FIG. 1 illustrates a basic structure of a time-frequency domain in a wireless communication system according to an embodiment of the disclosure.

FIG. 2 illustrates a structure of a frame, a subframe, and a slot in a wireless communication system according to an embodiment of the disclosure.

FIG. 3 illustrates an example of a bandwidth part configuration in a wireless communication system according to an embodiment of the disclosure.

FIG. 4 illustrates an example of a control resource set configuration of a downlink control channel in a wireless communication system according to an embodiment of the disclosure.

FIG. 5 illustrates a structure of a downlink control channel in a wireless communication system according to an embodiment of the disclosure.

FIG. 6 illustrates, in terms of spans, a case in which a UE may have multiple PDCCH monitoring occasions within a slot in a wireless communication system according to an embodiment of the disclosure.

FIG. 7 illustrates an example of base station beam allocation according to TCI state configurations in a wireless communication system according to an embodiment of the disclosure.

FIG. 8 illustrates an example of a method for allocating a TCI state to a PDCCH in a wireless communication system according to an embodiment of the disclosure.

FIG. 9 illustrates a TCI indication MAC CE signaling structure for a PDCCH DMRS in a wireless communication system according to an embodiment of the disclosure.

FIG. 10 illustrates an example of a beam configuration with regard to a control resource set and a search space in a wireless communication system according to an embodiment of the disclosure.

FIG. 11 illustrates a method in which a base station and a UE transmit/receive data in consideration of a downlink data channel and a rate matching resource in a wireless communication system according to an embodiment of the disclosure.

FIG. 12 illustrates a method in which, upon receiving a downlink control channel, a UE selects a receivable control resource set in consideration of priority in a wireless communication system according to an embodiment of the disclosure.

FIG. 13 illustrates an example of an aperiodic CSI reporting method according to an embodiment of the disclosure.

FIG. 14 illustrates an example of PUSCH repetition type B transmission in a wireless communication system according to an embodiment of the disclosure.

FIG. 15 illustrates radio protocol structures of a base station and a UE in single cell, carrier aggregation, and dual connectivity situations according to an embodiment of the disclosure.

FIG. 16 illustrates an example of an antenna port configuration and resource allocation for cooperative communication in a wireless communication system according to an embodiment of the disclosure.

FIG. 17 illustrates an example of a downlink control information (DCI) configuration for cooperative communication in a wireless communication system according to an embodiment of the disclosure.

FIG. 18 illustrates a procedure in which a base station controls transmission power of a UE in a cellular system.

FIG. 19 is a diagram illustrating a procedure in which a terminal generates a Type-1 (semi-static) HARQ-ACK codebook according to an embodiment of the disclosure.

FIG. 20 is a diagram illustrating a procedure in which a terminal generates a Type-2 (dynamic) HARQ-ACK codebook according to an embodiment of the disclosure.

FIG. 21 is a diagram illustrating a procedure in which a terminal and a base station perform transmission and reception to perform initial access according to an embodiment.

FIG. 22 is a diagram illustrating a revolution period of a communication satellite revolving around the Earth in accordance with an altitude or a height of the satellite according to an embodiment of the disclosure.

FIG. 23 illustrates a signal flow for performing initial access between a terminal and a base station according to an embodiment of the disclosure.

FIG. 24 illustrates an operation flow for a terminal to repeatedly transmit and receive signals for channels according to an embodiment of the disclosure.

FIG. 25 illustrates a situation in which DCI for message 2 scheduling is repeatedly transmitted after transmission of a physical random-access channel (PRACH) according to an embodiment of the disclosure.

FIG. 26 illustrates a structure of a UE in a wireless communication system according to an embodiment of the disclosure.

FIG. 27 illustrates a structure of a base station in a wireless communication system according to an embodiment of the disclosure.

[Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements. In addition, a detailed description of known functions or configurations that may make the subject matter of the disclosure unclear will be omitted. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a satellite, a gateway, a terrestrial station, a gNode B, an eNode B, a Node B, a base station (BS), a wireless access unit, a base station controller, or a node on a network. A terminal may include a user equipment (UE), a mobile station (MS), a cellular phone, a smartphone, a computer, or a multimedia system capable of performing a communication function. In the disclosure, a "downlink (DL)" may refer to a radio link via which a base station transmits a signal to a terminal, and an "uplink (UL)" may refer to a radio link via which a terminal transmits a signal to a base station. Furthermore, in the following description, 5G or NR systems may be described by way of example, but the embodiments of the disclosure may also be applied to other communication systems having similar technical backgrounds or channel types. Examples of such communication systems may include mobile communication technologies developed beyond LTE or LTE-A mobile communication and 5G, and in the following description, the "5G" may be the concept that covers the legacy LTE, LTE-A, and other similar services. In addition, based on determinations by those skilled in the art, the disclosure may also be applied to other communication systems through some modifications without significantly departing from the scope of the disclosure. The contents of the disclosure may be applied to FDD and TDD systems.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) (or eNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a higher data rate than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10$^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

**[NR time-frequency resources]**

Hereinafter, a frame structure of a 5G system will be described in more detail with reference to the accompanying drawings.

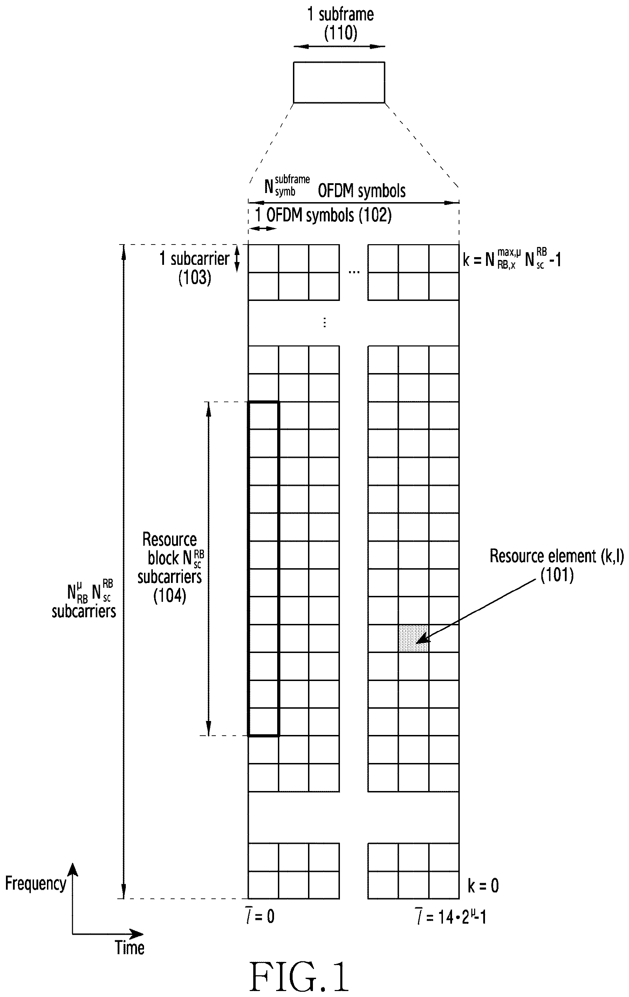

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (for example, 12) consecutive REs may constitute one resource block (RB) 104.

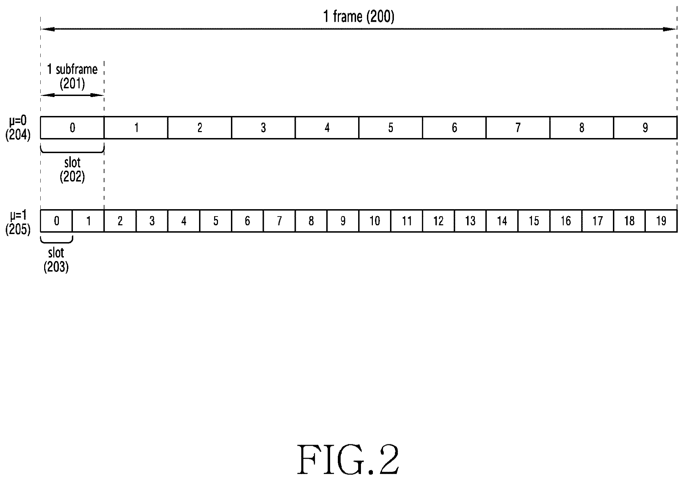

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example in FIG. 2 illustrates a case in which the subcarrier spacing configuration value is $\mu=0$ (204), and a case in which $\mu=1$ (205). In the case of $\mu=0$ (204), one subframe 201 may include one slot 202, and in the case of $\mu=1$ (205), one subframe 201 may include two slots 203. That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

(continued)

| $\mu$ | $N_{symb}^{slot}$ | $N_{slot}^{frame,\mu}$ | $N_{slot}^{subframe,\mu}$ |
|---|---|---|---|
| 5 | 14 | 320 | 32 |

**[Bandwidth part (BWP)]**

Next, a bandwidth part (BWP) configuration in a 5G communication system will be described in detail with reference to the accompanying drawings.

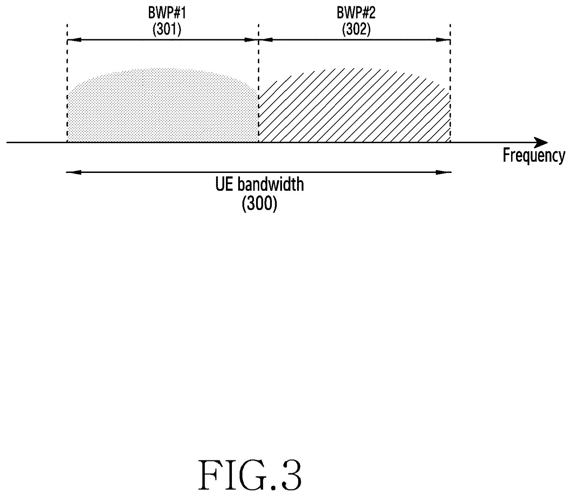

FIG. 3 illustrates an example of a bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given below.

[Table 2]

| | |
|---|---|
| BWP ::= | SEQUENCE { |
| bwp-Id | BWP-Id, |
| locationAndBandwidth | INTEGER (1..65536), |
| subcarrierSpacing | ENUMERATED {n0, n1, n2, n3, n4, n5}, |
| cyclicPrefix | ENUMERATED { extended } |
| } | |

Obviously, the above example is not limiting, and various parameters related to the bandwidth part may be configured for the UE, in addition to the above configuration information. The base station may transfer the configuration information to the UE through upper layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to an embodiment, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource set #0 through the MIB. In addition, the base station may notify the UE of configuration information regarding the monitoring periodicity and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

**[Bandwidth part (BWP) change]**

According to an embodiment, if one or more bandwidth parts are configured for the UE, the base station may indicate, to the UE, changing (or switching or transition) of the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

According to an embodiment, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined given in Table 3 below, for example.

[Table 3]

| $\mu$ | NR Slot length (ms) | BWP switch delay $T_{BWP}$ (slots) | |
| --- | --- | --- | --- |
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. Note 2: If the BWP switch involves changing of SCS, the BWP switch delay is determined by the larger one between the SCS before BWP switch and the SCS after BWP switch. | | | |

According to an embodiment, the requirements for the bandwidth part change delay time may support type 1 or type 2, depending on the capability of the UE. The UE may report the supportable bandwidth part change delay time type to the base station.

According to an embodiment, if the UE has received DCI including a bandwidth part change indicator in slot n, according to the above-described requirement regarding the bandwidth part change delay time, the UE may complete a change to the new bandwidth part indicated by the bandwidth part change indicator at a time point not later than slot $n+T_{BWP}$, and may transmit/receive a data channel scheduled by the corresponding DCI in the newly changed bandwidth part. If the base station wants to schedule a data channel by using the new bandwidth part, the base station may determine time domain resource allocation regarding the data channel in consideration of the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time ($T_{BWP}$).

According to an embodiment, if the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

**[SS/PBCH block]**

Next, synchronization signal/physical broadcast channel (SS/PBCH) blocks in 5G will be described.

According to an embodiment, an SS/PBCH block may refer to a physical layer channel block including a primary synchronization signal (PSS), a secondary synchronization signal (SSS), and a PBCH. Details thereof are as follows.

PSS: A signal which becomes a reference signal for downlink time/frequency synchronization, and may provide some partial information of a cell ID.

-   SSS: A reference for downlink time/frequency synchronization, and may provide the remaining cell ID information not provided by the PSS. Additionally, the SSS may serve as a reference signal for PBCH demodulation of a PBCH.
-   PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
-   SS/PBCH block: the SS/PBCH block includes a combination of a PSS, an SSS, and a PBCH. One or multiple SS/PBCH blocks may be transmitted within a time period of 5ms, and each transmitted SS/PBCH block may be distinguished by an index.

According to an embodiment, the UE may detect the PSS and SSS and may decode the PBCH in the initial access step. The UE may acquire an MIB from the PBCH, and this may be used to configure control resource set (CORESET) #0 (which may correspond to a control resource set having a control resource set index of 0). The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

**[PDCCH: regarding DCI]**

Next, downlink control information (DCI) in a 5G system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI.

DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

According to an embodiment, DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information, for example.

[Table 4]

| |
|---|
| - → Identifier for DCI formats - [1] bit |
| - → Frequency domain resource assignment - $[\lceil \log_2(N_{RB}^{UL.BWP}(N_{RB}^{UL.BWP}+1)/2) \rceil]$ bits |
| - → Time domain resource assignment - X bits |
| - → Frequency hopping flag - 1 bit. |
| - → Modulation and coding scheme - 5 bits |
| - → New data indicator - 1 bit |
| - → Redundancy version - 2 bits |
| - → HARQ process number - 4 bits |
| - → TPC command for scheduled PUSCH - [2] bits |
| - → UL/SUL indicator - 0 or 1 bit |

According to an embodiment, DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information, for example.

[Table 5]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
|     • For resource allocation type 0, $\lceil N_{RB}^{UL.BWP}/P \rceil$ bits |
|     • For resource allocation type 1, $\lceil \log_2(N_{RB}^{UL.BWP}(N_{RB}^{UL.BWP}+1)/2) \rceil$ bits |
| - Time domain resource assignment -1, 2, 3, or 4 bits |
| - VRB-to-PRB mapping - 0 or 1 bit, only for resource allocation type 1. |
|     • 0 bit if only resource allocation type 0 is configured; |
|     • 1 bit otherwise. |
| - Frequency hopping flag - 0 or 1 bit, only for resource allocation type 1. |
|     • 0 bit if only resource allocation type 0 is configured; |
|     • 1 bit otherwise. |
| - Modulation and coding scheme - 5 bits |
| - New data indicator - 1 bit |
| - Redundancy version - 2 bits |
| - HARQ process number - 4 bits |
| - 1st downlink assignment index 1 or 2 bits |
|     • 1 bit for semi-static HARQ-ACK codebook; |
|     • 2 bits for dynamic HARQ-ACK codebook with single HARQ-ACK codebook. |
| - 2nd downlink assignment index - 0 or 2 bits |
|     • 2 bits for dynamic HARQ-ACK codebook with two HARQ-ACK sub-codebooks; |
|     • 0 bit otherwise. |
| - TPC command for scheduled PUSCH - 2 bits |
| - SRS resource indicator - $\left\lceil \log_2\left( \sum_{k=1}^{L_{max}} \binom{N_{SRS}}{k} \right) \right\rceil$ or $\lceil \log_2(N_{SRS}) \rceil$ bits |

(continued)

- $\left\lceil \log_2\left(\sum_{k=1}^{L_{max}}\binom{N_{SRS}}{k}\right)\right\rceil$ bits for non-codebook based PUSCH transmission;

- $\lceil \log_2(N_{SRS})\rceil$ bits for codebook based PUSCH transmission.
- Precoding information and number of layers - up to 6 bits
- Antenna ports - up to 5 bits
- SRS request - 2 bits
- CSI request - 0, 1, 2, 3, 4, 5, or 6 bits
- CBG transmission information - 0, 2, 4, 6, or 8 bits
- PTRS-DMRS association - 0 or 2 bits.
- beta_offset indicator - 0 or 2 bits
- DMRS sequence initialization - 0 or 1 bit

According to an embodiment, DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information, for example.

[Table 6]

- Identifier for DCI formats - [1] bit
- Frequency domain resource assignment - $[\lceil \log_2(N_{RB}^{DL.BWP}(N_{RB}^{DL.BWP}+1)/2)\rceil]$ bits

- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- PUCCH resource indicator - 3 bits
- PDSCH-to-HARQ feedback timing indicator - [3] bits

According to an embodiment, DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information, for example.

[Table 7]

- Carrier indicator - 0 or 3 bits
- Identifier for DCI formats - [1] bits
- Bandwidth part indicator - 0, 1 or 2 bits
- Frequency domain resource assignment

    • For resource allocation type 0, $\lceil N_{RB}^{DL.BWP}/P\rceil$ bits

    • For resource allocation type 1, $\lceil \log_2(N_{RB}^{DL.BWP}(N_{RB}^{DL.BWP}+1)/2)\rceil$ bits

- Time domain resource assignment -1, 2, 3, or 4 bits
- VRB-to-PRB mapping - 0 or 1 bit, only for resource allocation type 1.
    • 0 bit if only resource allocation type 0 is configured;
    • 1 bit otherwise.
- PRB bundling size indicator - 0 or 1 bit
- Rate matching indicator - 0, 1, or 2 bits
- ZP CSI-RS trigger - 0, 1, or 2 bits

(continued)

| For transport block 1: |
|---|
| - Modulation and coding scheme - 5 bits |
| - New data indicator - 1 bit |
| - Redundancy version - 2 bits |

| For transport block 2: |
|---|
| - Modulation and coding scheme - 5 bits |
| - New data indicator - 1 bit |
| - Redundancy version - 2 bits |
| - HARQ process number - 4 bits |
| - Downlink assignment index - 0 or 2 or 4 bits |
| - TPC command for scheduled PUCCH - 2 bits |
| - PUCCH resource indicator - 3 bits |
| - PDSCH-to-HARQ_ feedback timing indicator - 3 bits |
| - Antenna ports - 4, 5 or 6 bits |
| - Transmission configuration indication - 0 or 3 bits |
| - SRS request - 2 bits |
| - CBG transmission information - 0, 2, 4, 6, or 8 bits |
| - CBG flushing out information - 0 or 1 bit |
| - DMRS sequence initialization - 1 bit |

[PDCCH: CORESET, REG, CCE, and Search Space]

Hereinafter, a downlink control channel in a 5G communication system will be described in more detail with reference to the accompanying drawings.

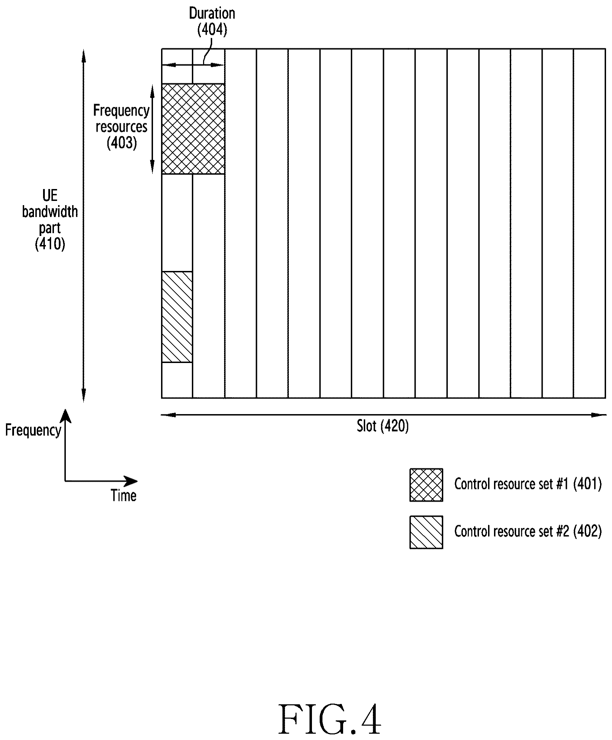

FIG. 4 illustrates an example of a control resource set (CORESET) used to transmit a downlink control channel in a 5G wireless communication system. FIG. 4 illustrates an example in which a UE bandwidth part 410 is configured along the frequency axis, and two control resource sets (control resource set #1 401 and control resource set #2 402) are configured within one slot 420 along the time axis. The control resource sets 401 and 402 may be configured in a specific frequency resource 410 within the entire UE bandwidth part 403 along the frequency axis. The control resource sets 401 and 402 may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

According to an embodiment, a control resource set in the 5G system described above may be configured for a UE by a base station through upper layer signaling (e.g., system information, master information block (MIB), radio resource control (RRC) signaling). The description that a control resource set is configured for a UE may mean that information such as a control resource set identity, the control resource set's frequency location, and the control resource set's symbol duration is provided. For example, the following pieces of information may be included.

[Table 8]

```
ControlResourceSet ::=                SEQUENCE {
  -- Corresponds to L1 parameter 'CORESET-ID'

  controlResourceSetId                ControlResourceSetId,
    frequencyDomainResources            BIT STRING (SIZE (45)),
    duration                          INTEGER (1..maxCoReSetDuration),
    cce-REG-MappingType                   CHOICE {
      interleaved                     SEQUENCE {

      reg-BundleSize                  ENUMERATED {n2, n3, n6},

      precoderGranularity             ENUMERATED {sameAsREG-bundle,
    allContiguousRBs},

      interleaverSize                 ENUMERATED {n2, n3, n6}

      shiftIndex
      INTEGER(0..maxNrofPhysicalResourceBlocks-1)
      OPTIONAL
            },
    nonInterleaved                    NULL
  },
  tci-StatesPDCCH                     SEQUENCE(SIZE (1..maxNrofTCI-
    StatesPDCCH)) OF TCI-StateId          OPTIONAL,
    tci-PresentInDCI                  ENUMERATED {enabled}
                      OPTIONAL,    -- Need S
    }
```

According to an embodiment, in Table 8, tci-StatesPDCCH (simply referred to as transmission configuration indication (TCI) state) configuration information may include information of one or multiple SS/PBCH block indexes or channel state information reference signal (CSI-RS) indexes, which are quasi-co-located (OCLed) with a DMRS transmitted in a corresponding control resource set.

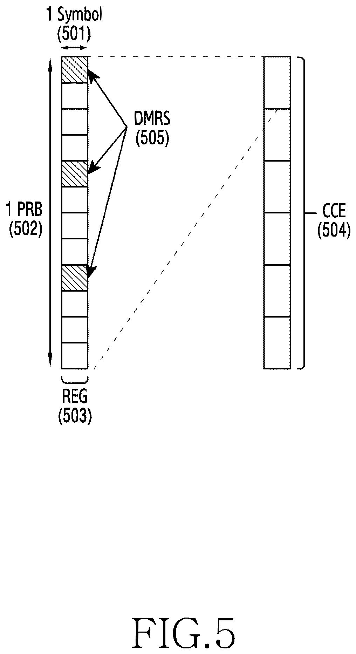

FIG. 5 illustrates a structure of a downlink control channel in a wireless communication system according to an embodiment of the disclosure. FIG. 5 illustrates an example of a basic unit of time and frequency resources constituting a downlink control channel available in 5G.

According to an embodiment, in FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

According to an embodiment, in 5G, a parameter for a search space regarding a PDCCH may be configured for the UE by the base station through upper layer signaling (for example, SIB, MIB, RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the following pieces of information may be included.

[Table 9]

```
SearchSpace ::=                    SEQUENCE {
   -- Identity of the search space. SearchSpaceId = 0 identifies the
     SearchSpace configured via PBCH (MIB) or ServingCellConfigCommon.
   searchSpaceId                    SearchSpaceId,
   controlResourceSetId             ControlResourceSetId,
   monitoringSlotPeriodicityAndOffset    CHOICE {
     sl1                            NULL,
     sl2                            INTEGER (0..1),
     sl4                            INTEGER (0..3),
     sl5                        INTEGER (0..4),
     sl8                            INTEGER (0..7),
     sl10                           INTEGER (0..9),
     sl16                           INTEGER (0..15),
     sl20                           INTEGER (0..19)
   }
                 OPTIONAL,
   duration              INTEGER (2..2559)
   monitoringSymbolsWithinSlot            BIT STRING (SIZE (14))
                         OPTIONAL,
   nrofCandidates                   SEQUENCE {
     aggregationLevel1              ENUMERATED {n0, n1, n2, n3, n4, n5, n6,
     n8},
     aggregationLevel2    |         ENUMERATED {n0, n1, n2, n3, n4, n5, n6,
     n8},
     aggregationLevel4              ENUMERATED {n0, n1, n2, n3, n4, n5, n6,
     n8},
     aggregationLevel8              ENUMERATED {n0, n1, n2, n3, n4, n5, n6,
     n8},
     aggregationLevel16                 ENUMERATED {n0, n1, n2, n3, n4, n5,
     n6, n8}
   },

   searchSpaceType                  CHOICE {
     -- Configures this search space as common search space (CSS) and DCI
     formats to monitor.
     common                         SEQUENCE {
       }
     ue-Specific                    SEQUENCE {
       -- Indicates whether the UE monitors in this USS for DCI formats 0-0 and
       1-0 or for formats 0-1 and 1-1.
       formats                      ENUMERATED {formats0-0-And-1-0,
       formats0-1-And-1-1},
       ...
     }
```

According to an embodiment, based on configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to an embodiment, one or multiple search space sets may exist in a common search space or a UE-specific search space according to configuration information. For example, search space set #1 and search space set #2 may be configured as a common search space, and search space set #3 and search space set #4 may be configured as a UE-specific search space.

According to an embodiment, combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

According to an embodiment, combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

According to an embodiment, enumerated RNTIs may follow the definition and usage given below.

- Cell RNTI (C-RNTI): used to schedule a UE-specific PDSCH
- Temporary cell RNTI (TC-RNTI): used to schedule a UE-specific PDSCH
- Configured scheduling RNTI (CS-RNTI): used to schedule a semi-statically configured UE-specific PDSCH
- Random access RNTI(RA-RNTI): used to schedule a PDSCH in a random access step
- Paging RNTI (P-RNTI): used to schedule a PDSCH in which paging is transmitted
- System information RNTI (SI-RNTI): used to schedule a PDSCH in which system information is transmitted
- Interruption RNTI(INT-RNTI): used to indicate whether a PDSCH is punctured
- Transmit power control for PUSCH RNTI (TPC-PUSCH-RNTI): used to indicate a power control command regarding a PUSCH
- Transmit power control for PUCCH RNTI (TPC-PUCCH-RNTI): used to indicate a power control command regarding a PUCCH
- Transmit power control for SRS RNTI (TPC-SRS-RNTI): used to indicate a power control command regarding an SRS

According to an embodiment, the DCI formats enumerated above may follow the definitions given below.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

According to an embodiment, in a 5G system, the search space at aggregation level L in connection with control resource set p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- L: aggregation level
- $n_{CI}$: carrier index
- $N_{CCE,p}$: total number of CCEs existing in control resource set $p$
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} -1$ : PDCCH candidate index at aggregation level L
- $i = 0, \ldots, L -1$
- $Y_{p,n_{s,f}^{\mu}} = \left(A_p \cdot Y_{p,n_{s,f}^{\mu}-1}\right) mod\ D$ , $Y_{p,-1} = n_{RNTI} \neq 0$, $A_p = 39827$ for $p\,mod\,3 = 0$ , $A_p = 39829$ for $p\,mod\,3 = 1$, $A_p = 39839$ for $p\,mod\,3 = 2$, $D = 65537$
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

According to an embodiment, in a 5G system, multiple search space sets may be configured by different parameters (for example, parameters in Table 10), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

**[PDCCH: span]**

According to an embodiment, the UE may perform UE capability reporting at each subcarrier spacing with regard to a case in which the same has multiple PDCCH monitoring occasions inside a slot, and the concept "span" may be used in this regard. A span refers to consecutive symbols configured such that the UE can monitor the PDCCH inside the slot, and each PDCCH monitoring occasion is inside one span. A span may be described by (X,Y) wherein X refers to the minimum number of symbols by which the first symbols of two consecutive spans are spaced apart from each other, and Y refers to the number of consecutive symbols configured such that the PDCCH can be monitored inside one span. Here, a UE may monitor a PDCCH in a range of Y symbols from the first symbol of the span within the span.

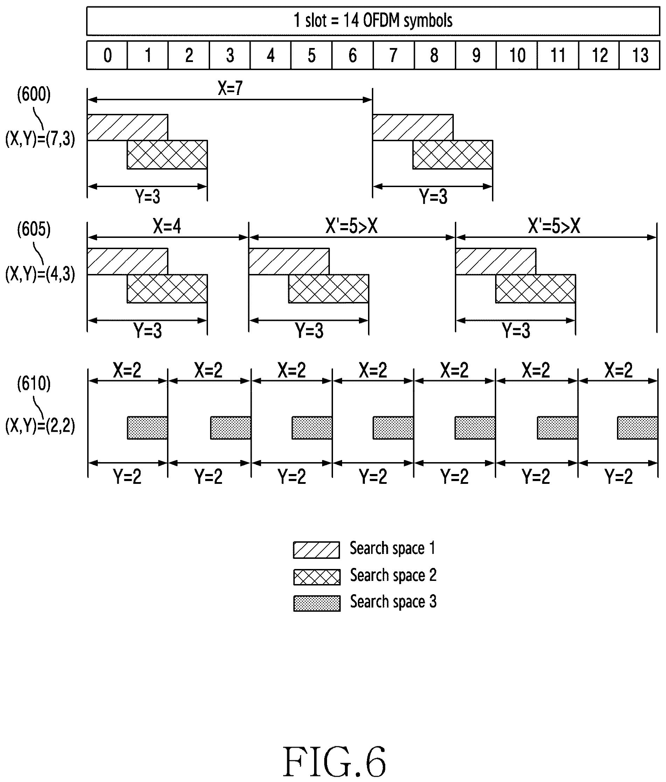

FIG. 6 illustrates, in terms of spans, a case in which a UE may have multiple PDCCH monitoring occasions within a slot in a wireless communication system.

According to an embodiment, possible spans are (X,Y) = (7,3), (4,3), (2,2), and the three cases may be indicated by "600", "605", and "610" in FIG. 6, respectively. According to an embodiment, (600) may describe a case in which there are two spans described by (7,4) inside a slot. The spacing between the first symbols of two spans is described as X=7, a PDCCH monitoring occasion may exist inside a total of Y=3 symbols from the first symbol of each span, and search spaces 1 and 2 may exist inside Y=3 symbols, respectively. As another example, "605" may describe a case in which there are a total of three spans described by (4,3) inside a slot, and the second and third spans are spaced apart by X'=5 symbols which are larger than X=4.

**[PDCCH: UE capability report]**

According to an embodiment, the slot location at which the above-described common search space and the UE-specific search space are positioned is indicated by parameter "monitoringSymbolsWitninSlot" in Table 9, and the symbol location inside the slot is indicated as a bitmap through parameter "monitoringSymbolsWithinSlot" in Table 9. Meanwhile, the symbol location inside a slot at which the UE can monitor search spaces may be reported to the base station through the following UE capabilities.

[0085]   - UE capability 1 (hereinafter referred to as FG 3-1). This UE capability may have the following meaning: if there is one monitoring occasion (MO) regarding type 1and type 3 common search spaces or UE-specific search spaces inside a slot, as in Table 11 below, the UE can monitor the corresponding MO when the corresponding MO is located inside the first three symbols inside the slot. This UE capability is a mandatory capability which is to be supported by all UEs that support NR, and whether or not this UE capability is supported is not explicitly reported to the base station.

[Table 11]

| Index | Feature group | Components | Field name in TS 38.331 [2] |
|---|---|---|---|
| 3-1 | Basic DL control channel | 1) One configured CORESET per BWP per cell in addition to CORESET0<br>- CORESET resource allocation of 6RB bit-map and duration of 1 - 3 OFDM symbols for FR1<br>- For type 1 CSS without dedicated RRC configuration and for type 0, 0A, and 2 CSSs, CORESET resource allocation of 6RB bit-map and duration 1-3 OFDM symbols for FR2<br>- For type 1 CSS with dedicated RRC configuration and for type 3 CSS, UE specific SS, CORESET resource allocation of 6RB bit-map and duration 1-2 OFDM symbols for FR2<br>- REG-bundle sizes of 2/3 RBs or 6 RBs<br>- Interleaved and non-interleaved CCE-to-REG mapping<br>- Precoder-granularity of REG-bundle size<br>- PDCCH DMRS scrambling determination<br>- TCI state(s) for a CORESET configuration<br>2) CSS and UE-SS configurations for unicast PDCCH transmission per BWP per cell<br>- PDCCH aggregation levels 1, 2, 4, 8, 16<br>- UP to 3 search space sets in a slot for a scheduled SCell per BWP<br>This search space limit is before applying all dropping rules.<br>- For type 1 CSS with dedicated RRC configuration, type 3 CSS, and UE-SS, the monitoring occasion is within the first 3 OFDM symbols of a slot<br>- For type 1 CSS without dedicated RRC configuration and for type 0, 0A, and 2 CSS, the monitoring occasion can be any OFDM symbol(s) of a slot, with the monitoring occasions for any of Type 1- CSS without dedicated RRC configuration, or Types 0, 0A, or 2 CSS configurations within a single span of three consecutive OFDM symbols within a slot<br>3) Monitoring DCI formats 0_0, 1_0, 0_1, 1_1<br>4) Number of PDCCH blind decodes per slot with a given SCS follows Case 1-1 table<br>5) Processing one unicast DCI scheduling DL and one unicast DCI scheduling UL per slot per scheduled CC for FDD<br>6) Processing one unicast DCI scheduling DL and 2 unicast DCI scheduling UL per slot per scheduled CC for TDD | n/a |

- UE capability 2 (hereinafter referred to as FG 3-2). This UE capability has the following meaning: if there is one monitoring occasion (MO) regarding a common search space or a UE-specific search space inside a slot, as in Table 12 below, the UE can monitor the corresponding MO no matter what of the startsymbol location of the corresponding MO may be. This UE capability is optionally supported by the UE, and whether or not this UE capability is supported is explicitly reported to the base station.

[Table 12]

| Index | Feature group | Components | Field name in TS 38.331 [2] |
|---|---|---|---|
| 3-2 | PDCCH monitoring on any span of up to 3 consecutive OFDM symbols of a slot | For a given UE, all search space configurations are within the same span of 3 consecutive OFDM symbols in the slot | *pdcchMonitoringSingleOccasion* |

- UE capability 3 (hereinafter, referred to as FG 3-5, 3-5a, or 3-5b). This UE capability has the following meaning: if there are multiple monitoring occasions (MO) regarding a common search space or a UE-specific search space inside a slot, as in Table 13 below, the pattern of the MO which the UE can monitor is indicated. The above-mentioned pattern includes the spacing X between start symbols of different MOs, and the maximum symbol length Y regarding one MO. The combination of (X,Y) supported by the UE may be one or multiple among {(2,2), (4,3), (7,3)}. This UE capability is optionally supported by the UE, and whether or not this UE capability is supported and the above-mentioned combination of (X,Y) are explicitly reported to the base station.

[Table 13]

| Index | Feature group | Components | Field name in TS 38.331 [2] |
|---|---|---|---|
| 3-5 | For type 1 CSS with dedicated RRC configuration, type 3 CSS, and UE-SS, monitoring occasion can be any OFDM symbol(s) of a slot for Case 2 | For type 1 CSS with dedicated RRC configuration, type 3 CSS, and UE-SS, monitoring occasion can be any OFDM symbol(s) of a slot for Case 2 | *pdcch-MonitoringAnyOccasions* { 3-5. *withoutDCI-Gap* 3-5a. *withDCI-Gap* } |
| 3-5a | For type 1 CSS with dedicated RRC configuration, type 3 CSS, and UE-SS, monitoring occasion can be any OFDM symbol(s) of a slot for Case 2 with a DCI gap | For type 1 CSS with dedicated RRC configuration, type 3 CSS and UE-SS, monitoring occasion can be any OFDM symbol(s) of a slot for Case 2, with minimum time separation (including the cross-slot boundary case) between two DL unicast DCIs, between two UL unicast DCIs, or between a DL and an UL unicast DCI in different monitoring occasions where at least one of them is not the monitoring occasions of FG-3-1, for a same UE as<br>- 2OFDM symbols for 15kHz<br><br>- 4OFDM symbols for 30kHz<br>- 7OFDM symbols for 60kHz with NCP<br>- 11OFDM symbols for 120kHz<br>Up to one unicast DL DCI and up to one unicast UL DCI in a monitoring occasion except for the monitoring occasions of FG 3-1.<br>In addition for TDD the minimum separation between the first two UL unicast DCIs within the first 3 OFDM symbols of a slot can be zero OFDM symbols. | |

| 3-5b | All PDCCH monitoring occasion can be any OFDM symbol(s) of a slot for Case 2 with a span gap | PDCCH monitoring occasions of FG-3-1, plus additional PDCCH monitoring occasion(s) can be any OFDM symbol(s) of a slot for Case 2, and for any two PDCCH monitoring occasions belonging to different spans, where at least one of them is not the monitoring occasions of FG-3-1, in same or different search spaces, there is a minimum time separation of X OFDM symbols (including the cross-slot boundary case) between the start of two spans, where each span is of length up to Y consecutive OFDM symbols of a slot. Spans do not overlap. Every span is contained in a single slot. The same span pattern repeats in every slot. The separation between consecutive spans within and across slots may be unequal but the same (X, Y) limit must be satisfied by all spans. Every monitoring occasion is fully contained in one span. In order to determine a suitable span pattern, first a bitmap $b(I)$, $0<=I<=13$ is generated, where $b(I)=1$ if symbol I of any slot is part of a monitoring occasion, $b(I)=0$ otherwise. The first span in the span pattern begins at the smallest I for which $b(I)=1$. The next span in the span pattern begins at the smallest I not included in the previous span(s) for which $b(I)=1$. The span duration is max{maximum value of all CORESET durations, minimum value of Y in the UE reported candidate value} except possibly the last span in a slot which can be of shorter duration. A particular PDCCH monitoring configuration meets the UE capability limitation if the span arrangement satisfies the gap separation for at least one (X, Y) in the UE reported candidate value set in every slot, including cross slot boundary.<br><br>For the set of monitoring occasions which are within the same span:<br>• Processing one unicast DCI scheduling DL and one unicast DCI scheduling UL per scheduled CC across this set of monitoring occasions for FDD<br>• Processing one unicast DCI scheduling DL and two unicast DCI scheduling UL per scheduled CC across this set of monitoring occasions for TDD<br>• Processing two unicast DCI scheduling DL and one unicast DCI scheduling UL per scheduled CC across this set of monitoring occasions for TDD The number of different start symbol indices of spans for all PDCCH monitoring occasions per slot, including PDCCH monitoring occasions of FG-3-1, is no more than floor(14/X) (X is minimum among values reported by UE).<br><br>The number of different start symbol indices of PDCCH monitoring occasions per slot including PDCCH monitoring occasions of FG-3-1, is no more than 7.<br><br>The number of different start symbol indices of PDCCH monitoring occasions per half-slot including PDCCH monitoring occasions of FG-3-1 is no more than 4 in SCell. | |

The UE may report whether the above-described UE capability 2 and/or UE capability 3 are supported and relevant parameters to the base station. The base station may allocate time-domain resources to the common search space and the UE-specific search space, based on the UE capability report. During the resource allocation, the base station may ensure that the MO is not positioned not at a location at which the UE cannot monitor the same.

**[QCL, TCI state]**

According to an embodiment, in a wireless communication system, one or more different antenna ports (which may be replaced with one or more channels, signals, and combinations thereof, but in the following description of the disclosure, will be referred to as different antenna ports, as a whole, for the sake of convenience) may be associated with each other by a quasi-co-location (QCL) configuration as in Table 14 below.

According to an embodiment, a TCI state is for announcing the QCL relation between a PDCCH (or a PDCCH DRMS) and another RS or channel, and the description that a reference antenna port A (reference RS #A) and another target antenna port B (target RS #B) are QCLed with each other means that the UE is allowed to apply some or all of large-scale channel parameters estimated in the antenna port A to channel measurement form the antenna port B.

According to an embodiment, the QCL needs to be associated with different parameters according to the situation such as 1) time tracking influenced by average delay and delay spread, 2) frequency tracking influenced by Doppler shift and Doppler spread, 3) radio resource management (RRM)influenced by average gain, or 4) beam management (BM) influenced by a spatial parameter. Accordingly, four types of QCL relations are supported in NR as in Table 14 below.

[Table 14]

| QCL type | Large-scale characteristics |
|:---:|:---:|
| A | Doppler shift, Doppler spread, average delay, delay spread |
| B | Doppler shift, Doppler spread |
| C | Doppler shift, average delay |
| D | Spatial Rx parameter |

According to an embodiment, the spatial RX parameter may refer to some or all of various parameters as a whole, such as angle of arrival (AoA), power angular spectrum (PAS) of AoA, angle of departure (AoD), PAS of AoD, transmit/receive channel correlation, transmit/receive beamforming, and spatial channel correlation.

According to an embodiment, the QCL relations may be configured for the UE through RRC parameter TCI-state and QCL-info as in Table 15 below. Referring to Table 15, the base station may configure one or more TCI states for the UE, thereby informing of a maximum of two kinds of QCL relations (qcl-Type1, qcl-Type2) regarding the RS that refers to the ID of the TCI state, that is, the target RS. Each piece of QCL information (QCL-Info) included in each TCI state includes the serving cell index and the BWP index of the reference RS indicated by the corresponding QCL information, the type and ID of the reference RS, and a QCL type as in Table 14 above.

[Table 15]

```
TCI-State ::=              SEQUENCE {
    tci-StateId                TCI-StateId,
    qcl-Type1              QCL-Info,
    qcl-Type2              QCL-Info              OPTIONAL, -- Need R
    ...
}

QCL-Info ::=              SEQUENCE {
    cell                       ServCellIndex              OPTIONAL, -- Need R
    bwp-Id                 BWP-Id                     OPTIONAL, -- Cond CSI-RS-
Indicated
    referenceSignal            CHOICE {
        csi-rs                 NZP-CSI-RS-ResourceId,
        ssb                    SSB-Index
        },
    qcl-Type                 ENUMERATED {typeA, typeB, typeC, typeD},
    ...
}
```

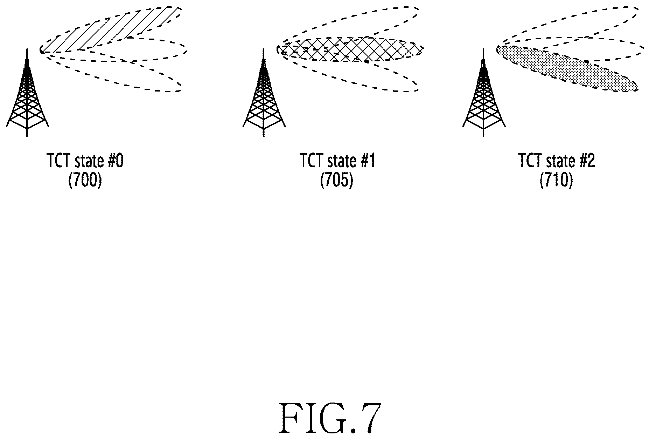

FIG. 7 illustrates an example of base station beam allocation according to TCI state configurations in a wireless communication system according to an embodiment of the disclosure. Referring to FIG. 7, an example of base station beam allocation according to TCI state configurations is illustrated.

According to an embodiment, referring to FIG. 7, the base station may transfer information regarding N different beams to the UE through N different TCI states. For example, in the case of N=3 as in FIG. 7, the base station may configure qcl-Type2 parameters included in three TCI states 700, 705, and 710 in QCL type D while being associated with CSI-RSs or SSBs corresponding to different beams, thereby notifying that antenna ports referring to the different TCI states 700, 705, and 710 are associated with different spatial Rx parameters, that is, different beams.

According to an embodiment, Tables 16 to 20 below enumerate valid TCI state configurations according to the target antenna port type.

According to an embodiment, Table 16 enumerates valid TCI state configurations when the target antenna port is a CSI-RS for tracking (TRS). The TRS may refer to an NZP CSI-RS which has no repetition parameter configured therefor, and trs-Info of which is configured as "true", among CRI-RSs. In Table 16, configuration no. 3 may be used for an aperiodic TRS.

[Table 16]

| Valid TCI state configurations when the target antenna port is a CSI-RS for tracking (TRS) | | | | |
|---|---|---|---|---|
| **Valid TCI state Configuration** | **DL RS 1** | **qcl-Typel** | **DL RS 2 (if configured)** | **qcl-Type2 (if configured)** |
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

According to an embodiment, Table 17 enumerates valid TCI state configurations when the target antenna port is a CSI-RS for CSI. The CSI-RS for CSI may refer to an NZP CSI-RS which has no parameter indicating repetition (for example, repetition parameter) configured therefor, and trs-Info of which is not configured as "true", among CRI-RSs.

[Table 17]

| Valid TCI state configurations when the target antenna port is a CSI-RS for CSI | | | | |
|---|---|---|---|---|
| **Valid TCI state Configuration** | **DL RS 1** | **qcl-Type1** | **DL RS 2 (if configured)** | **qcl-Type2 (if configured)** |
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

According to an embodiment, Table 18 enumerates valid TCI state configurations when the target antenna port is a CSI-RS for beam management (BM) (which has the same meaning as CSI-RS for L1 RSRP reporting). The CSI-RS for BM refers to an NZP CSI-RS which has are petition parameter configured to have a value of "on" or "off", and trs-Info of which is not configured as "true", among CRI-RSs.

[Table 18]

| Valid TCI state configurations when the target antenna port is a CSI-RS for BM (for L1 RSRP reporting) | | | | |
|---|---|---|---|---|
| **Valid TCI state Configuration** | **DL RS 1** | **qcl-Type1** | **DL RS 2 (if configured)** | **qcl-Type2 (if configured)** |
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

According to an embodiment, Table 19 enumerates valid TCI state configurations when the target antenna port is a PDCCH DMRS.

[Table 19]

| Valid TCI state configurations when the target antenna port is a PDCCH DMRS | | | | |
| --- | --- | --- | --- | --- |
| Valid TCI state Configuration | DL RS 1 | qcl-Typel | DL RS 2 (if configured) | qcl-Type2 (if configured) |
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

According to an embodiment, Table 20 enumerates valid TCI state configurations when the target antenna port is a PDSCH DMRS.

[Table 20]

| Valid TCI state configurations when the target antenna port is a PDSCH DMRS | | | | |
| --- | --- | --- | --- | --- |
| Valid TCI state Configuration | DL RS 1 | qcl-Typel | DL RS 2 (if configured) | qcl-Type2 (if configured) |
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

According to an embodiment, in a typical QCL configuration method based on Tables 16 to 20 above, the target antenna port and reference antenna port for each step are configured and operated such as "SSB" -> "TRS" -> "CSI-RS for CSI, or CSI-RS for BM, or PDCCH DMRS, or PDSCH DMRS". Accordingly, it is possible to help the UE's receiving operation by associating statistical characteristics that can be measured from the SSB and TRS with respective antenna ports.

**[PDCCH: regarding TCI state]**

Specific TCI state combinations applicable to a PDCCH DMRS antenna port may be given in Table 21 below. The fourth row in Table 21 corresponds to a combination assumed by the UE before RRC configuration, and no configuration is possible after the RRC.

[Table 21]

| Valid TCI state Configuration | DL RS 1 | qcl-Type1 | DL RS 2 (if configured) | qcl-Type2 (if configured) |
| --- | --- | --- | --- | --- |
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

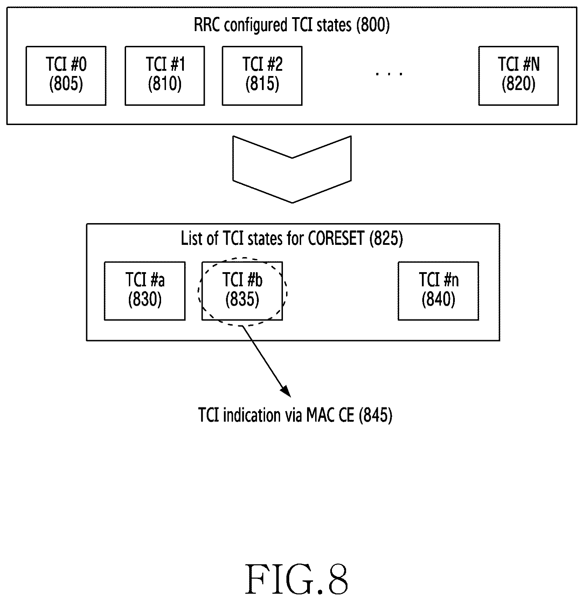

FIG. 8 illustrates an example of a method for allocating a TCI state to a PDCCH in a wireless communication system according to an embodiment of the disclosure.

According to an embodiment, in NR, a hierarchical signaling method as illustrated in FIG. 8 may be supported for dynamic allocation regarding a PDCCH beam. Referring to FIG. 8, the base station may configure N TCI states 805, 810, ..., 820 for the UE through RRC signaling 800, and may configure some thereof as TCI states for a CORESET (825). The base station may then indicate one of the TCI states 830, 835, and 840 for the CORESET to the UE through MAC CE signaling (845). The UE may then receive a PDCCH, based on beam information included in the TCI state indicated by the MAC CE signaling.

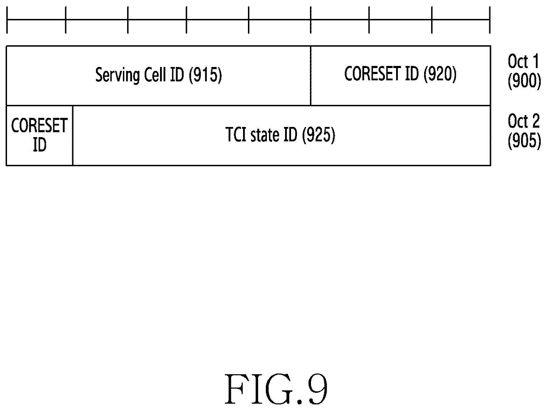

FIG. 9 illustrates a TCI indication MAC CE signaling structure for a PDCCH DMRS in a wireless communication system according to an embodiment of the disclosure.

According to an embodiment, FIG. 9 illustrates a TCI indication MAC CE signaling structure for a PDCCH DMRS.

Referring to FIG. 9, the TCI indication MAC CE signaling for the PDCCH DMRS may be configured by 2 bytes (16bits) 700 and 705, and include a 5-bit serving cell ID 915, a 4-bit CORESET ID 920, and a 7-bit TCI state ID 925.

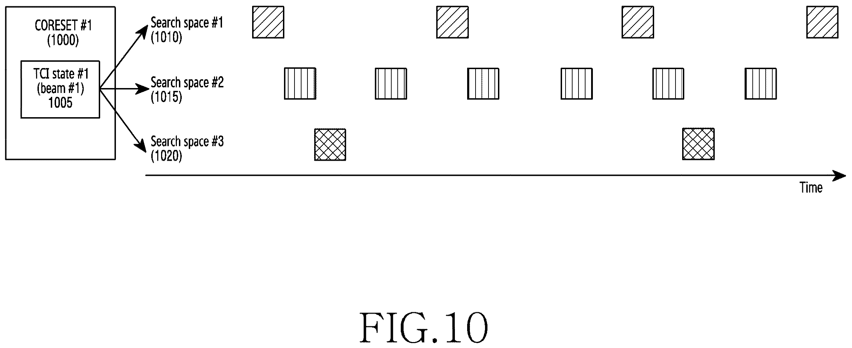

FIG. 10 illustrates an example of a beam configuration with regard to a control resource set and a search space in a wireless communication system according to an embodiment of the disclosure.

According to an embodiment, referring to FIG. 10, the base station may indicate one of TCI state lists included in CORESET 1000 configuration through MAC CE signaling (1005). Until a different TCI state is indicated for the corresponding CORESET through different MAC CE signaling, the UE may consider that identical QCL information (beam #1) 1005 is all applied to one or more search spaces 1010, 1015, and 1020 connected to the CORESET. The above-described PDCCH beam allocation method may have a problem in that it is difficult to indicate a beam change faster than MAC CE signaling delay, and the same beam is unilaterally applied to each CORESET regardless of search space characteristics, thereby making flexible PDCCH beam operation difficult.

According to an embodiment, the following embodiments of the disclosure may provide more flexible PDCCH beam configuration and operation methods. Although multiple distinctive examples will be provided for convenience of description of embodiments of the disclosure, they are not mutually exclusive, and can be combined and applied appropriately for each situation.

The base station may configure one or multiple TCI states for the UE with regard to a specific control resource set, and may activate one of the configured TCI states through a MAC CE activation command. For example, if {TCI state#0, TCI state#1, TCI state#2} are configured as TCI states for control resource set #1, the base station may transmit an activation command to the UE through a MAC CE such that TCI state#0 is assumed as the TCI state regarding control resource set #1. Based on the activation command regarding the TCI state received through the MAC CE, the UE may correctly receive the DMRS of the corresponding CORESET, based on QCL information in the activated TCI state.

With regard to a control resource set having a configured index of 0 (control resource set #0), if the UE has failed to receive a MAC CE activation command regarding the TCI state of control resource set #0, the UE may assume that the DMRS transmitted in control resource set #0has been QCL-ed with a SS/PBCH block (SSB) identified in the initial access process or in a non-contention-based random access process not triggered by a PDCCH command.

With regard to a control resource set having a configured index value other than 0 (CORESET #X), if the UE has no TCI state configured regarding CORESET #X, or if the UE has one or more TCI states configured therefor but has failed to receive a MAC CE activation command for activating one thereof, the UE may assume that the DMRS transmitted in CORESET #X has been QCL-ed with a SS/PBCH block identified in the initial access process.

**[Regarding rate matching/puncturing]**

According to various embodiments of the disclosure a rate matching operation and a puncturing operation will be described in detail.

According to an embodiment, if time and frequency resource A to transmit symbol sequence A overlaps time and frequency resource B, a rate matching or puncturing operation may be considered as an operation of transmitting/receiving channel A in consideration of resource C (region in which resource A and resource B overlap). Specific operations may follow the following description.

**Rate matching operation**

According to an embodiment, the base station may transmit channel A after mapping the same only to remaining resource domains other than resource C (area overlapping resource B) among the entire resource A which is to be used to transmit symbol sequence A to the UE. For example, if symbol sequence A is configured as {symbol#1, symbol#2, symbol#3, symbol#4}, if resource A is {resource#1, resource#2, resource#3, resource#4}, and if resource B is {resource#3, resource#5}, the base station may transmit channel A after successively mapping the same to remaining resources {resource#1, resource#2, resource#4} other than {resource#3} corresponding to resource C. Consequently, the base station may transmit symbol sequence {symbol#1, symbol#2, symbol#3} after mapping the same to {resource#1, resource#2, resource#4}, respectively.

According to an embodiment, the UE may assess resource A and resource B from scheduling information regarding symbol sequence A from the base station, thereby assessing resource C (region in which resource A and resource B overlap). The UE may receive symbol sequence A, based on an assumption that symbol sequence A has been mapped and transmitted in the remaining area other than resource C among the entire resource A. For example, if symbol sequence A is configured as {symbol#1, symbol#2, symbol#3, symbol#4}, if resource A is {resource#1, resource#2, resource#3, resource#4}, and if resource B is {resource#3, resource#5}, the UE may receive symbol sequence A based on an assumption that the same has been successively mapped to remaining resources {resource#1, resource#2, resource#4} other than {resource#3} (corresponding to resource C) among resource A. Consequently, the UE may perform a series of following receiving operations based on an assumption that symbol sequence {symbol#1, symbol#2, symbol#3} has been transmitted after being mapped to {resource#1, resource#2, resource#4}, respectively.

**Puncturing operation**

If there is resource C(region overlapping resource B) among the entire resource A which is to be used to transmit symbol sequence A to the UE, the base station may map symbol sequence A to the entire resource A, but may not perform transmission in the resource area corresponding to resource C, and may perform transmission with regard to only the remaining resource area other than resource C among resource A. For example, if symbol sequence A is configured as {symbol#1, symbol#2, symbol#3, symbol#4}, if resource A is {resource#1, resource#2, resource#3, resource#4}, and if resource B is {resource#3, resource#5}, the base station may map symbol sequence A {symbol#1, symbol#2, symbol#3, symbol#4} to resource A {resource#1, resource#2, resource#3, resource#4}, respectively, may transmit only symbol sequence {symbol#1, symbol#2, symbol#4} corresponding to remaining resources {resource#1, resource#2, resource#4} other than {resource#3} corresponding to resource C among resource A, and may not transmit {symbol#3} mapped to {resource#3} corresponding to resource C. Consequently, the base station may transmit symbol sequence {symbol#1, symbol#2, symbol#4} after mapping the same to {resource#1, resource#2, resource#4}, respectively.

According to an embodiment, the UE may assess resource A and resource B from scheduling information regarding symbol sequence A from the base station, thereby assessing resource C (region in which resource A and resource B overlap). The UE may receive symbol sequence A, based on an assumption that symbol sequence A has been mapped to the entire resource A but transmitted only in the remaining area other than resource C among the resource area A. For example, if symbol sequence A is configured as {symbol#1, symbol#2, symbol#3, symbol#4}, if resource A is {resource#1, resource#2, resource#3, resource#4}, and if resource B is {resource#3, resource#5}, the UE may assume that symbol sequence A {symbol#1, symbol#2, symbol#3, symbol#4} is mapped to resource A {resource#1, resource#2, resource#3, resource#4}, respectively, but {symbol#3} mapped to {resource#3} (corresponding to resource C) is not transmitted, and based on the assumption that symbol sequence {symbol#1, symbol#2, symbol#4} corresponding to remaining resources {resource#1, resource#2, resource#4} other than {resource#3} (corresponding to resource C) among resource A has been mapped and transmitted, the UE may receive the same. Consequently, the UE may perform a series of following receiving operations based on an assumption that symbol sequence {symbol#1, symbol#2, symbol#4} has been transmitted after being mapped to {resource#1, resource#2, resource#4}, respectively.

According to an embodiment, a method for configuring a rate matching resource for the purpose of rate matching in a 5G communication system will be described. Below. Rate matching may refer to adjusting the size of a signal in consideration of the amount of resources that can be used to transmit the signal. For example, data channel rate matching may mean that a data channel is not mapped and transmitted with regard to specific time and frequency resource domains, and the size of data is adjusted accordingly.

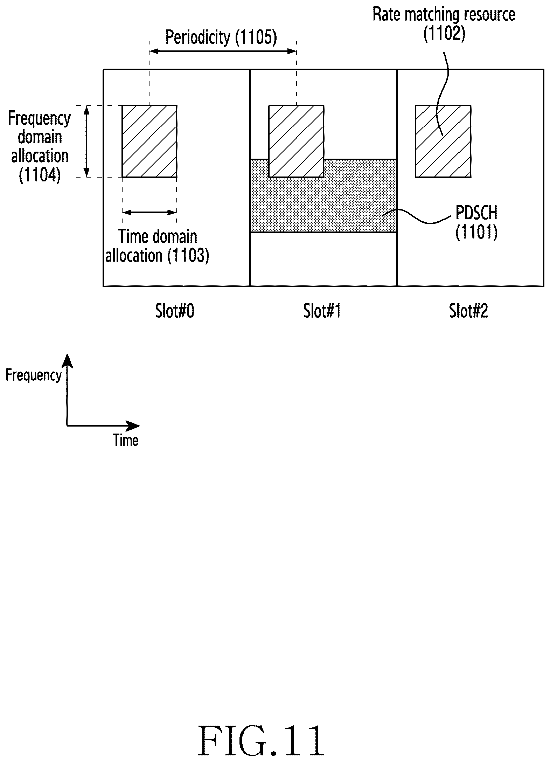

FIG. 11 illustrates a method in which a base station and a UE transmit/receive data in consideration of a downlink data channel and a rate matching resource in a wireless communication system according to an embodiment of the disclosure.

FIG. 11 illustrates a downlink data channel (PDSCH) 1101 and a rate matching resource 1102. According to an embodiment, the base station may configure one or multiple rate matching resources 1102 for the UE through upper layer signaling (for example, RRC signaling).

According to an embodiment, rate matching resource 1102 configuration information may include time-domain resource allocation information 1103, frequency-domain resource allocation information 1104, and periodicity information 1105. A bitmap corresponding to the frequency-domain resource allocation information 1104 will hereinafter be referred to as "first bitmap", a bitmap corresponding to the time-domain resource allocation information 1103 will be referred to as "second bitmap", and a bitmap corresponding to the periodicity information 1105 will be referred to as "third bitmap".

According to an embodiment, if all or some of time and frequency resources of the scheduled data channel 1101 overlap a configured rate matching resource 1102, the base station may rate-match and transmit the data channel 1101 in a rate matching resource 1102 part, and the UE may perform reception and decoding after assuming that the data channel 1101 has been rate-matched in a rate matching resource 1102 part.

According to an embodiment, the base station may dynamically notify the UE, through DCI, of whether the PDSCH will be rate-matched in the configured rate matching resource part through an additional configuration (for example, corresponding to "rate matching indicator" inside DCI format described above). Specifically, the base station may select some from the configured rate matching resources and group them into a rate matching resource group, and may indicate, to the UE, whether the PDSCH is rate-matched with regard to each rate matching resource group through DCI by using a bitmap type. For example, if four rate matching resources RMR#1, RMR#2, RMR#3, and RMR#4 are configured, the base station may configure a rate matching groups RMG#1={RMR#1, RMR#2}, RMG#2={RMR#3, RMR#4}, and may indicate, to the UE, whether rate matching occurs in RMG#1 and RMG#2, respectively, through a bitmap by using two bits inside the DCI field. For example, in a case where rate matching is to be conducted, the base station may indicate this case by "1", and in a case where rate matching is not to be conducted, the base station may indicate this case by "0".

According to an embodiment, 5G supports granularity of "RB symbol level" and "RE level" as a method for configuring the above-described rate matching resources for a UE. More specifically, the following configuration method may be followed.

**RB symbol level**

According to an embodiment, the UE may have a maximum of four RateMatchPatterns configured per each bandwidth part through upper layer signaling, and one RateMatchPattern may include the following contents.

According to an embodiment, one RateMatchPatten may include, as a reserved resource inside a bandwidth part, a resource having time and frequency resource domains of the corresponding reserved resource configured as a combination of an RB-level bitmap and a symbol-level bitmap in the frequency domain. The reserved resource may span one or two slots. A time domain pattern (periodicityAndPattern) may be additionally configured wherein time and frequency domains including respective RB-level and symbol-level bitmap pairs are repeated.

According to an embodiment, one RateMatchPatten may include a resource area corresponding to a time domain pattern configured by time and frequency domain resource areas configured by a control resource set inside a bandwidth part and a search space configuration in which corresponding resource areas are repeated.

**RE level**

According to an embodiment, the UE may have the following contents configured through upper layer signaling.

According to an embodiment, the contents may include configuration information (lte-CRS-ToMatchAround) regarding a RE corresponding to a LTE CRS (Cell-specific Reference Signal or common reference signal) pattern, which may include LTE CRS's port number (nrofCRS-Ports) and LTE-CRS-vshift(s) value (v-shift), location information (carrierFreqDL) of a center subcarrier of a LTE carrier from a reference frequency point (for example, reference point A), the LTE carrier's bandwidth size (carrierBandwidthDL) information, subframe configuration information (mbsfn-SubframConfigList) corresponding to a multicast-broadcast single-frequency network (MBSFN), and the like. The UE may determine the position of the CRS inside the NR slot corresponding to the LTE subframe, based on the above-mentioned pieces of information.

According to an embodiment, the contents may include configuration information regarding a resource set corresponding to one or multiple zero power (ZP) CSI-RSs inside a bandwidth part.

**[Regarding LTE CRS rate match]**

Next, according to various embodiments of the disclosure, a rate matching procedure for the above-described LTE CRS will be described in detail. According to an embodiment, in NR, for coexistence between long term evolution (LTE) and new RAT (NR) (LTE-NR coexistence), the pattern of cell-specific reference signal (CRS) of LTE may be configured for an NR UE. More specifically, the CRS pattern may be provided by RRC signaling including at least one parameter inside ServingCellConfig IE (information element) or ServingCellConfigCommon IE. Examples of the parameter may include lte-CRS-ToMatchAround, lte-CRS-PatternList1-r16, lte-CRS-PatternList2-r16,crs-RateMatch-Per-CORESETPoolIndex-r16, and the like.

According to an embodiment, Rel-15 NR may provide a function by which one CRS pattern can be configured per serving cell through parameter lte-CRS-ToMatchAround. In Rel-16 NR, the above function has been expanded such that multiple CRS patterns can be configured per serving cell. More specifically, a UE having a single-TRP (transmission and reception point) configuration may now have one CRS pattern configured per one LTE carrier, and a UE having a multi-TRP configuration may now have two CRS patterns configured per one LTE carrier. For example, the UE having a single-TRP configuration may have a maximum of three CRS patterns configured per serving cell through parameter lte-CRS-PatternList1-r16. As another example, the UE having a multi-TRP configuration may have a CRS configured for each TRP. That is, the CRS pattern regarding TRP1 may be configured through parameter lte-CRS-PatternList1-r16, and the CRS pattern regarding TRP2 may be configured through parameter lte-CRS-PatternList2-r16. If two TRPs are configured as above, whether the CRS patterns of TRP1 and TRP2 are both to be applied to a specific physical downlink shared channel (PDSCH) or only the CRS pattern regarding one TRP is to be applied is determined through parameter crs-RateMatch-PerCORESETPoolIndex-r16, wherein if parameter crs-RateMatch-PerCORESETPoolIndex-r16 is configured "enabled", only the CRS pattern of one TRP is applied, and both CRS patterns of the two TRPs are applied in other cases.

According to an embodiment, Table 22 shows a ServingCellConfig IE including the CRS patterns, and Table 23 shows a RateMatchPatternLTE-CRS IE including at least one parameter regarding CRS patterns.

[Table 22]

```
ServingCellConfig ::=              SEQUENCE {
    tdd-UL-DL-ConfigurationDedicated    TDD-UL-DL-ConfigDedicated
OPTIONAL,   -- Cond TDD
    initialDownlinkBWP              BWP-DownlinkDedicated
OPTIONAL,   -- Need M
    downlinkBWP-ToReleaseList          SEQUENCE (SIZE (1..maxNrofBWPs)) OF BWP-Id
OPTIONAL,   -- Need N
    downlinkBWP-ToAddModList           SEQUENCE (SIZE (1..maxNrofBWPs)) OF BWP-Downlink
OPTIONAL,   -- Need N
    firstActiveDownlinkBWP-Id       BWP-Id
OPTIONAL,   -- Cond SyncAndCellAdd
    bwp-InactivityTimer             ENUMERATED {ms2, ms3, ms4, ms5, ms6, ms8, ms10,
ms20, ms30,
                                        ms40,ms50, ms60, ms80,ms100, ms200,ms300,
ms500,
                                        ms750, ms1280, ms1920, ms2560, spare10,
spare9, spare8,
                                        spare7, spare6, spare5, spare4, spare3,
spare2, spare1 }    OPTIONAL,    --Need R
    defaultDownlinkBWP-Id           BWP-Id
OPTIONAL,   -- Need S
    uplinkConfig                    UplinkConfig
OPTIONAL,   -- Need M
    supplementaryUplink             UplinkConfig
OPTIONAL,   -- Need M
    pdcch-ServingCellConfig         SetupRelease { PDCCH-ServingCellConfig }
OPTIONAL,   -- Need M
    pdsch-ServingCellConfig         SetupRelease { PDSCH-ServingCellConfig }
OPTIONAL,   -- Need M
    csi-MeasConfig                  SetupRelease { CSI-MeasConfig }
OPTIONAL,   -- Need M
    sCellDeactivationTimer          ENUMERATED {ms20, ms40, ms80, ms160, ms200, ms240,
                                        ms320, ms400, ms480, ms520, ms640, ms720,
                                        ms840, ms1280, spare2,spare1}      OPTIONAL,
-- Cond ServingCellWithoutPUCCH
```

```
crossCarrierSchedulingConfig      CrossCarrierSchedulingConfig
OPTIONAL,   -- Need M
    tag-Id                         TAG-Id,
    dummy                          ENUMERATED {enabled}
OPTIONAL,   -- Need R
    pathlossReferenceLinking           ENUMERATED {spCell, sCell}
OPTIONAL,   -- Cond SCellOnly
    servingCellMO                  MeasObjectId
OPTIONAL,   -- Cond MeasObject
    ...,
    [[
    lte-CRS-ToMatchAround              SetupRelease { RateMatchPatternLTE-CRS }
OPTIONAL,   -- Need M
    rateMatchPatternToAddModList       SEQUENCE (SIZE (1..maxNrofRateMatchPatterns)) OF
RateMatchPattern      OPTIONAL,   -- Need N
    rateMatchPatternToReleaseList      SEQUENCE (SIZE (1..maxNrofRateMatchPatterns)) OF
RateMatchPatternId    OPTIONAL,   -- Need N
    downlinkChannelBW-PerSCS-List      SEQUENCE (SIZE (1..maxSCSs)) OF SCS-
SpecificCarrier                OPTIONAL    -- Need S
    ]],
    [[
    supplementaryUplinkRelease         ENUMERATED {true}
OPTIONAL,   -- Need N
    tdd-UL-DL-ConfigurationDedicated-IAB-MT-r16    TDD-UL-DL-ConfigDedicated-IAB-MT-r16
OPTIONAL,   -- Cond TDD_IAB
    dormantBWP-Config-r16              SetupRelease { DormantBWP-Config-r16 }
OPTIONAL,   -- Need M
    ca-SlotOffset-r16              CHOICE {
        refSCS15kHz                    INTEGER (-2..2),
        refSCS30KHz                    INTEGER (-5..5),
        refSCS60KHz                    INTEGER (-10..10),
        refSCS120KHz                   INTEGER (-20..20)
    }
```

```
OPTIONAL,    -- Cond AsyncCA
    channelAccessConfig-r16              SetupRelease { ChannelAccessConfig-r16 }
OPTIONAL,    -- Need M
intraCellGuardBandsDL-List-r16      SEQUENCE (SIZE (1..maxSCSs)) OF
IntraCellGuardBandsPerSCS-r16           OPTIONAL,    -- Need S
    intraCellGuardBandsUL-List-r16      SEQUENCE (SIZE (1..maxSCSs)) OF
IntraCellGuardBandsPerSCS-r16           OPTIONAL,    -- Need S
    csi-RS-ValidationWith-DCI-r16       ENUMERATED {enabled}
OPTIONAL,    -- Need R
    lte-CRS-PatternList1-r16            SetupRelease { LTE-CRS-PatternList-r16 }
OPTIONAL,    -- Need M
    lte-CRS-PatternList2-r16            SetupRelease { LTE-CRS-PatternList-r16 }
OPTIONAL,    -- Need M
    crs-RateMatch-PerCORESETPoolIndex-r16  ENUMERATED {enabled}
OPTIONAL,    -- Need R
    enableTwoDefaultTCI-States-r16      ENUMERATED {enabled}
OPTIONAL,    -- Need R
    enableDefaultTCI-StatePerCoresetPoolIndex-r16 ENUMERATED {enabled}
OPTIONAL,    -- Need R
    enableBeamSwitchTiming-r16          ENUMERATED {true}
OPTIONAL,    -- Need R
    cbg-TxDiffTBsProcessingType1-r16    ENUMERATED {enabled}
OPTIONAL,    -- Need R
    cbg-TxDiffTBsProcessingType2-r16    ENUMERATED {enabled}
OPTIONAL    -- Need R
    ]]
}
```

[Table 23]

```
    –   RateMatchPatternLTE-CRS

The IE RateMatchPatternLTE-CRS is used to configure a pattern to rate match around LTE CRS. See TS 38.214 [19], clause
5.1.4.2.
                        RateMatchPatternLTE-CRS information element

-- ASN1START
-- TAG-RATEMATCHPATTERNLTE-CRS-START

RateMatchPatternLTE-CRS ::=         SEQUENCE {
    carrierFreqDL                   INTEGER (0..16383),
    carrierBandwidthDL                  ENUMERATED {n6, n15, n25, n50, n75, n100, spare2,
spare1},
    mbsfn-SubframeConfigList                            EUTRA-MBSFN-SubframeConfigList
OPTIONAL,    -- Need M
    nrofCRS-Ports                   ENUMERATED {n1, n2, n4},
    v-Shift                         ENUMERATED {n0, n1, n2, n3, n4, n5}
}

LTE-CRS-PatternList-r16 ::=             SEQUENCE (SIZE (1..maxLTE-CRS-Patterns-r16)) OF
RateMatchPatternLTE-CRS

-- TAG-RATEMATCHPATTERNLTE-CRS-STOP
-- ASN1STOP
```

| RateMatchPatternLTE-CRS field descriptions |
| --- |
| **carrierBandwidthDL** |
| BW of the LTE carrier in number of PRBs (see TS 38.214 [19], clause 5.1.4.2). |
| **carrierFreqDL** |
| Center of the LTE carrier (see TS 38.214 [19], clause 5.1.4.2). |
| **mbsfn-SubframeConfigList** |
| LTE MBSFN subframe configuration (see TS 38.214 [19], clause 5.1.4.2). |
| **nrofCRS-Ports** |
| Number of LTE CRS antenna port to rate-match around (see TS 38.214 [19], clause 5.1.4.2). |
| **v-Shift** |
| Shifting value v-shift in LTE to rate match around LTE CRS (see TS 38.214 [19], clause 5.1.4.2). |

**[PDCCH: regarding QCL prioritization rule]**

According to various embodiments of the disclosure, operations for determining QCL priority regarding a PDCCH will be described below in detail.

According to an embodiment, if multiple control resource sets which operate according to carrier aggregation inside a single cell or band and which exist inside a single or multiple in-cell activated bandwidth parts overlap temporally while having identical or different QCL-TypeD characteristics in a specific PDCCH monitoring occasion, the UE may select a specific control resource set according to a QCL priority determining operation and may monitor control resource sets having the same QCL-TypeD characteristics as the corresponding control resource set. That is, if multiple control resource sets overlap temporally, only one QCL-TypeD characteristic can be received. The QCL priority may be determined by the following criteria.

- Criterion 1: A control resource set connected to a common search space having the lowest index inside a cell corresponding to the lowest index among cells including a common search space
- Criterion 2: A control resource set connected to a UE-specific search space having the lowest index inside a cell corresponding to the lowest index among cells including a UE-specific search space

According to an embodiment, as described above, if one criterion among the criteria is not satisfied, the next criterion may be applied. For example, if control resource sets overlap temporally in a specific PDCCH monitoring occasion, and if all control resource sets are not connected to a common search space but connected to a UE-specific search space (for example, if criterion 1 is not satisfied), the UE may omit application of criterion 1 and apply criterion 2.

According to an embodiment, if selecting control resource set according to the above-mentioned criteria, the UE may additionally consider the two aspects with regard to QCL information configured for the control resource set. Firstly, if control resource set 1 has CSI-RS 1 as a reference signal having a relation of QCL-TypeD, if this CSI-RS 1 has a relation of QCL-TypeD with reference signal SSB 1, and if another control resource set 2 has a relation of QCL-TypeD with reference signal SSB 1, the UE may consider that the two control resource sets 1 and 2 have different QCL-TypeD characteristics. Secondly, if control resource set 1 has CSI-RS 1 configured for cell 1 as a reference signal having a relation of QCL-TypeD, if this CSI-RS 1 has a relation of QCL-TypeD with reference signal SSB 1, if control resource set 2 has a relation of QCL-TypeD with reference signal CSI-RS 2 configured for cell 2, and if this CSI-RS 2 has a relation of QCL-TypeD with the same reference signal SSB 1, the UE may consider that the two control resource sets have the same QCL-TypeD characteristics.

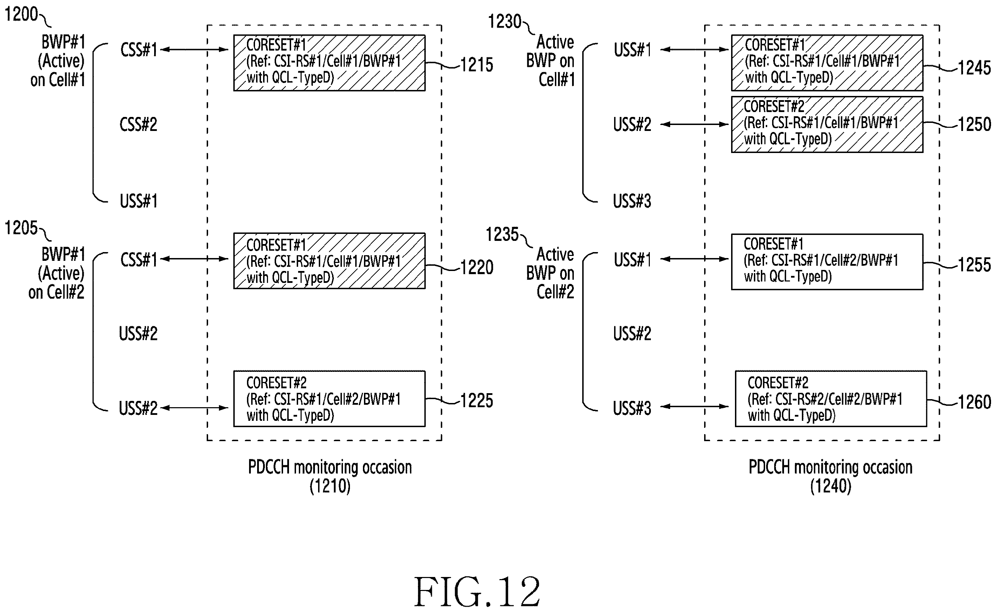

FIG. 12 illustrates a method in which, upon receiving a downlink control channel, a UE selects a receivable control resource set in consideration of priority in a wireless communication system according to an embodiment of the disclosure.

According to an embodiment, as an example, the UE may be configured to receive multiple control resource sets overlapping temporally in a specific PDCCH monitoring occasion 1210, and such multiple control resource sets may be connected to a common search space or a UE-specific search space with regard to multiple cells.

According to an embodiment, in the corresponding PDCCH monitoring occasion, control resource set no. 1 1200 connected to common search space no. 1 may exist in bandwidth part no. 1 1215 of cell no. 1, and control resource set no. 1 1205 connected to common search space no. 1 and control resource set no. 2 1220 connected to UE-specific search space no. 2 may exist in bandwidth part no. 1 1225 of cell no. 2. The control resource sets 1215 and 1220 may have a relation of QCL-TypeD with CSI-RS resource no. 1 configured in bandwidth part no. 1 of cell no. 1, and the control resource set 1225 may have a relation of QCL-TypeD with CSI-RS resource no. 1 configured in bandwidth part no. 1 of cell no. 2. If criterion 1 is applied to the corresponding PDCCH monitoring occasion 1210, all other control resource sets having the same reference signal of QCL-TypeD as control resource set no. 1 1215 may be received. Therefore, the UE may receive the control resource sets 1210 and 1215 in the corresponding PDCCH monitoring occasion 1220.

According to an embodiment, as another example, the UE may be configured to receive multiple control resource sets overlapping temporally in a specific PDCCH monitoring occasion 1240, and such multiple control resource sets may be connected to a common search space or a UE-specific search space with regard to multiple cells. In the corresponding PDCCH monitoring occasion, control resource set no. 1 1230 connected to UE-specific search space no. 1 and control resource set no. 2 1245 connected to UE-specific search space no. 2 may exist in bandwidth part no. 1 1250 of cell no. 1, and control resource set no. 1 1235 connected to UE-specific search space no. 1 and control resource set no. 2 1255 connected to UE-specific search space no. 3 may exist in bandwidth part no. 1 1260 of cell no. 2. The control resource sets 1245 and 1250 may have a relation of QCL-TypeD with CSI-RS resource no. 1 configured in bandwidth part no. 1 of cell no. 1, the control resource set 1255 may have a relation of QCL-TypeD with CSI-RS resource no. 1 configured in bandwidth part no. 1 of cell no. 2, and the control resource set 1260 may have a relation of QCL-TypeD with CSI-RS resource no. 2 configured in bandwidth part no. 1 of cell no. 2. If criterion 1 is applied to the corresponding PDCCH monitoring occasion 1240, there is no common search space, and the next criterion, that is, criterion 2, may thus be applied. If criterion 2 is applied to the corresponding PDCCH monitoring occasion 1240, all other control resource sets having the same reference signal of QCL-TypeD as control resource set no. 1 1245 may be received. Therefore, the UE may receive the control resource sets 1240 and 1245 in the corresponding PDCCH monitoring occasion 1250.

**[PDSCH: processing time]**

Next, a PDSCH processing time (PDSCH processing procedure time) will be described. If the base station schedules the UE to transmit a PDSCH by using DCI format 1_0, 1_1 or 1_2, the UE may need a PDSCH processing time for receiving a PDSCH by applying a transmission method (modulation/demodulation and coding indication index (MCS), demodulation reference signal-related information, time and frequency resource allocation information, and the like) indicated through DCI. The PUSCH preparation procedure time is defined in NR in consideration thereof. The PUSCH processing time of the UE may follow Equation 2 given below.

$$[\text{Equation 2}]$$
$$T_{proc,1} = ( N_1 + d_{1,1} + d_2 )( 2048 + 144 ) \kappa 2^{-\mu} T_c + T_{ext}$$

According to an embodiment, each parameter in $T_{proc,1}$ described above in Equation 2 may have the following meaning.

- $N_1$: the number of symbols determined according to UE processing capability 1 or 2 based on the UE's capability and numerology $\mu$. $N_1$ may have a value in Table 24 if UE processing capability 1 is reported according to the UE's capability report, and may have a value in Table 25 if UE processing capability 2 is reported, and if availability of UE processing capability 2 is configured through higher layer signaling. The numerology $\mu$ may correspond to the minimum value among $\mu_{PDCCH}$, $\mu_{PDSCH}$, $\mu_{UL}$ so as to maximize $T_{proc,1}$, and $\mu_{PDCCH}$, $\mu_{PDSCH}$, $\mu_{UL}$ may refer to the numerology of a PDCCH that scheduled a PDSCH, the numerology of the scheduled PDSCH, and numerology of an uplink channel in which a HARQ-ACK is to be transmitted.

[Table 24]

| PDSCH processing time in the case of PDSCH processing capability 1 | | |
|---|---|---|
| $\mu$ | PDSCH decoding time $N_1$ [symbols] | |
| | PDSCH mapping type A and B both have dmrs-AdditionalPosition = pos0 in DMRS-DownlinkConfig, which is upper layer signaling. | PDSCH mapping type A and B both do not have dmrs-AdditionalPosition = pos0 in DMRS-DownlinkConfig, which is upper layer signaling, or no upper layer parameters are configured. |
| 0 | 8 | $N_{1,0}$ |
| 1 | 10 | 13 |
| 2 | 17 | 20 |
| 3 | 20 | 24 |

[Table 25]

| PDSCH processing time in the case of PDSCH processing capability 2 | |
|---|---|
| $\mu$ | PDSCH decoding time $N_1$ [symbols] |
| | PDSCH mapping type A and B both have dmrs-AdditionalPosition = pos0 in DMRS-DownlinkConfig, which is upper layer signaling. |
| 0 | 3 |
| 1 | 4.5 |
| 2 | 9 for frequency range 1 |

- $\kappa$: 64
- $T_{ext}$: if the UE uses a shared spectrum channel access scheme, the UE may calculate $T_{ext}$ and apply the same to the PDSCH processing time. Otherwise, $T_{ext}$ is assumed to be 0.

- If $I_1$ which represents the PDSCH DMRS location value is 12, $N_{1,0}$ in [table 22] above has the value of 14, and otherwise has the value of 13.
- With regard to PDSCH mapping type A, if the last symbol of the PDSCH is the $i^{th}$ symbol in the slot in which the PDSCH is transmitted, and if i<7, $d_{1,1}$ is then 7-i, and $d_{1,1}$ is otherwise 0.
- $d_2$: if a PUCCH having a high priority index temporally overlaps another PUCCH or a PUSCH having a low priority index, $d_2$ of the PUCCH having a high priority index may be configured as a value reported from the UE. Otherwise, $d_2$ is 0.
- If PDSCH mapping type B is used with regard to UE processing capability 1, the $d_{1,1}$ value may be determined by the number (L) of symbols of a scheduled PDSCH and the number of overlapping symbols between the PDCCH that schedules the PDSCH and the scheduled PDSCH, as follows.
- If $L \geq 7$, then $d_{1,1} = 0$.
- If $- L \geq 4$ and $L \leq 6$, then $d_{1,1} = 7 - L$.
- If $L = 3$, then $d_{1,1} = \min (d, 1)$.
- If $L=2$, then $d_{1,1} = 3 + d$.
- If PDSCH mapping type B is used with regard to UE processing capability 2, the $d_{1,1}$ value may be determined by the number (L) of symbols of a scheduled PDSCH and the number of overlapping symbols between the PDCCH that schedules the PDSCH and the scheduled PDSCH, as follows.
- If $L \geq 7$, then $d_{1,1} = 0$.
- If $- L \geq 4$ and $L \leq 6$, then $d_{1,1} = 7 - L$.
- If $L=2$,
- If the scheduling PDCCH exists inside a CORESET including three symbols, and if the CORESET and the scheduled PDSCH have the same start symbol, then $d_{1,1} = 3$.
- Otherwise, $d_{1,1} = d$.
- In the case of a UE supporting capability 2 inside a given serving cell, the PDSCH processing time based on UE processing capability 2 may be applied by the UE if processingType2Enabled (upper layer signaling) is configured as "enable" with regard to the corresponding cell.

According to an embodiment, if the location of the first uplink transmission symbol of a PUCCH including HARQ-ACK information (in connection with the corresponding location, $K_1$ defined as the HARQ-ACK transmission timepoint, a PUCCH resource used to transmit the HARQ-ACK, and the timing advance effect may be considered) does not start earlier than the first uplink transmission symbol that comes after the last symbol of the PDSCH over a time of $T_{proc,1}$, the UE needs to transmit a valid HARQ-ACK message. That is, the UE needs to transmit a PUCCH including a HARQ-ACK only if the PDSCH processing time is sufficient. The UE cannot otherwise provide the base station with valid HARQ-ACK information corresponding to the scheduled PDSCH. $T_{proc,1}$ may be used in the case of both a normal and an extended CP. In the case of a PDSCH having two PDSCH transmission locations configured inside one slot, $d_{1,1}$ is calculated with reference to the first PDSCH transmission location inside the corresponding slot.

**[PDSCH: reception preparation time during cross-carrier scheduling]**

Next, in the case of cross-carrier scheduling in which the numerology ($\mu_{PDCCH}$) by which a scheduling PDCCH is transmitted and the numerology ($\mu_{PDSCH}$) by which a PDSCH scheduled by the corresponding PDCCH is transmitted are different from each other, the PDSCH reception reparation time ($N_{pdsch}$) of the UE defined with regard to the time interval between the PDCCH and PDSCH will be described.

According to an embodiment, if $\mu_{PDCCH} < \mu_{PDSCH}$, the scheduled PDSCH cannot be transmitted before the first symbol of the slot coming after $N_{pdsch}$ symbols from the last symbol of the PDCCH that scheduled the corresponding PDSCH. The transmission symbol of the corresponding PDSCH may include a DM-RS.

According to an embodiment, if $\mu_{PDCCH} > \mu_{PDSCH}$, the scheduled PDSCH may be transmitted after $N_{pdsch}$ symbols from the last symbol of the PDCCH that scheduled the corresponding PDSCH. The transmission symbol of the corresponding PDSCH may include a DM-RS.

According to an embodiment, $N_{pdsch}$ according to scheduled PDCCH subcarrier spacing is as given below.

| $\mu_{PDCCH}$ | $N_{pdsch}$ [symbols] |
|---|---|
| 0 | 4 |
| 1 | 5 |
| 2 | 10 |

(continued)

| $\mu_{PDCCH}$ | $N_{pdsch}$ [symbols] |
|---|---|
| 3 | 14 |

**[Regarding SRS]**

Next, an uplink channel estimation method using sounding reference signal (SRS) transmission of a UE will be described. The base station may configure at least one SRS configuration with regard to each uplink BWP in order to transfer configuration information for SRS transmission to the UE, and may also configure as least one SRS resource set with regard to each SRS configuration. As an example, the base station and the UE may exchange upper signaling information as follows, in order to transfer information regarding the SRS resource set.

- srs-ResourceSetId: an SRS resource set index
- srs-ResourceIdList: a set of SRS resource indices referred to by SRS resource sets
- resourceType: time domain transmission configuration of SRS resources referred to by SRS resource sets, and may be configured as one of "periodic", "semi-persistent", and "aperiodic". If configured as "periodic" or "semi-persistent", associated CSI-RS information may be provided according to the place of use of SRS resource sets. If configured as "aperiodic", an aperiodic SRS resource trigger list/slot offset information may be provided, and associated CSI-RS information may be provided according to the place of use of SRS resource sets.
- usage: a configuration regarding the place of use of SRS resources referred to by SRS resource sets, and may be configured as one of "beamManagement", "codebook", "nonCodebook",and "antennaSwitching".
- alpha, p0, pathlossReferenceRS, srs-PowerControlAdjustmentStates: may provide a parameter configuration for adjusting the transmission power of SRS resources referred to by SRS resource sets.

According to an embodiment, the UE may understand that an SRS resource included in a set of SRS resource indices referred to by an SRS resource set follows the information configured for the SRS resource set.

In addition, according to an embodiment, the base station and the UE may transmit/receive upper layer signaling information in order to transfer individual configuration information regarding SRS resources. As an example, the individual configuration information regarding SRS resources may include time-frequency domain mapping information inside slots of the SRS resources, and this may include information regarding intra-slot or inter-slot frequency hopping of the SRS resources. In addition, the individual configuration information regarding SRS resources may include time domain transmission configuration of SRS resources, and may be configured as one of "periodic", "semi-persistent", and "aperiodic". The time domain transmission configuration of SRS resources may be limited to have the same time domain transmission configuration as the SRS resource set including the SRS resources. If the time domain transmission configuration of SRS resources is configured as "periodic" or "semi-persistent", the time domain transmission configuration may further include an SRS resource transmission cycle and a slot offset (for example, periodicityAndOffset).

According to an embodiment, the base station may activate or deactivate SRS transmission for the UE through upper layer signaling including RRC signaling or MAC CE signaling, or L1 signaling (for example, DCI). For example, the base station may activate or deactivate periodic SRS transmission for the UE through upper layer signaling. The base station may indicate activation of an SRS resource set having resourceType configured as "periodic" through upper layer signaling, and the UE may transmit the SRS resource referred to by the activated SRS resource set. Intra-slot time- frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the periodic SRS resource activated through upper layer signaling.

According to an embodiment, for example, the base station may activate or deactivate semi-persistent SRS transmission for the UE through upper layer signaling. The base station may indicate activation of an SRS resource set through MAC CE signaling, and the UE may transmit the SRS resource referred to by the activated SRS resource set. The SRS resource set activated through MAC CE signaling may be limited to an SRS resource set having resourceType configured as "semi-persistent". Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. If the SRS resource has spatial relation info configured therefor, the spatial domain transmission filter may be determined, without following the same, by referring to configuration information regarding spatial relation info transferred through MAC CE signaling that activates semi-persistent SRS transmission. The UE may transmit the SRS resource inside the uplink BWP activated with regard to the semi-persistent SRS resource activated through upper layer signaling.

According to an embodiment, for example, the base station may trigger aperiodic SRS transmission by the UE through DCI. The base station may indicate one of aperiodic SRS triggers (aperiodic SRS-ResourceTrigger) through the SRS request field of DCI. The UE may understand that the SRS resource set including the aperiodic SRS resource trigger indicated through DCI in the aperiodic SRS resource trigger list, among configuration information of the SRS resource set, has been triggered. The UE may transmit the SRS resource referred to by the triggered SRS resource set. Intra-slot time-frequency domain resource mapping of the transmitted SRS resource follows resource mapping information configured for the SRS resource. In addition, slot mapping of the transmitted SRS resource may be determined by the slot offset between the SRS resource and a PDCCH including DCI, and this may refer to value(s) included in the slot offset set configured for the SRS resource set. Specifically, as the slot offset between the SRS resource and the PDCCH including DCI, a value indicated in the time domain resource assignment field of DCI, among offset value(s) included in the slot offset set configured for the SRS resource set, may be applied. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the aperiodic SRS resource triggered through DCI.

According to an embodiment, if the base station triggers aperiodic SRS transmission by the UE through DCI, a minimum time interval may be necessary between the transmitted SRS and the PDCCH including the DCI that triggers aperiodic SRS transmission, in order for the UE to transmit the SRS by applying configuration information regarding the SRS resource. The time interval for SRS transmission by the UE may be defined as the number of symbols between the last symbol of the PDCCH including the DCI that triggers aperiodic SRS transmission and the first symbol mapped to the first transmitted SRS resource among transmitted SRS resource(s). The minimum time interval may be determined with reference to the PUSCH preparation procedure time needed by the UE to prepare PUSCH transmission. In addition, the minimum time interval may have a different value depending on the place of use of the SRS resource set including the transmitted SRS resource. For example, the minimum time interval may be determined as N2 symbols defined in consideration of UE processing capability that follows the UE's capability with reference to the UE's PUSCH preparation procedure time. In addition, if the place of use of the SRS resource set is configured as "codebook" or "antennaSwitching" in consideration of the place of use of the SRS resource set including the transmitted SRS resource, the minimum time interval may be determined as N2 symbols, and if the place of use of the SRS resource set is configured as "nonCodebook" or "beamManagement", the minimum time interval may be determined as N2+14 symbols. The UE may transmit an aperiodic SRS if the time interval for aperiodic SRS transmission is larger than or equal to the minimum time interval, and may ignore the DCI that triggers the aperiodic SRS if the time interval for aperiodic SRS transmission is smaller than the minimum time interval.

[Table 26]

```
SRS-Resource ::=                    SEQUENCE {
    srs-ResourceId                      SRS-ResourceId,
    nrofSRS-Ports                       ENUMERATED {port1, ports2, ports4},
    ptrs-PortIndex                                      ENUMERATED  {n0,  n1  }
OPTIONAL,   -- Need R
    transmissionComb                    CHOICE {
        n2                                  SEQUENCE {
            combOffset-n2                       INTEGER (0..1),
            cyclicShift-n2                      INTEGER (0..7)
        },
        n4                                  SEQUENCE {
            combOffset-n4                       INTEGER (0..3),
            cyclicShift-n4                      INTEGER (0..11)
        }
    },
    resourceMapping                     SEQUENCE {
        startPosition                       INTEGER (0..5),
        nrofSymbols                         ENUMERATED {n1, n2, n4},
        repetitionFactor                    ENUMERATED {n1, n2, n4}
    },
```

```
    freqDomainPosition              INTEGER (0..67),
    freqDomainShift                 INTEGER (0..268),
    freqHopping                     SEQUENCE {
        c-SRS                           INTEGER (0..63),
        b-SRS                           INTEGER (0..3),
        b-hop                           INTEGER (0..3)
    },
    groupOrSequenceHopping                      ENUMERATED { neither, groupHopping,
sequenceHopping },
    resourceType                    CHOICE {
        aperiodic                       SEQUENCE {
            ...
        },
        semi-persistent                 SEQUENCE {
            periodicityAndOffset-sp             SRS-PeriodicityAndOffset,
            ...
        },
        periodic                        SEQUENCE {
            periodicityAndOffset-p              SRS-PeriodicityAndOffset,
            ...
        }
    },
    sequenceId                      INTEGER (0..1023),
    spatialRelationInfo                             SRS-SpatialRelationInfo
OPTIONAL,   -- Need R
    ...
}
```

Configuration information spatialRelationInfo in Table 26 above may be applied, with reference to one reference signal, to a beam used for SRS transmission corresponding to beam information of the corresponding reference signal. For example, configuration of spatialRelationInfo may include information as in Table 27 below.

[Table 27]

```
SRS-SpatialRelationInfo ::=     SEQUENCE {
    servingCellId                   ServCellIndex           OPTIONAL,   -- Need S
    referenceSignal                 CHOICE {
        ssb-Index                       SSB-Index,
        csi-RS-Index                    NZP-CSI-RS-ResourceId,
        srs                             SEQUENCE {
            resourceId                      SRS-ResourceId,
            uplinkBWP                       BWP-Id
        }
    }
}
```

According to an embodiment, referring to the spatialRelationInfo configuration, an SS/PBCH block index, CSI-RS index, or SRS index may be configured as the index of a reference signal to be referred to in order to use beam information of a specific reference signal. Upper signaling referenceSignal corresponds to configuration information indicating which reference signal's beam information is to be referred to for corresponding SRS transmission, ssb-Index may refer to the index of an SS/PBCH block, csi-RS-Index may refer to the index of a CSI-RS, and srs may refer to the index of an SRS. If upper signaling referenceSignal has a configured value of "ssb-Index", the UE may apply the reception beam which was used to receive the SS/PBCH block corresponding to ssb-Index as the transmission beam for the corresponding SRS transmission. If upper signaling referenceSignal has a configured value of "csi-RS-Index", the UE may apply the reception beam which was used to receive the CSI-RS corresponding to csi-RS-Index as the transmission beam for the corresponding SRS transmission. If upper signaling referenceSignal has a configured value of "srs", the UE may apply the reception beam which was used to transmit the SRS corresponding to srs as the transmission beam for the corresponding SRS transmission.

**[PUSCH: regarding transmission scheme]**

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

According to an embodiment, Configured grant Type 1PUSCH transmission may be configured semi-statically by receiving configuredGrantConfig including rrc-ConfiguredUplinkGrant in Table 28 through upper signaling, without receiving a UL grant inside DCI. Configured grant Type 2PUSCH transmission may be scheduled semi-persistently by a UL grant inside DCI after receiving configuredGrantConfig not including rrc-ConfiguredUplinkGrant in Table 28 through upper signaling. If PUSCH transmission is operated by a configured grant, parameters applied to the PUSCH transmission are applied through configuredGrantConfig (upper signaling) in Table 28 except for dataScramblingIdentityPUSCH, txConfig, codebookSubset, maxRank, and scaling of UCI-OnPUSCH, which are provided by pusch-Config (upper signaling) in Table 29. If provided with transformPrecoder inside configuredGrantConfig (upper signaling) in Table 28, the UE applies tp-pi2BPSK inside pusch-Config in Table 29 to PUSCH transmission operated by a configured grant.

[Table 28]

```
ConfiguredGrantConfig ::=              SEQUENCE {
frequencyHopping                                    ENUMERATED  {intraSlot,  interSlot}|
OPTIONAL,   -- Need S,
cg-DMRS-Configuration          DMRS-UplinkConfig,
mcs-Table                                            ENUMERATED  {qam256,  qam64LowSE}|
OPTIONAL,   -- Need S
mcs-TableTransformPrecoder                           ENUMERATED   {qam256,   qam64LowSE}|
OPTIONAL,   -- Need S
uci-OnPUSCH                                     SetupRelease {  CG-UCI-OnPUSCH  }|
OPTIONAL,   -- Need M
resourceAllocation                             ENUMERATED {  resourceAllocationType0,
resourceAllocationType1, dynamicSwitch },
rbg-Size                                                ENUMERATED   {config2}|
OPTIONAL,    -- Need S
powerControlLoopToUse          ENUMERATED {n0, n1},
p0-PUSCH-Alpha                 P0-PUSCH-AlphaSetId,
transformPrecoder                                ENUMERATED  {enabled,  disabled}|
OPTIONAL,    -- Need S
nrofHARQ-Processes             INTEGER(1..16),
repK                         ENUMERATED {n1,  n2,  n4,  n8},
repK-RV                                   ENUMERATED  {s1-0231,  s2-0303,  s3-0000}|
OPTIONAL,    -- Need R
```

```
periodicity                    ENUMERATED {
sym2, sym7, sym1x14, sym2x14, sym4x14, sym5x14, sym8x14, sym10x14, sym16x14, sym20x14,
sym32x14,  sym40x14,  sym64x14,  sym80x14,  sym128x14,  sym160x14,  sym256x14,  sym320x14,
sym512x14,
sym640x14, sym1024x14, sym1280x14, sym2560x14, sym5120x14,
sym6, sym1x12, sym2x12, sym4x12, sym5x12, sym8x12, sym10x12, sym16x12, sym20x12, sym32x12,
sym40x12, sym64x12, sym80x12, sym128x12, sym160x12, sym256x12, sym320x12, sym512x12,
sym640x12,
sym1280x12, sym2560x12
},
configuredGrantTimer                                        INTEGER    (1..64)
OPTIONAL,   -- Need R
rrc-ConfiguredUplinkGrant          SEQUENCE {
timeDomainOffset                   INTEGER (0..5119),
timeDomainAllocation                INTEGER (0..15),
frequencyDomainAllocation           BIT STRING (SIZE(18)),
antennaPort                        INTEGER (0..31),
dmrs-SeqInitialization                                    INTEGER    (0..1)
OPTIONAL,   -- Need R
precodingAndNumberOfLayers          INTEGER (0..63),
srs-ResourceIndicator                                    INTEGER    (0..15)
OPTIONAL,   -- Need R
mcsAndTBS                          INTEGER (0..31),
frequencyHoppingOffset                  INTEGER (1.. maxNrofPhysicalResourceBlocks-1)
OPTIONAL,   -- Need R
pathlossReferenceIndex                  INTEGER (0..maxNrofPUSCH-PathlossReferenceRSs-1),
...
}
OPTIONAL,   -- Need R
...
}
```

Next, according to an embodiment, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 29, which is upper signaling, is"codebook" or "nonCodebook".

According to an embodiment, as described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE may perform beam configuration for PUSCH transmission by using pucch-spatialRelationInfoID corresponding to a UE-specific PUCCH resource corresponding to the minimum ID inside an activated uplink BWP inside a serving cell, and the PUSCH transmission may be based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 29, the UE does not expect scheduling through DCI format 0_1.

[Table 29]

```
PUSCH-Config ::=                        SEQUENCE {
    dataScramblingIdentityPUSCH                             INTEGER   (0..1023)
OPTIONAL,    -- Need S
    txConfig                                ENUMERATED {codebook, nonCodebook}
OPTIONAL,    -- Need S
    dmrs-UplinkForPUSCH-MappingTypeA        SetupRelease {  DMRS-UplinkConfig  }
OPTIONAL,    -- Need M
    dmrs-UplinkForPUSCH-MappingTypeB        SetupRelease {  DMRS-UplinkConfig  }
OPTIONAL,    -- Need M

    pusch-PowerControl                                      PUSCH-PowerControl
OPTIONAL,    -- Need M
    frequencyHopping                        ENUMERATED {intraSlot, interSlot}
OPTIONAL,    -- Need S
    frequencyHoppingOffsetLists             SEQUENCE (SIZE (1..4)) OF INTEGER (1..
maxNrofPhysicalResourceBlocks-1)
```

```
OPTIONAL,    -- Need M
    resourceAllocation                      ENUMERATED { resourceAllocationType0,
resourceAllocationType1, dynamicSwitch},
    pusch-TimeDomainAllocationList                     SetupRelease {   PUSCH-
TimeDomainResourceAllocationList }      OPTIONAL,    -- Need M
    pusch-AggregationFactor                            ENUMERATED { n2,  n4,  n8  }
OPTIONAL,    -- Need S
    mcs-Table                               ENUMERATED {qam256, qam64LowSE}
OPTIONAL,    -- Need S
    mcs-TableTransformPrecoder              ENUMERATED {qam256, qam64LowSE}
OPTIONAL,    -- Need S
    transformPrecoder                          ENUMERATED {enabled, disabled}
OPTIONAL,    -- Need S
    codebookSubset                       ENUMERATED {fullyAndPartialAndNonCoherent,
partialAndNonCoherent,nonCoherent}

OPTIONAL, -- Cond codebookBased
    maxRank                                               INTEGER  (1..4)
OPTIONAL, -- Cond codebookBased
    rbg-Size                                   ENUMERATED { config2}
OPTIONAL,    -- Need S
    uci-OnPUSCH                             SetupRelease {  UCI-OnPUSCH}
OPTIONAL, -- Need M
    tp-pi2BPSK                                 ENUMERATED {enabled}
OPTIONAL,    -- Need S
    ...
}
```

Next, codebook-based PUSCH transmission will be described. The codebook-based PUSCH transmission may be dynamically scheduled through DCI format 0_0 or 0_1, and may be operated semi-statically by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. In addition, the TPMI and the transmission rank may be given through "precoding information and number of layers" (a field inside DCI) or configured through precodingAndNumberOfLayers (upper signaling). The TPMI is used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI is used to indicate a precoder to be applied in an SRS resource indicated through the SRI.

According to an embodiment, the precoder to be used for PUSCH transmission may be selected from an uplink codebook having the same number of antenna ports as the value of nrofSRS-Ports inside SRS-Config (upper signaling). In connection with codebook-based PUSCH transmission, the UE may determine a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "nonCoherent", based on UE capability reported by the UE to the base station. If the UE reported "partialAndNonCoherent'" as UE capability, the UE does not expect that the value of codebookSubset (upper signaling) will be configured as "fullyAndPartialAndNonCoherent". In addition, if the UE reported "nonCoherent" as UE capability, UE does not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, the UE does not expect that the value of codebookSubset (upper signaling) will be configured as "partialAndNonCoherent".

According to an embodiment, the UE may have one SRS resource set configured therefor, wherein the value of usage inside SRS-ResourceSet (upper signaling)is "codebook", and one SRS resource may be indicated through an SRI inside the corresponding SRS resource set. If multiple SRS resources are configured inside the SRS resource set wherein the value of usage inside SRS-ResourceSet (upper signaling) is "codebook", the UE may expect that the value of nrofSRS-Ports inside SRS-Resource (upper signaling) is identical for all SRS resources.

According to an embodiment, the UE may transmit, to the base station, one or multiple SRS resources included in the SRS resource set wherein the value of usage is configured as "codebook" according to upper signaling, and the base station may select one from the SRS resources transmitted by the UE and indicate the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE may apply, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be operated semi-statically by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

According to an embodiment, with regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

According to an embodiment, if the configured value of resourceType inside SRS-ResourceSet (upper signaling) is "aperiodic", the connected NZP CSI-RS may be indicated by an SRS request which is a field inside DCI format 0_1 or 1_1. If the connected NZP CSI-RS resource is an aperiodic NZP CSI-RS resource, the existence of the connected NZP CSI-RS is indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is located in the slot used to transmit the PDCCH including the SRS request field. In this case, TCI states configured for the scheduled subcarrier are not configured as QCL-TypeD.

According to an embodiment, if there is a periodic or semi-persistent SRS resource set configured, the connected NZP CSI-RS may be indicated through associated CSI-RS inside SRS-ResourceSet (upper signaling). With regard to non-codebook-based transmission, the UE does not expect that spatialRelationInfo which is upper signaling regarding the SRS resource and associatedCSI-RS inside SRS-ResourceSet (upper signaling) will be configured together.

According to an embodiment, if multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI may refer to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE may occupy the same RB. The UE may configure one SRS port for each SRS resource. There may be only one configured SRS resource set wherein the value of usage inside SRS-ResourceSet (upper signaling) is "nonCodebook", and a maximum of four SRS resources may be configured for non-codebook-based PUSCH transmission.

According to an embodiment, the base station may transmit one NZP-CSI-RS connected to the SRS resource set to the UE, and the UE may calculate the precoder to be used when transmitting one or multiple SRS resources inside the corresponding SRS resource set, based on the result of measurement when the corresponding NZP-CSI-RS is received. The UE may apply the calculated precoder when transmitting, to the base station, one or multiple SRS resources inside the SRS resource set wherein the configured usage is "nonCodebook", and the base station may select one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE may transmit the PUSCH by applying the precoder applied to SRS resource transmission to each layer.

**[PUSCH: preparation procedure time]**

Next, a PUSCH preparation procedure time will be described. If a base station schedules a UE so as to transmit a PUSCH by using DCI format 0_0, 0_1, or 0_2, the UE may require a PUSCH preparation procedure time such that a PUSCH is transmitted by applying a transmission method (SRS resource transmission precoding method, the number of transmission layers, spatial domain transmission filter) indicated through DCI. The PUSCH preparation procedure time is defined in NR in consideration thereof. The PUSCH preparation procedure time of the UE may follow Equation 3 given below.

[Equation 3]

$$T_{proc,2} = \max(( N_2 + d_{2,1} + d_2)( 2048 + 144 ) \kappa 2^{-\mu} T_c + T_{ext} + T_{switch}, d_{2,2} )$$

Each parameter in $T_{proc,2}$ described above in Equation 3 may have the following meaning.

- $N_2$: the number of symbols determined according to UE processing capability 1 or 2, based on the UE's capability, and numerology $\mu$.

According to an embodiment, $N_2$ may have a value in Table 30 if UE processing capability 1 is reported according to the UE's capability report, and may have a value in Table 31 if UE processing capability 2 is reported, and if availability of UE processing capability 2 is configured through higher layer signaling.

[Table 30]

| $\mu$ | PUSCH preparation time $N_2$ [symbols] |
|---|---|
| 0 | 10 |
| 1 | 12 |
| 2 | 23 |
| 3 | 36 |

[Table 31]

| $\mu$ | PUSCH preparation time $N_2$ [symbols] |
|---|---|
| 0 | 5 |
| 1 | 5.5 |
| 2 | 11 for frequency range 1 |

- $d_{2,1}$: the number of symbols determined to be 0 if all resource elements of the first OFDM symbol of PUSCH transmission include DM-RSs, and to be 1 otherwise.
- $\kappa$: 64
- $\mu$: follows a value, among $\mu_{DL}$ and $\mu_{UL}$, which makes $T_{proc,2}$ larger. $\mu_{DL}$ refers to the numerology of a downlink used to transmit a PDCCH including DCI that schedules a PUSCH, and $\mu_{UL}$ refers to the numerology of an uplink used to transmit a PUSCH.
- $T_c$: has $1/(\Delta f_{max} \cdot N_f)$, $\Delta f_{max} = 480 \cdot 10^3 Hz$, $N_f = 4096$..

- $d_{2,2}$: follows a BWP switching time if DCI that schedules a PUSCH indicates BWP switching, and has 0 otherwise.
- $d_2$: if OFDM symbols overlap temporally between a PUSCH having a high priority index and a PUCCH having a low priority index, the $d_2$ value of the PUSCH having a high priority index is used. Otherwise, $d_2$ is 0.
- $T_{ext}$: if the UE uses a shared spectrum channel access scheme, the UE may calculate $T_{ext}$ and apply the same to a PUSCH preparation procedure time. Otherwise, $T_{ext}$ is assumed to be 0.
- $T_{switch}$: if an uplink switching spacing has been triggered, $T_{switch}$ is assumed to be the switching spacing time. Otherwise, $T_{switch}$ is assumed to be 0.

According to an embodiment, the base station and the UE determine that the PUSCH preparation procedure time is insufficient if the first symbol of a PUSCH starts earlier than the first uplink symbol in which a CP starts after Tproc,2 from the last symbol of a PDCCH including DCI that schedules the PUSCH, in view of the influence of timing advance between the uplink and the downlink and time domain resource mapping information of the PUSCH scheduled through the DCI. Otherwise, the base station and the UE determine that the PUSCH preparation procedure time is sufficient The UE may transmit the PUSCH only if the PUSCH preparation procedure time is sufficient, and may ignore the DCI that schedules the PUSCH if the PUSCH preparation procedure time is insufficient.

### [PUSCH: Multiplexing rules during AP/SP **CSI reporting**]

Hereinafter, a method of measuring and reporting a channel state in the 5G communication system will be described in detail. Channel state information (CSI) may include a channel quality indicator (channel quality information (CQI)), a precoding matrix index (precoding matrix indicator (PMI)), a CSI-RS resource indicator (CRI), an SS/PBCH block resource indicator (SSBRI), a layer indicator (LI), a rank indicator (RI), a reference signal received power (L1-RSRP), and/or the like. A base station may control time and frequency resources for the aforementioned CSI measurement and report of a UE.

According to an embodiment, for the aforementioned CSI measurement and report, the UE may be configured, via higher-layer signaling, with setting information for N (N≥1) CSI reports (CSI-ReportConfig), setting information for M (M ≥ 1) RS transmission resources (CSI-ResourceConfig), and list information of one or two trigger states (CSI-Aperiodic-TriggerStateList, CSI-SemiPersistentOnPUSCH-TriggerStateList). The configuration information for CSI measurement and reporting described above may be, more specifically, as described in Table 32 to Table 38 below.

[Table 32]

CSI-ReportConfig

The IE CSI-ReportConfig is used to configure a periodic or semi-persistent report sent on PUCCH on the cell in which the CSI-ReportConfig is included, or to configure a semi-persistent or aperiodic report sent on PUSCH triggered by DCI received on the cell in which the CSI-ReportConfig is included (in this case, the cell on which the report is sent is determined by the received DCI). See TS 38.214 [19], clause 5.2.1.

*CSI-ReportConfig* information element

```
-- ASN1START
-- TAG-CSI-REPORTCONFIG-START

CSI-ReportConfig ::=                    SEQUENCE {
    reportConfigId                      CSI-ReportConfigId,
    carrier                             ServCellIndex                OPTIONAL,   -
- Need S
    resourcesForChannelMeasurement      CSI-ResourceConfigId,
    csi-IM-ResourcesForInterference     CSI-ResourceConfigId         OPTIONAL,   -
- Need R
    nzp-CSI-RS-ResourcesForInterference CSI-ResourceConfigId         OPTIONAL,   -
- Need R
    reportConfigType                    CHOICE {
        periodic                            SEQUENCE {
            reportSlotConfig                    CSI-ReportPeriodicityAndOffset,
            pucch-CSI-ResourceList              SEQUENCE (SIZE (1..maxNrofBWPs)) OF
PUCCH-CSI-Resource
        },
        semiPersistentOnPUCCH               SEQUENCE {
            reportSlotConfig                    CSI-ReportPeriodicityAndOffset,
            pucch-CSI-ResourceList              SEQUENCE (SIZE (1..maxNrofBWPs)) OF
PUCCH-CSI-Resource
        },
        semiPersistentOnPUSCH               SEQUENCE {
            reportSlotConfig                    ENUMERATED {sl5, sl10, sl20, sl40,
sl80, sl160, sl320},
            reportSlotOffsetList                SEQUENCE (SIZE (1.. maxNrofUL-
Allocations)) OF INTEGER(0..32),
            p0alpha                             P0-PUSCH-AlphaSetId
        },
        aperiodic                           SEQUENCE {
            reportSlotOffsetList                SEQUENCE (SIZE (1..maxNrofUL-
Allocations)) OF INTEGER(0..32)
        }
    },
```

```
        reportQuantity                          CHOICE {
            none                                     NULL,
            cri-RI-PMI-CQI                           NULL,
            cri-RI-i1                                NULL,
            cri-RI-i1-CQI                            SEQUENCE {
                pdsch-BundleSizeForCSI                   ENUMERATED {n2, n4}
OPTIONAL      -- Need S
            },
            cri-RI-CQI                               NULL,
            cri-RSRP                                 NULL,
            ssb-Index-RSRP                           NULL,
            cri-RI-LI-PMI-CQI                        NULL
        },
        reportFreqConfiguration                  SEQUENCE {
            cqi-FormatIndicator                      ENUMERATED { widebandCQI, subbandCQI }
OPTIONAL,     -- Need R
            pmi-FormatIndicator                      ENUMERATED { widebandPMI, subbandPMI }
OPTIONAL,     -- Need R
            csi-ReportingBand                        CHOICE {
                subbands3                                BIT STRING(SIZE(3)),
                subbands4                                BIT STRING(SIZE(4)),
                subbands5                                BIT STRING(SIZE(5)),
                subbands6                                BIT STRING(SIZE(6)),
                subbands7                                BIT STRING(SIZE(7)),
                subbands8                                BIT STRING(SIZE(8)),
                subbands9                                BIT STRING(SIZE(9)),
                subbands10                               BIT STRING(SIZE(10)),
                subbands11                               BIT STRING(SIZE(11)),
                subbands12                               BIT STRING(SIZE(12)),
                subbands13                               BIT STRING(SIZE(13)),
                subbands14                               BIT STRING(SIZE(14)),
                subbands15                               BIT STRING(SIZE(15)),
                subbands16                               BIT STRING(SIZE(16)),
                subbands17                               BIT STRING(SIZE(17)),
                subbands18                               BIT STRING(SIZE(18)),
                ...,
                subbands19-v1530                         BIT STRING(SIZE(19))
            } OPTIONAL     -- Need S

        }
OPTIONAL,     -- Need R
```

```
        timeRestrictionForChannelMeasurements          ENUMERATED {configured,
notConfigured},
        timeRestrictionForInterferenceMeasurements     ENUMERATED {configured,
notConfigured},
        codebookConfig                                 CodebookConfig
OPTIONAL,     -- Need R
        dummy                                          ENUMERATED {n1, n2}
OPTIONAL,     -- Need R
        groupBasedBeamReporting                        CHOICE {
            enabled                                        NULL,
            disabled                                       SEQUENCE {
                nrofReportedRS                                 ENUMERATED {n1, n2, n3, n4}
OPTIONAL     -- Need S
            }
        },
        cqi-Table               ENUMERATED {table1, table2, table3, spare1}
OPTIONAL,     -- Need R
        subbandSize             ENUMERATED {value1, value2},
        non-PMI-PortIndication  SEQUENCE (SIZE (1..maxNrofNZP-CSI-RS-ResourcesPerConfig))
OF PortIndexFor8Ranks OPTIONAL,    -- Need R
        ...,
        [[
        semiPersistentOnPUSCH-v1530         SEQUENCE {
            reportSlotConfig-v1530              ENUMERATED {sl4, sl8, sl16}
        }
OPTIONAL     -- Need R
        ]],
        [[
        semiPersistentOnPUSCH-v1610         SEQUENCE {
            reportSlotOffsetListDCI-0-2-r16     SEQUENCE (SIZE (1.. maxNrofUL-Allocations-
r16)) OF INTEGER(0..32)   OPTIONAL,    -- Need R
            reportSlotOffsetListDCI-0-1-r16     SEQUENCE (SIZE (1.. maxNrofUL-Allocations-
r16)) OF INTEGER(0..32)   OPTIONAL    -- Need R
        }
OPTIONAL,     -- Need R
        aperiodic-v1610                     SEQUENCE {
            reportSlotOffsetListDCI-0-2-r16     SEQUENCE (SIZE (1.. maxNrofUL-Allocations-
r16)) OF INTEGER(0..32)   OPTIONAL,    -- Need R
            reportSlotOffsetListDCI-0-1-r16     SEQUENCE (SIZE (1.. maxNrofUL-Allocations-
r16)) OF INTEGER(0..32)   OPTIONAL    -- Need R
        }
OPTIONAL,     -- Need R

        reportQuantity-r16                  CHOICE {
            cri-SINR-r16                        NULL,
            ssb-Index-SINR-r16                  NULL
        }
OPTIONAL,     -- Need R
        codebookConfig-r16                             CodebookConfig-r16
OPTIONAL     -- Need R
        ]]
}


CSI-ReportPeriodicityAndOffset ::=  CHOICE {
        slots4                      INTEGER(0..3),
        slots5                      INTEGER(0..4),
        slots8                      INTEGER(0..7),
        slots10                     INTEGER(0..9),
        slots16                     INTEGER(0..15),
        slots20                     INTEGER(0..19),
        slots40                     INTEGER(0..39),
        slots80                     INTEGER(0..79),
        slots160                    INTEGER(0..159),
        slots320                    INTEGER(0..319)
}


PUCCH-CSI-Resource ::=              SEQUENCE {
        uplinkBandwidthPartId               BWP-Id,
        pucch-Resource                      PUCCH-ResourceId
}
```

```
PortIndexFor8Ranks ::=          CHOICE {
    portIndex8                      SEQUENCE{
        rank1-8                         PortIndex8
OPTIONAL,    -- Need R
        rank2-8                         SEQUENCE(SIZE(2)) OF PortIndex8
OPTIONAL,    -- Need R
        rank3-8                         SEQUENCE(SIZE(3)) OF PortIndex8
OPTIONAL,    -- Need R
        rank4-8                         SEQUENCE(SIZE(4)) OF PortIndex8
OPTIONAL,    -- Need R
        rank5-8                         SEQUENCE(SIZE(5)) OF PortIndex8
OPTIONAL,    -- Need R
        rank6-8                         SEQUENCE(SIZE(6)) OF PortIndex8
OPTIONAL,    -- Need R
        rank7-8                         SEQUENCE(SIZE(7)) OF PortIndex8
OPTIONAL,    -- Need R
        rank8-8                         SEQUENCE(SIZE(8)) OF PortIndex8
OPTIONAL     -- Need R
    },
    portIndex4                      SEQUENCE{
        rank1-4                         PortIndex4
OPTIONAL,    -- Need R
        rank2-4                         SEQUENCE(SIZE(2)) OF PortIndex4
OPTIONAL,    -- Need R
        rank3-4                         SEQUENCE(SIZE(3)) OF PortIndex4
OPTIONAL,    -- Need R
        rank4-4                         SEQUENCE(SIZE(4)) OF PortIndex4
OPTIONAL     -- Need R
    },
    portIndex2                      SEQUENCE{
        rank1-2                         PortIndex2
OPTIONAL,    -- Need R
        rank2-2                         SEQUENCE(SIZE(2)) OF PortIndex2
OPTIONAL     -- Need R
    },
    portIndex1                      NULL
}

PortIndex8::=                   INTEGER (0..7)
PortIndex4::=                   INTEGER (0..3)
PortIndex2::=                   INTEGER (0..1)

-- TAG-CSI-REPORTCONFIG-STOP
-- ASN1STOP
```

| CSI-ReportConfig field descriptions |
|---|
| **carrier**<br>Indicates in which serving cell the *CSI-ResourceConfig* indicated below are to be found. If the field is absent, the resources are on the same serving cell as this report configuration. |
| **codebookConfig**<br>Codebook configuration for Type-1 or Type-2 including codebook subset restriction. Network does not configure codebookConfig and codebookConfig-r16 simultaneously to a UE |
| **cqi-FormatIndicator**<br>Indicates whether the UE shall report a single (wideband) or multiple (subband) CQI. (see TS 38.214 [19], clause 5.2.1.4). |
| **cqi-Table**<br>Which CQI table to use for CQI calculation (see TS 38.214 [19], clause 5.2.2.1). |
| **csi-IM-ResourcesForInterference**<br>CSI IM resources for interference measurement. *csi-ResourceConfigId* of a *CSI-ResourceConfig* included in the configuration of the serving cell indicated with the field "carrier" above. The *CSI-ResourceConfig* indicated here contains only CSI-IM resources. The *bwp-Id* in that *CSI-ResourceConfig* is the same value as the *bwp-Id* in the *CSI-ResourceConfig* indicated by *resourcesForChannelMeasurement*. |
| **csi-ReportingBand** |

(continued)

| **CSI-ReportConfig field descriptions** |
| --- |
| Indicates a contiguous or non-contiguous subset of subbands in the bandwidth part which CSI shall be reported for. Each bit in the bit-string represents one subband. The right-most bit in the bit string represents the lowest subband in the BWP. The choice determines the number of subbands (subbands3 for 3 subbands, subbands4 for 4 subbands, and so on) (see TS 38.214 [19], clause 5.2.1.4). This field is absent if there are less than 24 PRBs (no sub band) and present otherwise, the number of sub bands can be from 3 (24 PRBs, sub band size 8) to 18 (72 PRBs, sub band size 4). |
| **dummy**<br>This field is not used in the specification. If received it shall be ignored by the UE. |
| **groupBasedBeamReporting**<br>Turning on/off group beam based reporting (see TS 38.214 [19], clause 5.2.1.4). |
| **non-PMI-Portindication**<br>Port indication for RI/CQI calculation. For each CSI-RS resource in the linked ResourceConfig for channel measurement, a port indication for each rank R, indicating which R ports to use. Applicable only for non-PMI feedback (see TS 38.214 [19], clause 5.2.1.4.2).<br>The first entry in *non-PMI-PortIndication* corresponds to the NZP-CSI-RS-Resource indicated by the first entry in *nzp-CSI-RS-Resources* in the *NZP-CSI-RS-ResourceSet* indicated in the first entry of *nzp-CSI-RS-ResourceSet-List* of the *CSI-ResourceConfig* whose *CSI-ResourceConfigId* is indicated in a CSI-MeasId together with the above *CSI-ReportConfigId*; the second entry in *non-PMI-PortIndication* corresponds to the NZP-CSI-RS-Resource indicated by the second entry in *nzp-CSI-RS-Resources* in the *NZP-CSI-RS-ResourceSet* indicated in the first entry of *nzp-CSI-RS-ResourceSetList* of the same *CSI-ResourceConfig,* and so on until the NZP-CSI-RS-Resource indicated by the last entry in *nzp-CSI-RS-Resources* in the in the *NZP-CSI-RS-ResourceSet* indicated in the first entry of *nzp-CSI-RS-ResourceSetList* of the same *CSI-ResourceConfig.* Then the next entry corresponds to the NZP-CSI-RS-Resource indicated by the first entry in *nzp-CSI-RS-Resources* in the *NZP-CSI-RS-ResourceSet* indicated in the second entry of *nzp-CSI-RS-ResourceSetList* of the same *CSI-ResourceConfig* and so on. |
| **nrofReportedRS**<br>The number (N) of measured RS resources to be reported per report setting in a non-group-based report. N <= N_max, where N_max is either 2 or 4 depending on UE capability. (see TS 38.214 [19], clause 5.2.1.4) When the field is absent the UE applies the value 1. |
| **nzp-CSI-RS-ResourcesForInterference**<br>NZP CSI RS resources for interference measurement. *csi-ResourceConfigId* of a *CSI-ResourceConfig* included in the configuration of the serving cell indicated with the field "carrier" above. The *CSI-ResourceConfig* indicated here contains only NZP-CSI-RS resources. The *bwp-Id* in that *CSI-ResourceConfig* is the same value as the *bwp-Id* in the *CSI-ResourceConfig* indicated by *resourcesForChannelMeasurement*. |
| **p0alpha**<br>Index of the p0-alpha set determining the power control for this CSI report transmission (see TS 38.214 [19], clause 6.2.1.2). |
| **pdsch-BundleSizeForCSI**<br>PRB bundling size to assume for CQI calculation when *reportQuantity* is CRI/RI/i1/CQI. If the field is absent, the UE assumes that no PRB bundling is applied (see TS 38.214 [19]. clause 5.2.1.4.2). |
| **pmi-FormatIndicator**<br>Indicates whether the UE shall report a single (wideband) or multiple (subband) PMI. (see TS 38.214 [19], clause 5.2.1.4). |
| **pucch-CSI-ResourceList**<br>Indicates which PUCCH resource to use for reporting on PUCCH. |
| **reportConfigType**<br>Time domain behavior of reporting configuration. |
| **reportFreqConfiguration**<br>Reporting configuration in the frequency domain. (see TS 38.214 [19], clause 5.2.1.4). |
| **reportQuantity** |

(continued)

| **CSI-ReportConfig field descriptions** |
| --- |
| The CSI related quantities to report. see TS 38.214 [19], clause 5.2.1. If the field *reportQuantity-r16* is present, UE shall ignore *reportQuantity* (without suffix). |
| **reportSlotConfig**<br>Periodicity and slot offset (see TS 38.214 [19], clause 5.2.1.4). If the field *reportSlotConfig-v1530* is present, the UE shall ignore the value provided in *reportSlotConfig* (without suffix). |
| |
| **reportSlotOffsetList, reportSlotOffsetListDCI-0-1, reportSlotOffsetListDCI-0-2**<br>Timing offset Y for semi persistent reporting using PUSCH. This field lists the allowed offset values. This list must have the same number of entries as the *pusch-TimeDomainAllocationList* in *PUSCH-Config.* A particular value is indicated in DCI. The network indicates in the DCI field of the UL grant, which of the configured report slot offsets the UE shall apply. The DCI value 0 corresponds to the first report slot offset in this list, the DCI value 1 corresponds to the second report slot offset in this list, and so on. The first report is transmitted in slot n+Y, second report in n+Y+P, where P is the configured periodicity.<br>Timing offset Y for aperiodic reporting using PUSCH. This field lists the allowed offset values. This list must have the same number of entries as the *pusch-TimeDomainAllocationList* in *PUSCH-Config.* A particular value is indicated in DCI. The network indicates in the DCI field of the UL grant, which of the configured report slot offsets the UE shall apply. The DCI value 0 corresponds to the first report slot offset in this list, the DCI value 1 corresponds to the second report slot offset in this list, and so on (see TS 38.214 [19], clause 6.1.2.1). The field *reportSlotOffsetList* applies to DCI format 0_0, the field *reportSlotOffsetListDCI-0-1* applies to DCI format 0_1 and the field *reportSlotOffsetListDCI-0-2* applies to DCI format 0 2 (see TS 38.214 [19], clause 6.1.2.1). |
| **resourcesForChannelMeasurement**<br>Resources for channel measurement. *csi-ResourceConfigId* of a *CSI-ResourceConfig* included in the configuration of the serving cell indicated with the field "carrier" above. The *CSI-ResourceConfig* indicated here contains only NZP-CSI-RS resources and/or SSB resources. This *CSI-ReportConfig* is associated with the DL BWP indicated by *bwp-Id* in that *CSI-ResourceConfig.* |
| **subbandSize**<br>Indicates one out of two possible BWP-dependent values for the subband size as indicated in TS 38.214 [19], table 5.2.1.4-2 . If *csi-ReportingBand* is absent, the UE shall ignore this field. |
| **timeRestrictionForChannelMeasurements**<br>Time domain measurement restriction for the channel (signal) measurements (see TS 38.214 [19], clause 5.2.1.1). |
| **timeRestrictionForInterferenceMeasurements**<br>Time domain measurement restriction for interference measurements (see TS 38.214 [19], clause 5.2.1.1). |

[Table 33]

CSI-ResourceConfig

The IE CSI-ResourceConfig defines a group of one or more NZP-CSI-RS-ResourceSet, CSI-IM-ResourceSet and/or CSI-SSB-ResourceSet.

**CSI-ResourceConfig information element**

```
-- ASN1START
-- TAG-CSI-RESOURCECONFIG-START

CSI-ResourceConfig ::=      SEQUENCE {
    csi-ResourceConfigId      CSI-ResourceConfigId,
    csi-RS-ResourceSetList    CHOICE {
        nzp-CSI-RS-SSB            SEQUENCE {
            nzp-CSI-RS-ResourceSetList  SEQUENCE (SIZE (1..maxNrofNZP-CSI-RS-
ResourceSetsPerConfig)) OF NZP-CSI-RS-ResourceSetId

OPTIONAL, -- Need R
            csi-SSB-ResourceSetList         SEQUENCE  (SIZE  (1..maxNrofCSI-SSB-
ResourceSetsPerConfig)) OF CSI-SSB-ResourceSetId  OPTIONAL  -- Need R
        },
        csi-IM-ResourceSetList          SEQUENCE  (SIZE  (1..maxNrofCSI-IM-
ResourceSetsPerConfig)) OF CSI-IM-ResourceSetId
    },

    bwp-Id                  BWP-Id,
    resourceType                 ENUMERATED { aperiodic, semiPersistent,
periodic },
    ...
}

-- TAG-CSI-RESOURCECONFIG-STOP
-- ASN1STOP
```

| **CSI-ResourceConfig field descriptions** |
| --- |
| **bwp-Id**<br>The DL BWP which the CSI-RS associated with this *CSI-ResourceConfig* are located in (see TS 38.214 [19], clause 5.2.1.2. |
| **csi-IM-ResourceSetList**<br>List of references to CSI-IM resources used for beam measurement and reporting in a CSI-RS resource set. Contains up to *maxNrofCSI-IM-ResourceSetsPerConfig* resource sets if *resourceType* is 'aperiodic' and 1 otherwise (see TS 38.214 [19], clause 5.2.1.2). |
| **csi-ResourceConfigId**<br>Used in *CSI-ReportConfig* to refer to an instance of *CSI-ResourceConfig*. |
| **csi-SSB-ResourceSetList**<br>List of references to SSB resources used for beam measurement and reporting in a CSI-RS resource set (see TS 38.214 [19], clause 5.2.1.2). |
| **nzp-CSI-RS-ResourceSetList**<br>List of references to NZP CSI-RS resources used for beam measurement and reporting in a CSI-RS resource set. Contains up to *maxNrofNZP-CSI-RS-ResourceSetsPerConfig* resource sets if *resource Type* is 'aperiodic' and 1 otherwise (see TS 38.214 [19], clause 5.2.1.2). |
| **resourceType**<br>Time domain behavior of resource configuration (see TS 38.214 [19], clause 5.2.1.2). It does not apply to resources provided in the *csi-SSB-ResourceSetList*. |

[Table 34]

NZP-CSI-RS-ResourceSet

The IE CSI-ResourceConfig defines a group of one or more NZP-CSI-RS-ResourceSet, CSI-IM-ResourceSet and/or CSI-SSB-ResourceSet.

**CSI-ResourceConfig information element**

```
-- ASN1START
-- TAG-CSI-RESOURCECONFIG-START

CSI-ResourceConfig ::=        SEQUENCE {
    csi-ResourceConfigId        CSI-ResourceConfigId,
    csi-RS-ResourceSetList      CHOICE {
        nzp-CSI-RS-SSB              SEQUENCE {
            nzp-CSI-RS-ResourceSetList        SEQUENCE    (SIZE    (1..maxNrofNZP-CSI-RS-
ResourceSetsPerConfig)) OF NZP-CSI-RS-ResourceSetId

OPTIONAL, -- Need R
            csi-SSB-ResourceSetList              SEQUENCE    (SIZE    (1..maxNrofCSI-SSB-
ResourceSetsPerConfig)) OF CSI-SSB-ResourceSetId  OPTIONAL  -- Need R
        },
        csi-IM-ResourceSetList                    SEQUENCE    (SIZE    (1..maxNrofCSI-IM-
ResourceSetsPerConfig)) OF CSI-IM-ResourceSetId
    },

    bwp-Id                   BWP-Id,
    resourceType             ENUMERATED { aperiodic, semiPersistent, periodic },
    ...
}

-- TAG-CSI-RESOURCECONFIG-STOP
-- ASN1STOP
```

| **CSI-ResourceConfig field descriptions** |
|---|
| **bwp-Id**<br>The DL BWP which the CSI-RS associated with this *CSI-ResourceConfig* are located in (see TS 38.214 [19], clause 5.2.1.2. |
| **csi-IM-ResourceSetList**<br>List of references to CSI-IM resources used for beam measurement and reporting in a CSI-RS resource set. Contains up to *maxNrofCSI-IM-ResourceSetsPerConfig* resource sets if *resource Type* is 'aperiodic' and 1 otherwise (see TS 38.214 [19], clause 5.2.1.2). |
| **csi-ResourceConfigId**<br>Used in *CSI-ReportConfig* to refer to an instance of *CSI-ResourceConfig.* |
| **csi-SSB-ResourceSetList**<br>List of references to SSB resources used for beam measurement and reporting in a CSI-RS resource set (see TS 38.214 [19], clause 5.2.1.2). |
| **nzp-CSI-RS-ResourceSetList**<br>List of references to NZP CSI-RS resources used for beam measurement and reporting in a CSI-RS resource set. Contains up to *maxNrofNZP-CSI-RS-ResourceSetsPerConfig* resource sets if *resource Type* is 'aperiodic' and 1 otherwise (see TS 38.214 [19], clause 5.2.1.2). |
| **resourceType**<br>Time domain behavior of resource configuration (see TS 38.214 [19], clause 5.2.1.2). It does not apply to resources provided in the *csi-SSB-ResourceSetList.* |

## [Table 35]

## CSI-SSB-ResourceSet

The IE CSI-SSB-ResourceSet is used to configure one SS/PBCH block resource set which refers to SS/PBCH as indicated in ServingCellConfigCommon.

**CSI-SSB-ResourceSet information element**

```
-- ASN1START
-- TAG-CSI-SSB-RESOURCESET-START

CSI-SSB-ResourceSet ::=          SEQUENCE {
    csi-SSB-ResourceSetId            CSI-SSB-ResourceSetId,
    csi-SSB-ResourceList             SEQUENCE (SIZE(1..maxNrofCSI-SSB-ResourcePerSet)) OF
SSB-Index,
    ...
}

-- TAG-CSI-SSB-RESOURCESET-STOP
-- ASN1STOP
```

## [Table 36]

## CSI-IM-ResourceSet

The IE CSI-IM-ResourceSet is used to configure a set of one or more CSI Interference Management (IM) resources (their IDs) and set-specific parameters.

**CSI-IM-ResourceSet information element**

```
-- ASN1START
-- TAG-CSI-IM-RESOURCESET-START

CSI-IM-ResourceSet ::=          SEQUENCE {
    csi-IM-ResourceSetId            CSI-IM-ResourceSetId,
    csi-IM-Resources                SEQUENCE (SIZE(1..maxNrofCSI-IM-ResourcesPerSet))
OF CSI-IM-ResourceId,
    ...
}
-- TAG-CSI-IM-RESOURCESET-STOP
-- ASN1STOP
```

| **CSI-IM-ResourceSet field descriptions** |
|---|
| **csi-IM-Resources**<br>CSI-IM-Resources associated with this CSI-IM-ResourceSet (see TS 38.214 [19], clause 5.2) |

[Table 37]

CSI-AperiodicTrrigerStateList

The CSI-AperiodicTriggerStateList IE is used to configure the UE with a list of aperiodic trigger states. Each codepoint of the DCI field "CSI request" is associated with one trigger state. Upon reception of the value associated with a trigger state, the UE will perform measurement of CSI-RS (reference signals) and aperiodic reporting on L1 according to all entries in the associatedReportConfigInfoList for that trigger state.

**_CSI-AperiodicTriggerStateList_ information element**

```
-- ASN1START
-- TAG-CSI-APERIODICTRIGGERSTATELIST-START

CSI-AperiodicTriggerStateList ::=  SEQUENCE (SIZE (1..maxNrOfCSI-AperiodicTriggers)) OF
CSI-AperiodicTriggerState

CSI-AperiodicTriggerState ::=      SEQUENCE {
    associatedReportConfigInfoList     SEQUENCE
(SIZE(1..maxNrofReportConfigPerAperiodicTrigger)) OF CSI-AssociatedReportConfigInfo,
    ...
}

CSI-AssociatedReportConfigInfo ::=      SEQUENCE {
    reportConfigId                  CSI-ReportConfigId,
    resourcesForChannel               CHOICE {
        nzp-CSI-RS                    SEQUENCE {
            resourceSet                   INTEGER (1..maxNrofNZP-CSI-RS-
ResourceSetsPerConfig),
            qcl-info                      SEQUENCE (SIZE(1..maxNrofAP-CSI-RS-
ResourcesPerSet)) OF TCI-StateId OPTIONAL -- Cond Aperiodic
        },
        csi-SSB-ResourceSet             INTEGER (1..maxNrofCSI-SSB-ResourceSetsPerConfig)
    },
    csi-IM-ResourcesForInterference     INTEGER(1..maxNrofCSI-IM-ResourceSetsPerConfig)
OPTIONAL, -- Cond CSI-IM-ForInterference
    nzp-CSI-RS-ResourcesForInterference INTEGER (1..maxNrofNZP-CSI-RS-
ResourceSetsPerConfig)   OPTIONAL, -- Cond NZP-CSI-RS-ForInterference
    ...
}

-- TAG-CSI-APERIODICTRIGGERSTATELIST-STOP
-- ASN1STOP
```

| **CSI-AssociatedReportConfigInfo field descriptions** |
|---|
| **_csi-IM-ResourcesForinterference_**<br>CSI-IM-ResourceSet for interference measurement. Entry number in csi-IM-ResourceSetList in the CSI-Resource-Config indicated by csi-IM-ResourcesForInterference in the CSI-ReportConfig indicated by reportConfigId above (1 corresponds to the first entry, 2 to the second entry, and so on). The indicated CSI-IM-ResourceSet should have exactly the same number of resources like the NZP-CSI-RS-ResourceSet indicated in nzp-CSI-RS-Resources-forChannel. |
| **_csi-SSB-ResourceSet_**<br>CSI-SSB-ResourceSet for channel measurements. Entry number in csi-SSB-ResourceSetList in the CSI-ResourceConfig indicated by resourcesForChannelMeasurement in the CSI-ReportConfig indicated by reportConfigId above (1 corresponds to the first entry, 2 to the second entry, and so on). |
| **_nzp-CSI-RS-ResourcesForInterference_**<br>NZP-CSI-RS-ResourceSet for interference measurement. Entry number in nzp-CSI-RS-ResourceSetList in the CSI-ResourceConfig indicated by nzp-CSI-RS-ResourcesForinterference in the CSI-ReportConfig indicated by reoortConfiqld above (1 corresponds to the first entry, 2 to the second entry, and so on). |
| **_qcl-info_** |

(continued)

| CSI-AssociatedReportConfigInfo field descriptions |
|---|
| List of references to TCI-States for providing the QCL source and QCL type for each NZP-CSI-RS-Resource listed in nzp-CSI-RS-Resources of the NZP-CSI-RS-ResourceSet indicated by nzp-CSI-RS-ResourcesforChannel. Each *TCI-StateId* refers to the TCI-State which has this value for *tci-StateId* and is defined in *tci-StatesToAddModList* in the *PDSCH-Config* included in the *BWP-Downlink* corresponding to the serving cell and to the DL BWP to which the *resourcesForChannelMeasurement* (in the *CSI-ReportConfig* indicated by *reportConfigId* above) belong to. First entry in qcl-info-forChannel corresponds to first entry in nzp-CSI-RS-Resources of that NZP-CSI-RS-ResourceSet, second entry in qcl-info-forChannel corresponds to second entry in nzp-CSI-RS-Resources, and so on (see TS 38.214 [19], clause 5.2.1.5.1) |
| **reportConfigId** <br> The reportConfigId of one of the CSI-ReportConfigToAddMod configured in CSI-MeasConfig |
| **resourceSet** <br> NZP-CSI-RS-ResourceSet for channel measurements. Entry number in nzp-CSI-RS-ResourceSetList in the CSI-ResourceConfig indicated by resourcesForChannelMeasurement in the CSI-ReportConfig indicated by reportConfigId above (1 corresponds to the first entry, 2 to thesecond entry, and so on). |

| Conditional Presence | Explanation |
|---|---|
| *Aperiodic* | The field is mandatory present if the *NZP-CSI-RS-Resources* in the associated *resourceSet* have the resourceType aperiodic. <br> The field is absent otherwise. |
| *CSI-IM-ForInterference* | This field is optional need M if the *CSI-ReportConfig* identified by *reportConfigId* is configured with *csi-IM-ResourcesForInterference*; otherwise it is absent. |
| *NZP-CSI-RS-ForInterference* | This field is optional need M if the *CSI-ReportConfig* identified by *reportConfigId* is configured with *nzp-CSI-RS-ResourcesForinterference;* otherwise it is absent. |

[Table 38]

CSI-SemiPersistentOnPUSCH-TriggerStateList

The CSI-SemiPersistentOnPUSCH-TriggerStateList IE is used to configure the UE with list of trigger states for semi-persistent reporting of channel state information on L1. See also TS 38.214 [19], clause 5.2.

```
                        CSI-SemiPersistentOnPUSCH-TriggerStateList information element
-- ASN1START
-- TAG-CSI-SEMIPERSISTENTONPUSCHTRIGGERSTATELIST-START

CSI-SemiPersistentOnPUSCH-TriggerStateList              ::=               SEQUENCE (SIZE
(1..maxNrOfSemiPersistentPUSCH-Triggers)) OF CSI-SemiPersistentOnPUSCH-TriggerState

CSI-SemiPersistentOnPUSCH-TriggerState ::=      SEQUENCE {
    associatedReportConfigInfo                    CSI-ReportConfigId,
    ...
}

-- TAG-CSI-SEMIPERSISTENTONPUSCHTRIGGERSTATELIST-STOP
-- ASN1STOP
```

According to an embodiment, with regard to the aforementioned CSI report configurations (CSI-ReportConfig), each report configuration CSI-ReportConfig may be associated with one downlink (DL) bandwidth part identified by a higher-layer parameter bandwidth part identifier (bwp-id) given by the CSI resource configuration CSI-ResourceConfig associated with the corresponding report configuration. As a time domain reporting operation for each report configuration CSI-ReportConfig, "aperiodic", "semi-persistent", and "periodic" schemes may be supported, and these schemes may be configured for the UE by the base station via a reportConfigType parameter configured from a higher layer. A semi-persistent CSI report method may support a "PUCCH-based semi-persistent (semi-PersistentOnPUCCH)" method and a "PUSCH-based semi-persistent (semi-PersistentOnPUSCH)" method. In the case of the periodic or semi-persistent CSI report method, a PUCCH or PUSCH resource in which CSI is to be transmitted may be configured for the UE by the base station via higher-layer signaling. A periodicity and a slot offset of the PUCCH or PUSCH resource in which CSI is to be transmitted may be given by a numerology of an uplink (UL) bandwidth part configured for CSI report transmission. In the case of the aperiodic CSI report method, a PUSCH resource in which CSI is to be transmitted may be scheduled for the UE by the base station via L1 signaling (aforementioned DCI format 0_1).

According to an embodiment, with regard to the aforementioned CSI resource configurations (CSI-Resource-Config), each CSI resource configuration CSI-ReportConfig may include S (≥1) CSI resource sets (e.g., given via a higher-layer parameter of csi-RS-ResourceSetList). A CSI resource set list may include a non-zero power (NZP) CSI-RS resource set and an SS/PBCH block set or may include a CSI-interference measurement (CSI-IM) resource set. Each CSI resource setting may be positioned in a downlink (DL) bandwidth part identified by higher-layer parameter bwp-id and may be connected to CSI report setting in the same downlink bandwidth part. A time domain operation of a CSI-RS resource in the CSI resource configuration may be configured to be one of "aperiodic", "periodic", or "semi-persistent" from the higher-layer parameter resourceType. With regard to the periodic or semi-persistent CSI resource configuration, the number of CSI-RS resource sets may be limited to S=1, and the configured periodicity and slot offset may be given based on a numerology of the downlink bandwidth part identified by bwp-id. One or more CSI resource configurations for channel or interference measurement may be configured for the UE by the base station via higher-layer signaling, and may include, for example, the following CSI resources.

- CSI-IM resource for interference measurement
- NZP CSI-RS resource for interference measurement
- NZP CSI-RS resource for channel measurement

According to an embodiment, with regard to CSI-RS resource sets associated with a resource configuration in which the higher-layer parameter of resourceType is configured to be "aperiodic", "periodic", or "semi-persistent", a trigger state of CSI report configuration having reportType configured to be "aperiodic", and a resource configuration for channel or interference measurement on one or multiple component cells (CCs) may be configured via the higher-layer parameter of CSI-AperiodicTriggerStateList.

According to an embodiment, aperiodic CSI reporting of the UE may be performed using a PUSCH, periodic CSI reporting may be performed using a PUCCH, and semi-persistent CSI reporting may be performed using a PUSCH when triggered or activated via DCI, and may be performed using a PUCCH after activated via a MAC control element (MAC CE). As described above, CSI resource configurations may also be configured to be aperiodic, periodic, or semi-persistent. A combination of CSI reporting setting and CSI resource setting may be supported based on Table 39 below.

[Table 39]

| Triggering /Activation of CSI Reporting for the possible CSI-RS Configurations. | | | |
|---|---|---|---|
| CSI-RS Configuration | Periodic CSI Reporting | Semi-Persistent CSI Reporting | Aperiodic CSI Reporting |
| Periodic CSI-RS | No dynamic triggering/activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

According to an embodiment, aperiodic CSI reporting may be triggered by a "CSI request" field in DCI format 0_1 described above, which corresponds to scheduling DCI for a PUSCH. The UE may monitor a PDCCH, may acquire DCI format 0_1, and may acquire scheduling information of a PUSCH and a CSI request indicator. The CSI request indicator may be configured to have NTS (=0, 1, 2, 3, 4, 5, or 6) bits, and may be determined by higher-layer signaling (reportTriggerSize). One trigger state among one or multiple aperiodic CSI report trigger states which may be configured via higher-layer signaling (CSI-AperiodicTriggerStateList) may be triggered by the CSI request indicator.

According to an embodiment, if all bits in the CSI request field are 0, this may indicate that CSI reporting is not requested.

According to an embodiment, if the number M of configured CSI trigger states in CSI-AperiodicTriggerStateList is greater than 2NTs-1, M CSI trigger states may be mapped to 2NTs-1 trigger states according to a predefined mapping relation, and one trigger state among the 2NTs-1 trigger states may be indicated by the CSI request field.

According to an embodiment, if the number M of configured CSI trigger states in CSI-AperiodicTriggerStateLite is less than or equal to 2NTs-1, one of the M CSI trigger states may be indicated by the CSI request field.

According to an embodiment, Table 40 below shows an example of a relationship between a CSI request indicator and a CSI trigger state that may be indicated by a corresponding indicator.

[Table 40]

| CSI request field | CSI trigger state | CSI-ReportConfigId | CSI-ResourceConfigId |
|---|---|---|---|
| 00 | no CSI request | N/A | N/A |
| 01 | CSI trigger state#1 | CSI report#1 | CSI resource#1, |
| | | CSI report#2 | CSI resource#2 |
| 10 | CSI trigger state#2 | CSI report#3 | CSI resource#3 |
| 11 | CSI trigger state#3 | CSI report#4 | CSI resource#4 |

According to an embodiment, the UE may measure a CSI resource in a CSI trigger state triggered via the CSI request field, and generate CSI (including, for example, at least one of the CQI, PMI, CRI, SSBRI, LI, RI, or L1-RSRP) therefrom. The UE may transmit the acquired CSI by using the PUSCH scheduled via corresponding DCI format 0_1. If one bit corresponding to an uplink data indicator (UL-SCH indicator) in DCI format 0_1 indicates "1", the UE may multiplex uplink data (UL-SCH) and the acquired CSI on the PUSCH resource scheduled by DCI format 0_1 so as to transmit the same. If one bit corresponding to the uplink data indicator (UL-SCH indicator) in DCI format 0_1 indicates "0", the UE may map only CSI, without uplink data (UL-SCH), to the PUSCH resource scheduled by DCI format 0_1 so as to transmit the same.

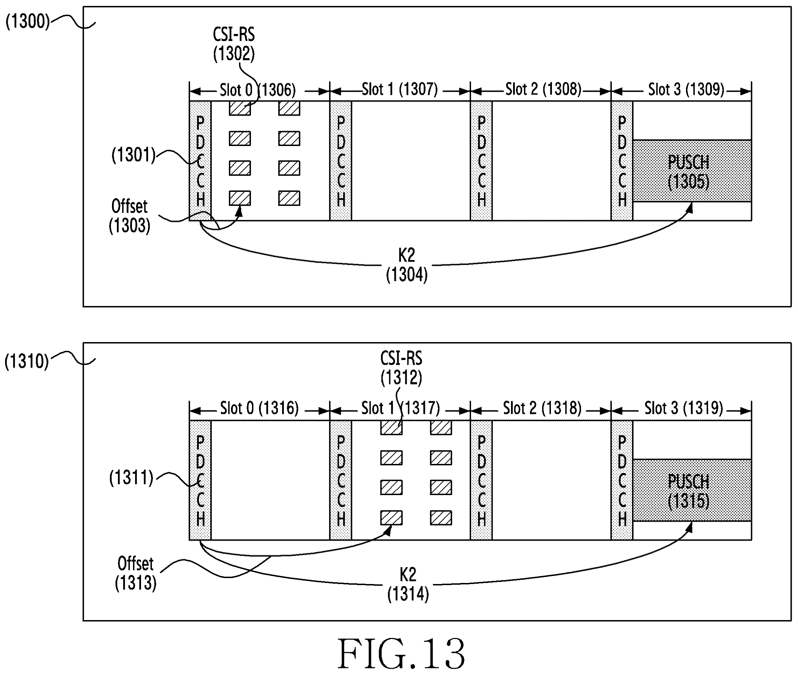

FIG. 13 illustrates an example of an aperiodic CSI reporting method according to an embodiment of the disclosure.

According to an embodiment, in an example 1300 of FIG. 13, a UE may acquire DCI format 0_1 by monitoring a PDCCH 1301, and may acquire scheduling information and CSI request information for a PUSCH 1305 therefrom. The UE may acquire resource information of a CSI-RS 1302 to be measured, from a received CSI request indicator. The UE may determine a time point at which the UE needs to measure a resource of the CSI-RS 1302, based on a time point at which DCI format 0_1 is received, and a parameter for an offset (e.g., aforementioned aperiodicTriggeringOffset) in a CSI resource set configuration (e.g., an NZP CSI-RS resource set configuration (NZP-CSI-RS-ResourceSet)). More specifically, the UE may be configured with an offset value X of the parameter, aperiodicTriggeringOffset, in the NZP-CSI-RS resource set configuration from a base station via higher-layer signaling, and the configured offset value X may refer to an offset between a slot in which DCI triggering aperiodic CSI reporting is received, and a slot in which the CSI-RS resource is transmitted. For example, aperiodicTriggeringOffset parameter values and offset values X may have mapping relationships as shown in Table 41 below.

[Table 41]

| aperiodicTriggeringOffset | Offset X |
|---|---|
| 0 | 0 slot |
| 1 | 1 slot |
| 2 | 2 slots |
| 3 | 3 slots |
| 4 | 4 slots |
| 5 | 16 slots |
| 6 | 24 slots |

According to an embodiment, the example 1300 of FIG. 13 shows an example in which aforementioned offset value X is configured to be 0 (X=0). In this case, the UE may receive the CSI-RS 1302 in a slot (corresponding to slot 0 1306 of FIG. 13) in which DCI format 0_1 triggering aperiodic CSI reporting is received, and may report CSI information, which is measured based on the received CSI-RS, to the base station via the PUSCH 1305. The UE may acquire, from DCI format 0_1, scheduling information (information corresponding to each field of DCI format 0_1 described above) on the PUSCH 1305 for CSI reporting. For example, in DCI format 0_1, the UE may acquire information on a slot in which the PUSCH 1305 is to be transmitted, from time domain resource allocation information for the PUSCH 1305 described above. In the example 1300 of FIG. 13, the UE acquires 3 as a K2 value corresponding to a slot offset value for PDCCH-to-PUSCH, and accordingly, the PUSCH 1305 may be transmitted in slot 3 1309, which is spaced 3 slots apart from slot 0 1306, i.e., a time point at which the PDCCH 1301 has been received.

According to an embodiment, in another example 1310 of FIG. 13, the UE may acquire DCI format 0_1 by monitoring a PDCCH 1311, and may acquire scheduling information and CSI request information for a PUSCH 1315 therefrom. The UE may acquire resource information of a CSI-RS 1312 to be measured, from a received CSI request indicator. The example 1310 of FIG. 13 shows an example in which the offset value X for CSI-RS described above is configured to be 1 (X=1). In this case, the UE may receive the CSI-RS 1312 in a slot (corresponding to slot 0 1316 of FIG. 13) in which DCI format 0_1 triggering aperiodic CSI reporting is received, and may report CSI information, which is measured based on the received CSI-RS, to the base station via the PUSCH 1315.

According to an embodiment, the aperiodic CSI report may include at least one of or both CSI part 1 and CSI part 2, and if the aperiodic CSI report is transmitted via the PUSCH, the aperiodic CSI report may be multiplexed into a transport block. After a CRC is inserted into an input bit of aperiodic CSI for multiplexing, encoding and rate matching may be performed, and then transmission may be performed by mapping to resource elements within the PUSCH in a specific pattern. The CRC insertion may be omitted depending on a coding method or a length of the input bit. The number of modulation symbols, which is calculated for rate matching during multiplexing of CSI part 1 or CSI part 2 included in the aperiodic CSI report, may be calculated as given in Table 42 below.

[Table 42]

For CSI part 1 transmission on PUSCH not using repetition type B with UL-SCH, the number of coded modulation symbols per layer for CSI part 1 transmission, denoted as $Q'_{\text{CSI-part1}}$, is determined as follows:

$$Q'_{\text{CSI-1}} = \min\left\{ \left\lceil \frac{(O_{\text{CSI-1}}+L_{\text{CSI-1}})\cdot\beta_{\text{offset}}^{\text{PUSCH}}\cdot\sum_{l=0}^{N_{\text{symb,all}}^{\text{PUSCH}}-1} M_{\text{sc}}^{\text{UCI}}(l)}{\sum_{r=0}^{C_{UL-SCH}-1} K_r} \right\rceil, \left\lceil \alpha \cdot \sum_{l=0}^{N_{\text{symb,all}}^{\text{PUSCH}}-1} M_{\text{sc}}^{\text{UCI}}(l) \right\rceil - Q'_{ACK/CG-UCI} \right\}$$

...

For CSI part 1 transmission on an actual repetition of a PUSCH with repetition Type B with UL-SCH, the number of coded modulation symbols per layer for CSI part 1 transmission, denoted as $Q'_{\text{CSI-part1}}$, is determined as follows:

$$Q'_{\text{CSI-1}} = \min\left\{ \left\lceil \frac{(O_{\text{CSI-1}} + L_{\text{CSI-1}}) \cdot \beta_{\text{offset}}^{\text{PUSCH}} \cdot \sum_{l=0}^{N_{\text{symb,nominal}}^{\text{PUSCH}}-1} M_{\text{sc,nominal}}^{\text{UCI}}(l)}{\sum_{r=0}^{C_{UL-SCH}-1} K_r} \right\rceil, \alpha \cdot \sum_{l=0}^{N_{\text{symb,nominal}}^{\text{PUSCH}}-1} M_{\text{sc,nominal}}^{\text{UCI}}(l) - Q'_{ACK/CG-UCI}, \sum_{l=0}^{N_{\text{symb,actual}}^{\text{PUSCH}}-1} M_{\text{sc,actual}}^{\text{UCI}}(l) - Q'_{ACK/CG-UCI} \right\}$$

...

For CSI part 1 transmission on PUSCH without UL-SCH, the number of coded modulation symbols per layer for CSI part 1 transmission, denoted as $Q'_{\text{CSI-part1}}$, is determined as follows:

if there is CSI part 2 to be transmitted on the PUSCH,

$$Q'_{\text{CSI-1}} = \min\left\{ \left\lceil \frac{(O_{\text{CSI-1}} + L_{\text{CSI-1}}) \cdot \beta_{\text{offset}}^{\text{PUSCH}}}{R \cdot Q_m} \right\rceil, \sum_{l=0}^{N_{\text{symb,all}}^{\text{PUSCH}}-1} M_{\text{sc}}^{\text{UCI}}(l) - Q'_{\text{ACK}} \right\}$$

EP 4 727 239 A1

(continued)

else

$$Q'_{CSI-1} = \sum_{l=0}^{N_{symb,all}^{PUSCH}-1} M_{sc}^{UCI}(l) - Q'_{ACK}$$

end if

...

For CSI part 2 transmission on PUSCH not using repetition type B with UL-SCH, the number of coded modulation symbols per layer for CSI part 2 transmission, denoted as $Q'_{CSI\text{-}part2}$, is determined as follows:

$$Q'_{CSI-2} = \min\left\{ \left\lceil \frac{(O_{CSI-2}+L_{CSI-2}) \cdot \beta_{offset}^{PUSCH} \cdot \sum_{l=0}^{N_{symb,all}^{PUSCH}-1} M_{sc}^{UCI}(l)}{\sum_{r=0}^{C_{UL\text{-}SCH}-1} K_r} \right\rceil, \left\lceil \alpha \cdot \sum_{l=0}^{N_{symb,all}^{PUSCH}-1} M_{sc}^{UCI}(l) \right\rceil - Q'_{ACK/CG-UCI} - Q'_{CSI-1} \right\}$$

For CSI part 2 transmission on an actual repetition of a PUSCH with repetition Type B with UL-SCH, the number of coded modulation symbols per layer for CSI part 2 transmission, denoted as $Q'_{CSI\text{-}part2}$, is determined as follows:

$$Q'_{CSI-2} = \min\left\{ \left\lceil \frac{(O_{CSI-2}+L_{CSI-2}) \cdot \beta_{offset}^{PUSCH} \cdot \sum_{l=0}^{N_{symb,nominal}^{PUSCH}-1} M_{sc,nominal}^{UCI}(l)}{\sum_{r=0}^{C_{UL\text{-}SCH}-1} K_r} \right\rceil, \left\lceil \alpha \cdot \sum_{l=0}^{N_{symb,nominal}^{PUSCH}-1} M_{sc,nominal}^{UCI}(l) \right\rceil - Q'_{ACK/CG-UCI} - Q'_{CSI-1}, \sum_{l=0}^{N_{symb,actual}^{PUSCH}-1} M_{sc,actual}^{UCI}(l) - Q'_{ACK/CG-UCI} - Q'_{CSI-1} \right\}$$

...

For CSI part 2 transmission on PUSCH without UL-SCH, the number of coded modulation symbols per layer for CSI part 2 transmission, denoted as $Q'_{CSI\text{-}part2}$, is determined as follows:

$$Q'_{CSI-2} = \sum_{l=0}^{N_{symb,all}^{PUSCH}-1} M_{sc}^{UCI}(l) - Q'_{ACK} - Q'_{CSI-1}$$

According to an embodiment, particularly in the case of PUSCH repetition type A and B transmission schemes, the UE may multiplex the aperiodic CSI report only into the first repetition transmission among PUSCH repetition transmissions and then transmit the same. This is because aperiodic CSI report information to be multiplexed is encoded in a polar code scheme, and in this case, each PUSCH repetition needs to have the same frequency and time resource allocation in order to multiplex the aperiodic CSI report information on multiple PUSCH repetitions. Particularly, in the case of PUSCH repetition type B transmission, since each actual repetition may have different OFDM symbol durations, the aperiodic CSI report may be multiplexed only on the first repetition and then transmitted.

According to an embodiment, for PUSCH repetition type B transmission, if the UE receives DCI for activation of semi-persistent CSI reporting or scheduling of aperiodic CSI reporting without scheduling for a transport block, the UE may assume that a value of nominal repetition is 1 even if the number of PUSCH repetition transmissions, which is configured via higher-layer signaling, is greater than 1. In addition, if the aperiodic or semi-persistent CSI reporting is scheduled or activated without scheduling for a transport block, based on PUSCH repetition type B transmission, the UE may expect that a first nominal repetition is identical to the first actual repetition. With regard to the PUSCH transmitted while including semi-persistent CSI, based on repeated PUSCH transmission scheme B, without scheduling for DCI after the semi-persistent CSI reporting has been activated via the DCI, if the first nominal repetition is different from the first actual repetition, transmission for the first nominal repetition may be ignored.

54

**[PUSCH: regarding repetition transmission]**

Hereinafter, repetition transmission of an uplink data channel in a 5G system will be described in detail. A 5G system supports two types of uplink data channel repetition transmission methods, PUSCH repetition type A transmission and PUSCH repetition type B transmission. One of PUSCH repetition type A transmission and PUSCH repetition type B transmission may be configured for a UE through upper layer signaling.

**PUSCH repetition type A transmission**

As described above, the symbol length of an uplink data channel and the location of the start symbol may be determined by a time domain resource allocation method in one slot, and a base station may notify a UE of the number of repetition transmissions through upper layer signaling (for example, RRC signaling) or L1 signaling (for example, DCI).
According to an embodiment, based on the number of repetition transmissions received from the base station, the UE may repetitively transmit an uplink data channel having the same length and start symbol as the configured uplink data channel, in a continuous slot. If the base station configured a slot as a downlink for the UE, or if at least one of symbols of the uplink data channel configured for the UE is configured as a downlink, the UE may omit uplink data channel transmission, but may count the number of repeated transmissions of the uplink data channel.

**PUSCH repetition type B transmission**

As described above, the symbol length of an uplink data channel and the location of the start symbol may be determined by a time domain resource allocation method in one slot, and a base station may notify a UE of the number of repetition transmissions (numberofrepetitions) through upper layer signaling (for example, RRC signaling) or L1 signaling (for example, DCI).
According to an embodiment, the nominal repetition of the uplink data channel is determined as follows, based on the previously configured start symbol and length of the uplink data channel. The slot in which the $n^{th}$ nominal repetition starts is given by $K_s + \left\lfloor \dfrac{S+n\cdot L}{N_{symb}^{slot}} \right\rfloor$, and the symbol starting in that slot is given by $mod\left(S + n \cdot L, N_{symb}^{slot}\right)$. The slot in which the $n^{th}$ nominal repetition ends is given by $K_s + \left\lfloor \dfrac{S+(n+1)\cdot L-1}{N_{symb}^{slot}} \right\rfloor$, and the symbol ending in that slot is given by $mod\left(S + (n + 1) \cdot L - 1, N_{symb}^{slot}\right)$. In this regard, n=0,...., numberofrepetitions-1, S refers to the start symbol of the configured uplink data channel, and L refers to the symbol length of the configured uplink data channel. $K_s$ refers to the

slot in which PUSCH transmission starts, and $N_{symb}^{slot}$ refers to the number of symbols per slot.
According to an embodiment, the UE may determine an invalid symbol for PUSCH repeated transmission type B. A symbol configured as a downlink by tdd-UL-DL-ConfigurationCommon or tdd-UL-DL-ConfigurationDedicated is determined as the invalid symbol for PUSCH repetition type B transmission. Additionally, the invalid symbol may be configured in an upper layer parameter (for example, InvalidSymbolPattern). The upper layer parameter (for example, InvalidSymbolPattern) may provide a symbol level bitmap across one or two slots, thereby configuring the invalid symbol. In the bitmap, 1 represents the invalid symbol. Additionally, the periodicity and pattern of the bitmap may be configured through the upper layer parameter (for example, InvalidSymbolPattern). If an upper layer parameter (for example,Invalidsymbolpattern) is configured, and if parameter InvalidSymbolPatternIndicator-ForDCIFormat0_1 or InvalidSymbolPatternIndicator-ForDCIFormat0_2 indicates 1, the UE applies an invalid symbol pattern, and if the above parameter indicates 0, the UE does not apply the invalid symbol pattern. If an upper layer parameter(for example, InvalidSymbolPattern) is configured, and if parameter InvalidSymbolPatternIndicator-ForDCIFormat0_1 or InvalidSymbolPatternIndicator-ForDCIFormat0_2 is not configured, the UE may apply the invalid symbol pattern.
According to an embodiment, after an invalid symbol is determined, the UE may consider, with regard to each nominal repetition, that symbols other than the invalid symbol are valid symbols. If one or more valid symbols are included in each nominal repetition, the nominal repetition may include one or more actual repetitions. Each actual repetition includes a set of consecutive valid symbols available for PUSCH repeated transmission type B in one slot.

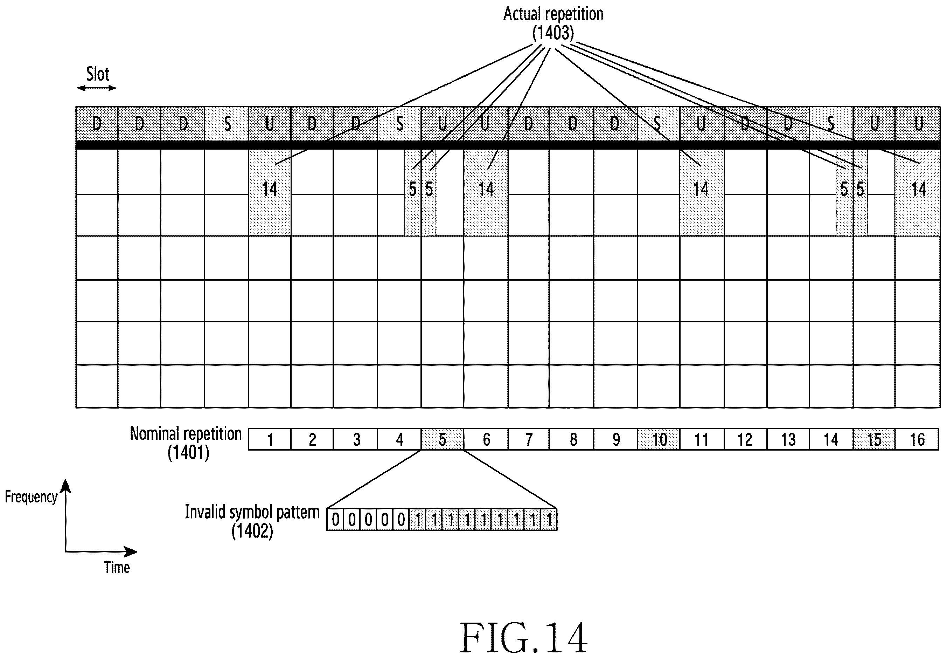

FIG. 14 illustrates an example of PUSCH repetition type B transmission in a wireless communication system according to an embodiment of the disclosure.
According to an embodiment, the UE may receive the following configurations: the start symbol S of an uplink data channel is 0, the length L of the uplink data channel is 14, and the number of repeated transmissions is 16. In this case, nominal repetitions may appear in 16 consecutive slots (1401). Thereafter, the UE may determine that the symbol configured as a downlink symbol in each nominal repetition 1401 is an invalid symbol.

According to an embodiment, the UE may determine that symbols configured as 1 in the invalid symbol pattern 1402 are invalid symbols. If valid symbols other than invalid symbols in respective nominal repetitions constitute one or more consecutive symbols in one slot, they are configured and transmitted as actual repetitions (1403).

According to an embodiment, with regard to PUSCH repetition transmission, additional methods may be defined in NR Release 16 with regard to UL grant-based PUSCH transmission and configured grant-based PUSCH transmission, across slot boundaries, as follows:

- Method 1 (mini-slot level repetition): through one UL grant, two or more PUSCH repetition transmissions are scheduled inside one slot or across the boundary of consecutive slots. In connection with method 1, time domain resource allocation information inside DCI indicates resources of the first repetition transmission. In addition, time domain resource information of remaining repetition transmissions may be determined according to time domain resource information of the first repetition transmission, and the uplink or downlink direction determined with regard to each symbol of each slot. Each repetition transmission may occupy consecutive symbols.

- Method 2 (multi-segment transmission): through one UL grant, two or more PUSCH repetition transmissions are scheduled in consecutive slots. Transmission no. 1 is designated for each slot, and the start point or repetition length differs between respective transmissions. In method 2, time domain resource allocation information inside DCI indicates the start point and repetition length of all repetition transmissions. In the case of performing repetition transmissions inside a single slot through method 2, if there are multiple bundles of consecutive uplink symbols in the corresponding slot, respective repetition transmissions may be performed with regard to respective uplink symbol bundles. If there is a single bundle of consecutive uplink symbols in the corresponding slot, PUSCH repetition transmission is performed once according to the method of NR Release 15.

- Method 3: two or more PUSCH repetition transmissions are scheduled in consecutive slots through two or more UL grants. Transmission no. 1 may be designated with regard to each slot, and the nth UL grant may be received before PUSCH transmission scheduled by the (n-1)th UL grant is over.

- Method 4: through one UL grant or one configured grant, one or multiple PUSCH repetition transmissions inside a single slot, or two or more PUSCH repetition transmissions across the boundary of consecutive slots may be supported. The number of repetitions indicated to the UE by the base station is only a nominal value, and the UE may actually perform a larger number of PUSCH repetition transmissions than the nominal number of repetitions. Time domain resource allocation information inside DCI or configured grant refers to resources of the first repetition transmission indicated by the base station. Time domain resource information of remaining repetition transmissions may be determined with reference to resource information of the first repetition transmission and the uplink or downlink direction of symbols. If time domain resource information of repetition transmission indicated by the base station spans a slot boundary or includes an uplink/downlink switching point, the corresponding repetition transmission may be divided into multiple repeated transmissions. One repetition transmission may be included in one slot with regard to each uplink period.

**[PUSCH: frequency hopping process]**

Hereinafter, frequency hopping of a physical uplink shared channel (PUSCH) in a 5G system will be described in detail.

According to an embodiment, 5G may support two kinds of PUSCH frequency hopping methods with regard to each PUSCH repeated transmission type. First of all, in PUSCH repeated transmission type A, intra-slot frequency hopping and inter-slot frequency hopping are supported, and in PUSCH repeated transmission type B, inter-repetition frequency hopping and inter-slot frequency hopping are supported.

According to an embodiment, the intra-slot frequency hopping method supported in PUSCH repetition type A transmission may include a method in which a UE transmits allocated resources in the frequency domain, after changing the same by a configured frequency offset, by two hops in one slot. The start RB of each hop in connection with intra-slot frequency hopping may be expressed by Equation 4 below.

[Equation 4]

$$RB_{start} = \begin{cases} RB_{start} & i = 0 \\ \left(RB_{start} + RB_{offset}\right) mod N_{BWP}^{size} & i = 1 \end{cases}$$

According to an embodiment, in Equation 4, i=0 and i=1 may denote the first and second hops, respectively, and

RB$_{start}$ may denote the start RB in a UL BWP and may be calculated from a frequency resource allocation method. RB$_{offset}$ denotes a frequency offset between two hops through an higher layer parameter. The number of symbols of the first hop may be represented by $\left\lfloor N_{symb}^{PUSCH,s}/2 \right\rfloor$, and number of symbols of the second hop may be represented by $N_{symb}^{PUSCH,s} - \left\lfloor N_{symb}^{PUSCH,s}/2 \right\rfloor$. $N_{symb}^{PUSCH,s}$ is the length of PUSCH transmission in one slot and is expressed by the number of OFDM symbols.

Next, according to an embodiment, the inter-slot frequency hopping method supported in PUSCH repetition type A and type B transmissions is a method in which the UE transmits allocated resources in the frequency domain, after changing the same by a configured frequency offset, in each slot. The start RB during a slot in connection with inter-slot frequency hopping may be expressed by Equation 5 below.

[Equation 5]

$$RB_{start}(n_s^{\mu}) = \begin{cases} RB_{start} & n_s^{\mu} \bmod 2 = 0 \\ (RB_{start} + RB_{offset}) \bmod N_{BWP}^{size} & n_s^{\mu} \bmod 2 = 1 \end{cases}$$

In Equation 5, $n_s^{\mu}$ denotes the current slot number during multi-slot PUSCH transmission, and RB$_{start}$ denotes the start RB inside a UL BWP and is calculated from a frequency resource allocation method. RB$_{offset}$ denotes a frequency offset between two hops through an higher layer parameter.

Next, according to an embodiment, the inter-repetition frequency hopping method supported in PUSCH repetition type B transmission is a method in which resources allocated in the frequency domain regarding one or multiple actual repetitions in each nominal repetition are moved by a configured frequency offset and then transmitted. The index RBstart(n) of the start RB in the frequency domain regarding one or multiple actual repetitions in the nth nominal repetition may follow Equation 6 given below.

[Equation 6]

$$RB_{start}(n) = \begin{cases} RB_{start} & n \bmod 2 = 0 \\ (RB_{start} + RB_{offset}) \bmod N_{BWP}^{size} & n \bmod 2 = 1 \end{cases}$$

In Equation 6, n denotes the index of nominal repetition, and RB$_{offset}$ denotes an RB offset between two hops through an higher layer parameter.

**[Regarding UE capability report]**

In LTE and NR, a UE may perform a procedure in which, while being connected to a serving base station, the UE may report capability supported by the UE to the corresponding base station. In the following description, the above-described procedure will be referred to as a UE capability report.

According to an embodiment, the base station may transfer a UE capability enquiry message to the UE in a connected state so as to request a capability report. The above-described message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times.

According to an embodiment, in next-generation mobile communication systems, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

According to an embodiment, upon receiving the UE capability report request from the base station in the above step, the UE may configure UE capability according to band information and RAT type requested by the base station. The method in which the UE configures UE capability in an NR system is summarized below.

1. If the UE receives a list regarding LTE and/or NR bands from the base station at a UE capability request,the UE constructs band combinations (BCs) regarding EN-DC and NR standalone(SA). That is, the UE may configure a candidate list of BCs regarding EN-DC and NR SA, based on bands received from the base station at a request through FreqBandList. In addition, bands have priority in the order described in FreqBandList.

2. If the base station sets "eutra-nr-only" flag or "eutra" flag and requests a UE capability report, the UE removes everything related to NR SA BCs from the configured BC candidate list. Such an operation may occur only if an LTE base station (eNB) requests "eutra" capability.

3. The UE may then remove fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same may be omitted. This step is applied in MR-DC as well, that is, LTE bands are also applied. BCs remaining after the above step constitute the final "candidate BC list".

4. The UE may select BCs appropriate for the requested RAT type from the final "candidate BC list" and select BCs to report. In this step, the UE may configure supportedBandCombinationList in a determined order. That is, the UE configures BCs and UE capability to report according to a preconfigured rat-Type order (nr -> eutra-nr -> eutra). In addition, the UE may configure featureSetCombination regarding the configured supportedBandCombinationList, and configure a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be obtained from feature set combinations of containers of UE-NR-Capabilities and UE-MRDC-Capabilities.

5. If the requested RAT type is eutra-nr and has an influence, featureSetCombinations is included on both containers of UE-MRDC-Capabilities and UE-NR-Capabilities. However, the feature set of NR is included only in UE-NR-Capabilities.

According to an embodiment, after the UE capability is configured, the UE may transfer a UE capability information message including the UE capability to the base station. The base station may perform scheduling and transmission/reception management appropriate for the UE, based on the UE capability received from the UE.

**[Regarding CA/DC]**

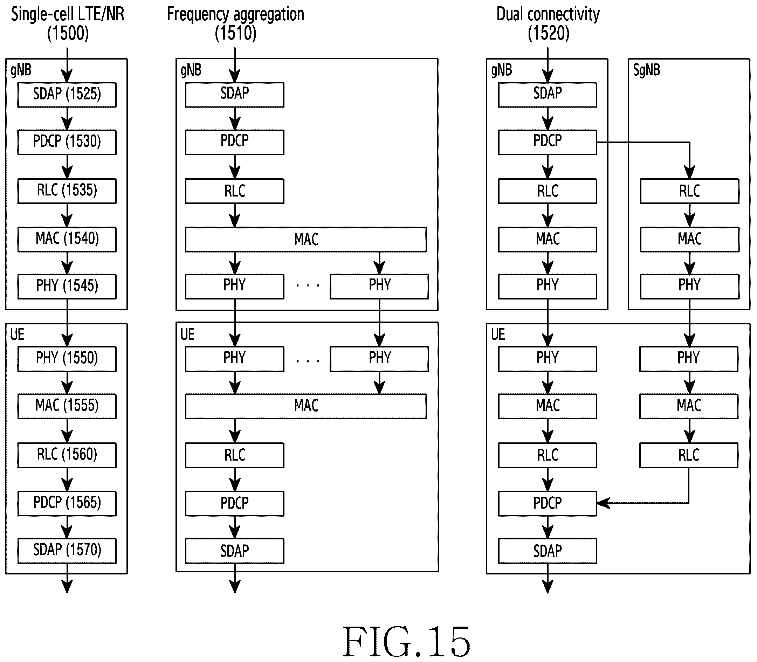

FIG. 15 illustrates radio protocol structures of a base station and a UE in single cell, carrier aggregation, and dual connectivity situations according to an embodiment of the disclosure.

Referring to FIG. 15, the radio protocol of a next-generation mobile communication system includes an NR service data adaptation protocol (SDAP) 1525 or 1570, an NR packet data convergence protocol (PDCP) 1530 or 1565, an NR radio link control (RLC) 1535or 1560, and an NR medium access controls (MAC) 1540 or 1555, on each of UE and NR base station sides.

According to an embodiment, the main functions of the NR SDAP 1525 or 1570 may include at least some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

According to an embodiment, the main functions of the NR PDCP 1530 or 1565 may include at least some of functions below.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

According to an embodiment, the reordering of the NR PDCP device refers to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

According to an embodiment, the main functions of the NR RLC 1535 or 1560 may include some of functions below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

According to an embodiment, the in-sequence delivery of the NR RLC device may refer to a function of, if there is a lost RLC PDU, delivering only RLC SDUs before the lost RLC PDU to the upper layer in sequence.

According to an embodiment, the in-sequence delivery of the NR RLC device may include a function of reassembling and delivering multiple RLC SDUs received, into which one original RLC SDU has been segmented, may include a function of reordering the received RLC PDUs with reference to the RLC sequence number (SN) or PDCP sequence number(SN), may include a function of recording RLC PDUs lost as a result of reordering, may include a function of reporting the state of the lost RLC PDUs to the transmitting side, and may include a function of requesting retransmission of the lost RLC PDUs.

According to an embodiment, the in-sequence delivery of the NR RLC device may include a function of, if there is a lost RLC SDU, successively delivering only RLC SDUs before the lost RLC SDU to the upper layer, and may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all RLC SDUs received until now to the upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

According to an embodiment, the out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

According to an embodiment, the NR MAC 1540 or 1555 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

According to an embodiment, an NR PHY layer 1545 or 1550 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

According to an embodiment, the detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as 1500. Contrarily, in case that the base station transmits data to the UE, based on carrier aggregation (CA) which uses multiple carriers in a single TRP, the base station and the UE may use a protocol structure which has a single structure up to the RLC, but multiplexes the PHY layer through a MAC layer, such as 1510. As another example, in case that the base station transmits data to the UE, based on dual connectivity (DC) which uses multiple carriers in multiple TRPs, the base station and the UE may use a protocol structure which has a single structure up to the RLC, but multiplexes the PHY layer through a MAC layer, such as 1520.

Referring to the above description relating to the PDCCH and beam configuration, PDCCH repetitive transmission is not supported in current Rel-15 and Rel-16 NR, and it may be thus difficult to achieve required reliability in a scenario requiring high reliability, such as URLLC. The disclosure improves the PDCCH reception reliability of a UE by providing a PDCCH repetition transmission method through multiple transmission and reception points (TRPs). Specific methods thereof will be described hereinafter through the embodiments below.

According to an embodiment, embodiments of the disclosure will be described below in detail in conjunction with the accompanying drawings. The contents of the disclosure may be applied to FDD and TDD systems. As used herein, upper signaling (or upper layer signaling) is a method for transferring signals from a base station to a UE by using a downlink data channel of a physical layer, or from the UE to the base station by using an uplink data channel of the physical layer, and may also be referred to as "RRC signaling", "PDCP signaling", or "medium access control (MAC) control element (MAC CE)".

According to an embodiment, in the following description of the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. In the following description, for the sake of descriptive convenience, non-coherent joint transmission (NC-JT) case may refer to a case in which the UE receives a PDSCH to which cooperative communication is applied, based on conditions similar to those described above.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through various embodiments, but they are not independent of each other, and one or more embodiments may be applied simultaneously or in combination.

**[Regarding NC-JT**

According to an embodiment of the disclosure, non-coherent joint transmission (NC-JT) may be used for the UE to receive PDSCHs from multiple TRPs.

According to an embodiment, a 5G wireless communication system may support all of the service having very short transmission latency and the service requiring a high connectivity density as well as the service requiring a high transmission rate unlike the conventional system. In a wireless communication network including multiple cells, transmission and reception points (TRPs), or beams, cooperative communication (coordinated transmission) between the respective cells, TRPs, or/and beams may satisfy various service requirements by enhancing the strength of a signal received by a UE or efficiently performing interference control between the respective cells, TRPs, or/and beams.

According to an embodiment, joint transmission (JT) is a representative transmission technology for the coordinated communication and may increase the strength of a signal received by the UE or throughput by transmitting signals to one UE through different cells, TRPs, and/or beams. Here, a channel between respective cells, TRPs, and/or beam and the UE may have different characteristics, and particularly, non-coherent joint transmission (NC-JT) supporting non-coherent precoding between respective cells, TRPs, and/or beams may need individual precoding, MCS, resource allocation, and TCI indication according to the channel characteristics for each link between respective cells, TRPs, and/or beam and the UE.

According to an embodiment, the above-described NC-JT transmission may be applied to at least one of a downlink data channel (PDSCH), a downlink control channel (PDCCH), an uplink data channel (PUSCH), and an uplink control channel (PUCCH). During PDSCH transmission, transmission information such as precoding, MCS, resource allocation, and TCI may be indicated through DL DCI, and should be independently indicated for each cell, TRP, and/or beam for the NC-JT. This is a significant factor that increases payload required for DL DCI transmission, which may have a bad influence on reception performance of a PDCCH for transmitting the DCI. Accordingly, in order to support JT of the PDSCH, carefully designing a tradeoff between an amount of DCI information and reception performance of control information is required.

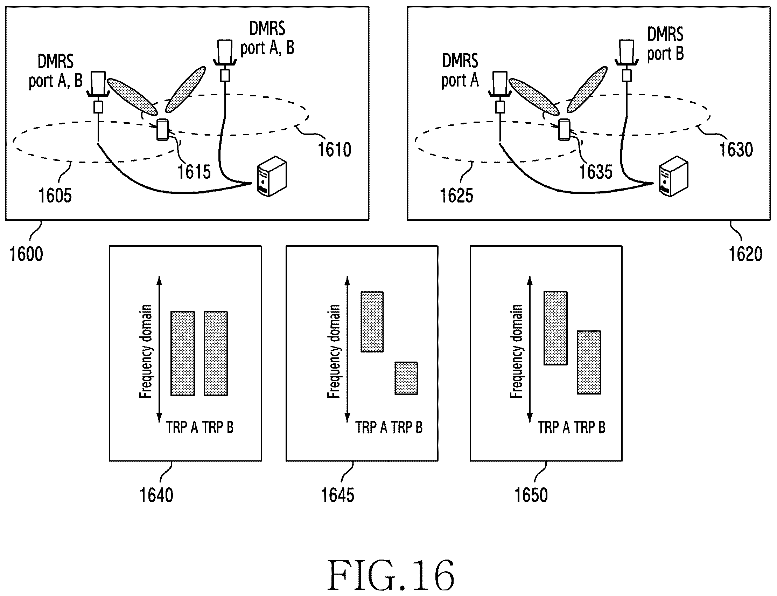

FIG. 16 illustrates an example of an antenna port configuration and resource allocation for cooperative communication in a wireless communication system according to an embodiment of the disclosure. Mor specifically, FIG. 16 illustrates an example of an antenna port configuration and resource allocation for PDSCH transmission using cooperative communication.

According to an embodiment, referring to FIG. 16, the example for PDSCH transmission is described for each scheme of joint transmission (JT), and examples for allocating radio resources for each TRP are described.

According to an embodiment, referring to FIG. 16, an example 1600 for coherent joint transmission (C-JT) supporting coherent precoding between respective cells, TRPs, or/and beams is illustrated.

According to an embodiment, in the case of C-JT, a TRP A 1605 and a TRP B 1610 transmit single data (PDSCH) to a UE 1615, and multiple TRPs may perform joint precoding. This may signify that the TRP A 1005 and a TRP B 1610 transmit DMRSs through the same DMRS ports in order to transmit the same PDSCH. For example, the TRP A 1605 and a TRP B 1610 may transmit DMRSs to the UE through a DMRS port A and a DMRS port B, respectively. In this case, the UE may receive one piece of DCI for reception of one PDSCH demodulated based on the DMRSs transmitted via DMRS port A and DMRS port B.

According to an embodiment, FIG. 16 illustrates an example 1620 of non-coherent joint transmission (NC-JT) that supports non-coherent precoding between each cell, TRP or/and beam for PDSCH transmission.

According to an embodiment, in the case of NC-JT, the PDSCH is transmitted to a UE 1635 per cell, per TPR, and/or per beam, and individual precoding may be applied to each PDSCH. Respective cells, TRPs, and/or beams may transmit different PDSCHs or different PDSCH layers to the UE, thereby improving throughput compared to single cell, TRP, and/or beam transmission. Furthermore, the respective cells, TRPs, and/or beams may repeatedly transmit the same PDSCH to the UE, thereby improving reliability as compared to single cell, TRP, and/or beam transmission. For the sake of convenience of description, the cell, TRP, and/or beam are commonly called a TRP.

In this case, according to an embodiment, various radio resource allocations may be considered, such as a case N040 where frequency and time resources used in multiple TRPs for PDSCH transmission are all identical, a case 1645 where frequency and time resources used in multiple TRPs do not overlap at all, and a case 1650 where some of frequency and time resources used in multiple TRPs overlap.

According to an embodiment of the disclosure, in order to support NC-JT, DCI of various types, structures, and relations may be considered to assign multiple PDSCHs simultaneously to a single UE.

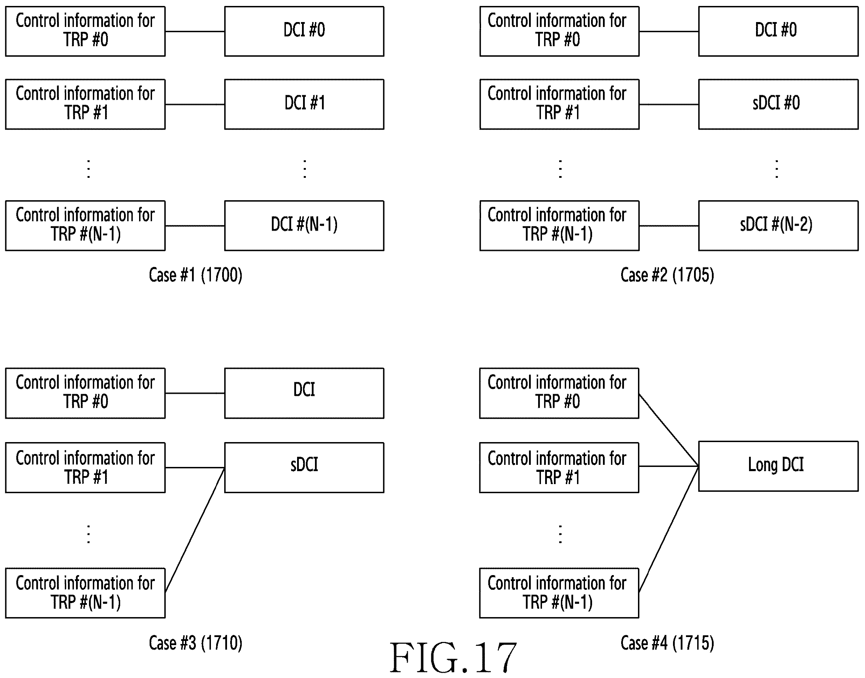

FIG. 17 illustrates an example of a downlink control information (DCI) configuration for cooperative communication in a wireless communication system according to an embodiment of the disclosure. More specifically, FIG. 17 illustrates an example of a downlink control information (DCI) configuration for NC-JT in which respective TRPs transmit different PDSCHs or different PDSCH layers to a UE.

According to an embodiment, referring to FIG. 17, case #1 1700 is an example in which, in a situation where different N-1 PDSCHs are transmitted from N-1 additional TRPs (TRP#1 to TRP#N-1) in addition to a serving TRP (TRP#0) used during single PDSCH transmission, control information for PDSCHs transmitted in the additional N-1 TRPs is transmitted independently of control information for a PDSCH transmitted in the serving TRP. That is, the UE may acquire control information for PDSCHs transmitted from different TRPs (TRP#0 to TRP#N-1) via independent pieces of DCI (DCI#0 to DCI#N-1). Formats between the independent pieces of DCI may be the same or different from each other, and payloads between the pieces of DCI may also be the same or different from each other. In case #1 described above, a degree of freedom of PDSCH control or allocation may be completely guaranteed, but when respective pieces of the DCI are transmitted by different TRPs, a difference between DCI coverages may be generated and reception performance may deteriorate.

According to an embodiment, case #2 1705 is an example in which pieces of control information (DCI) for PDSCHs of (N-1) additional TRPs are transmitted and each piece of the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, DCI #0 that is control information for a PDSCH transmitted from the serving TRP (TRP #0) may include all information elements of DCI format 1_0, DCI format 1_1, and DCI format 1_2, but shortened DCIs (hereinafter, referred to as sDCIs) (sDCI #0 to sDCI #(N-2)) that are control information for PDSCHs transmitted from the cooperative TRPs (TRP #1 to TRP #(N-1)) may include only some of the information elements of DCI format 1_0, DCI format 1_1, and DCI format 1_2. Accordingly, in the case of sDCI for transmission of the control information for the PDSCHs transmitted from the cooperative TRPs, a payload is small compared to normal DCI (nDCI) for transmission of the control information related to the PDSCH transmitted from the serving TRP, so that reserved bits may be included in comparison with nDCI.

According to an embodiment, in the case of sDCI for transmission of the control information for the PDSCHs transmitted from the cooperative TRPs, a payload is small compared to normal DCI (nDCI) for transmission of the control information related to the PDSCH transmitted from the serving TRP, so that reserved bits may be included in comparison with nDCI.

According to an embodiment, case #3 1710 is an example in which one piece of control information for PDSCHs of (N-1) additional TRPs is transmitted and the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

According to an embodiment, for example, in the case of DCI #0 that is control information for the PDSCH transmitted from the serving TRP (TRP #0), all information elements of DCI format 1_0, DCI format 1_1, and DCI format 1_2 may be included, and in the case of control information for PDSCHs transmitted from cooperative TRPs (TRP #1 to TRP #(N-1)), only some of the information elements of DCI format 1_0, DCI format 1_1, and DCI format 1_2 may be gathered in one "secondary" DCI (sDCI) and transmitted. For example, the sDCI may include at least one piece of HARQ-related information, such as frequency domain resource assignment, time domain resource assignment, and MCS of cooperative TRPs. In addition, information that is not included in the sDCI such as a bandwidth part (BWP) indicator and a carrier indicator may follow the DCI (DCI #0, normal DCI, or nDCI) of the serving TRP.

According to an embodiment, in case #3 1710, a degree of freedom of PDSCH control or allocation may be limited according to content of the information elements included in the sDCI but reception performance of the sDCI can be controlled, and case #3 1130 may have smaller complexity of DCI blind decoding of the UE compared to case #1 1100 or case #2 1105.

According to an embodiment, case #4 1715 is an example in which control information for PDSCHs transmitted from (N-1) additional TRPs is transmitted in the DCI (long DCI) that is the same as that of control information for the PDSCH transmitted from the serving TRP in a situation in which different (N-1) PDSCHs are transmitted from the (N-1) additional TRPs (TRP #1 to TRP # (N-1)) other than the serving TRP (TRP #0) used for single PDSCH transmission. That is, the UE may acquire control information for PDSCHs transmitted from different TRPs (TRP #0 to TRP # (N-1)) through single DCI. In case #4 1715, complexity of DCI blind decoding of the UE may not be increased, but a degree of freedom of PDSCH control or allocation may be low since the number of cooperative TRPs is limited according to long DCI payload restriction.

In the following description and embodiments, sDCI may refer to various pieces of supplementary DCI such as shortened DCI, secondary DCI, or normal DCI (DCI formats 1_0 and 1_1 described above) including PDSCH control information transmitted in the cooperative TRP, and unless specific restriction is mentioned, the corresponding description may be similarly applied to the various pieces of supplementary DCI.

In the following description and embodiments, Case #1 1700, case #2 1705, and case #3 1710 in which one or more pieces of DCI (or PDCCHs) are used to support NC-JT may be classified as multiple PDCCH-based NC-JT, and case #4 1715 in which single DCI (or PDCCH) is used to support NC-JT may be classified as single PDCCH-based NC-JT. In multiple PDCCH-based PDSCH transmission, a CORESET for scheduling the DCI of the serving TRP (TRP #0) is separated from CORESETs for scheduling the DCI of cooperative TRPs (TRP #1 to TRP #(N-1)). A method of distinguishing the CORESETs may include a distinguishing method through a higher-layer indicator for each CORESET and a distinguishing method through a beam configuration for each CORESET. Furthermore, in single PDCCH-based NC-JT, single DCI schedules a single PDSCH having multiple layers instead of scheduling multiple PDSCHs, and the multiple layers may be transmitted from multiple TRPs. In this case, association between a layer and a TRP transmitting the corresponding layer may be indicated through a transmission configuration indicator (TCI) indication for the layer.

In embodiments of the disclosure, "cooperative TRP" may be replaced with various terms, such as "cooperative panel" or "cooperative beam" when actually applied.

According to embodiments of the disclosure, "the case in which NC-JT is applied" may be variously interpreted as "the case in which the UE simultaneously receives one or more PDSCHs in one BWP", "the case in which the UE simultaneously receives PDSCHs based on two or more transmission configuration indicator (TCI) indications in one BWP", and "the case in which the PDSCHs received by the UE are associated with one or more DMRS port groups" according to circumstances, but is used by one expression for convenience of description.

In the disclosure, a radio protocol structure for NC-JT may be used in various ways according to a TRP deployment scenario. For example, if there is a small backhaul delay or no backhaul delay between cooperative TRPs, a method (CA-like method) using a structure based on MAC layer multiplexing is possible in a similar manner to reference numeral "1510" of FIG.15. Contrarily, if a backhaul delay between cooperative TRPs is so large that the backhaul delay cannot be ignored (e.g., when a time of 2ms or longer is required for exchange of information, such as CSI, scheduling, and HARQ-ACK, between the cooperative TRPs), a method (DC-like method) of securing characteristics robust to a delay by using an independent structure for each TRP starting from the RLC layer is possible in a similar manner to reference numeral "1520" of FIG. 15.

According to an embodiment, the UE supporting C-JT/NC-JT may receive a C-JT/NC-JT-related parameter or a setting value from a higher-layer configuration and set an RRC parameter of the UE based on the same. For the higher-layer configuration, the UE may use a UE capability parameter, for example, tci-StatePDSCH. Here, the UE capability parameter, for example, tci-StatePDSCH may define TCI states for PDSCH transmission, the number of TCI states may be configured as 4, 8, 16, 32, 64, and 128 in FR1 and as 64 and 128 in FR2, and a maximum of 8 states which can be indicated by 3 bits of a TCI field of the DCI may be configured through a MAC CE message among the configured numbers. The maximum value of 128 may refer to a value indicated by maxNumberConfiguredTCI statesPerCC in the parameter of tci-StatePDSCH included in capability signaling of the UE. In this way, a series of configuration procedures from the higher-layer configuration to the MAC CE configuration may be applied to a beamforming change command or a beamforming indication for at least one PDSCH in one TRP.

### [Multi-DCI-based Multi-TRP]

According to an embodiment of the disclosure, a downlink control channel for NC-JT transmission may be configured based on multiple PDCCHs.

According to an embodiment, in NC-JT based on multiple PDCCHs, there may be a CORESET or a search space separated for each TRP when the DCI for scheduling the PDSCH of each TRP is transmitted. The CORESET or the search space for each TRP can be configured according to at least one of the following configuration cases.

- Higher-layer index configuration for each CORESET: CORESET configuration information configured via a higher layer may include an index value, and a TRP for PDCCH transmission in a corresponding CORESET may be distinguished by a configured index value for each CORESET. That is, in a set of CORESETs having the same higher-layer index value, it may be considered that the same TRP transmits the PDCCH or that the PDCCH for scheduling the PDSCH of the same TRP is transmitted. The index for each CORESET may be named CORESETPoolIndex, and it may be considered that the PDCCH is transmitted from the same TRP in CORESETs in which the same CORESETPoolIndex value is configured. In the case of a CORESET for which no CORESETPoolIndex value has been configured, it may be considered that a default value has been configured for CORESETPoolIndex, and the default value may be 0.
- Multiple-PDCCH-Config configuration: Multiple values of PDCCH-Config may be configured in one BWP, and each PDCCH-Config may include a PDCCH configuration for each TRP. That is, a list of CORESETs for each TRP and/or a list of search spaces for each TRP may be included in one PDCCH-Config, and it may be considered that one or more CORESETs and one or more search spaces included in one PDCCH-Config correspond to a specific TRP.
- CORESET beam/beam group configuration: A TRP corresponding to a corresponding CORESET may be distinguished via a beam or beam group configured for each CORESET. For example, if the same TCI state is configured for multiple CORESETs, it may be considered or determined that the CORESETs are transmitted via the same TRP, or that a PDCCH for scheduling of a PDSCH of the same TRP is transmitted in the corresponding CORESET.
- Search space beam/beam group configuration: A beam or beam group may be configured for each search space, and a TRP for each search space may be distinguished based on the configured beam or beam group. For example, if the same beam/beam group or TCI state is configured in a plurality of search spaces, the same TRP may transmit the PDCCH in the corresponding search space or a PDCCH for scheduling a PDSCH of the same TRP may be transmitted in the corresponding search space.

As described above, by distinguishing the CORESETs or search spaces according to TRPs, it may be possible to classify PDSCH and HARQ-ACK information for each TRP, and based on this, it may be possible to independently generate an HARQ-ACK codebook and independently use a PUCCH resource for each TRP.

The above-described configuration may be independent for each cell or each BWP. For example, while two different CORESETPoolIndex values may be configured in PCell, no CORESETPoolIndex value may be configured in a specific SCell. In this case, NC-JT may be configured in the PCell, but NC-JT may not be configured in the SCell in which no CORESETPoolIndex value is configured.

**[Single-DCI-based multi-TRP]**

According to another embodiment of the disclosure, a downlink beam for NC-JT transmission may be configured based on a single PDCCH.

According to an embodiment, in single-PDCCH-based NC-JT, PDSCHs transmitted by multiple TRPs may be scheduled via one piece of DCI. In this case, the number of TCI states may be used for a method of indicating the number of TRPs which transmit corresponding PDSCHs. That is, when the number of TCI states indicated by the DCI for scheduling the PDSCHs is 2, single PDCCH-based NC-JT transmission may be considered, and when the number of TCI states is 1, single-TRP transmission may be considered.

According to an embodiment, the TCI states indicated by the DCI may correspond to one or two TCI states among TCI states activated by the MAC CE. If the TCI states of the DCI correspond to two TCI states activated by the MAC CE, a TCI codepoint indicated by the DCI is associated with the TCI states activated by the MAC CE, and this may correspond to a case in which the number of TCI states activated by the MAC CE, corresponding to the TCI codepoint, is 2.

According to an embodiment, the aforementioned configuration may be independent for each cell or each BWP. For example, while a maximum number of activated TCI states corresponding to one TCI codepoint is 2 in the PCell, a maximum number of activated TCI states corresponding to one TCI codepoint may be 1 in a specific SCell. In this case, it may be considered that NC-JT is configured in the PCell, but NC-JT is not configured in the SCell.

**[PHR]**

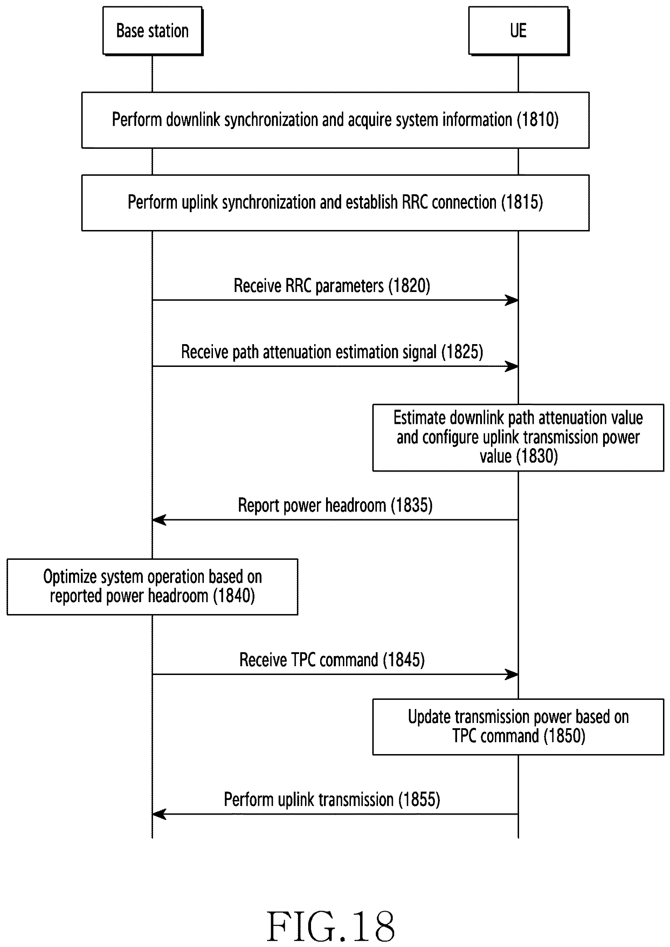

FIG. 18 illustrates a procedure in which a base station controls transmission power of a UE in a cellular system.

According to an embodiment, in operation 1810 of FIG. 18, a UE within the coverage of a base station may perform downlink synchronization with the base station, and acquire system information. According to some embodiments, downlink synchronization may be performed using a synchronization signal of a primary synchronization signal/secondary synchronization signal (PSS/SSS) received from the base station. UEs having performed downlink synchronization may receive a master information block (MIB) and a system information block (SIB) from the base station, and acquire system information.

According to an embodiment, in operation 1815, via a random-access procedure, the UE may perform uplink synchronization with the base station and establish a radio resource control (RRC) connection. In the random-access procedure, the UE may transmit a random-access preamble and message3 (msg3) to the base station via an uplink. In this case, when the random-access preamble and message3 are transmitted, uplink transmission power control may be performed. Specifically, the UE may receive parameters for the uplink transmission power control from the base station via the acquired system information, for example, the SIB, or may perform the uplink transmission power control using a predetermined parameter. In another embodiment of the disclosure, the UE may measure reference signal received power (RSRP) from a path attenuation estimation signal transmitted by the base station, and may estimate a downlink path attenuation value as given in Equation 7. In addition, based on the estimated path attenuation value, the UE may configure an uplink transmission power value for transmitting the random-access preamble and message3.

Downlink path attenuation = transmission power of base station signal - RSRP measured by UE        [Equation 7]

According to an embodiment, in Equation 7, the transmission power of the base station signal may refer to transmission power of a downlink path attenuation estimation signal transmitted by the base station. The downlink path attenuation estimation signal transmitted by the base station may be a cell-specific reference signal (CRS) or a synchronization signal block (SSB). If the path attenuation estimation signal is a cell-specific reference signal (CRS), the transmission power of the base station signal may indicate transmission power of the CRS, and may be transmitted to the UE via a referenceSignalPower parameter of the system information. If the path attenuation estimation signal is a synchronization signal block (SSB), the transmission power of the base station signal may indicate transmission power of a secondary synchronization signal (SSS) and of a demodulation reference signal (DMRS) that is transmitted via a PBCH, and may be transmitted to the UE via an ss-PBCH-BlockPower parameter of the system information.

According to an embodiment, in operation 1820, the UE may receive, from the base station, RRC parameters for the uplink transmission power control via UE-specific RRC or common RRC. In this case, the received transmission power control parameters may be different from each other according to an uplink channel type and a signal type. That is, transmission power control parameters applied to a physical uplink control channel (PUCCH), a physical uplink shared channel (PUSCH), and a sounding reference signal (SRS) may be different form each other. In addition, as described above, a transmission power control parameter received by the UE from the base station via the SIB before RRC connection establishment or transmission power control parameters that the UE has used as predetermined values before the RRC connection establishment may be included in the RRC parameters transmitted from the base station after the RRC connection establishment. The UE may use an RRC parameter value, which is received from the base station after the RRC connection establishment, to control uplink transmission power.

According to an embodiment, in operation 1825, the UE may receive a path attenuation estimation signal from the base station. More specifically, after the RRC connection establishment of the UE, the base station may configure a channel state information-reference signal (CSI-RS) as the path attenuation estimation signal for the UE. In this case, the base station may transmit information on transmission power of the CSI-RS to the UE via a powerControlOffsetSS parameter of UE-dedicated RRC information. Here, powerControlOffsetSS may indicate a transmission power difference (offset) between the SSB and the CSI-RS.

According to an embodiment, in operation 1830, the UE may estimate the downlink path attenuation value and configure the uplink transmission power value. More specifically, the UE may measure a downlink RSRP by using the CSI-RS, and may estimate the downlink path attenuation value via Equation 7 by using the information on transmission power of the CSI-RS received from the base station. In addition, based on the estimated downlink path attenuation value, the UE may configure the uplink transmission power value for PUCCH, PUSCH, and SRS transmission.

According to an embodiment, in operation 1835, the UE may perform power headroom reporting (PHR) to the base station. A power headroom may refer to a difference between current transmission power of the UE and maximum output power of the UE.

According to an embodiment, in operation 1840, the UE may optimize system operation, based on the reported power headroom. For example, if a power headroom value reported to the base station by a specific UE is a positive value, the base station may allocate more resource blocks (RBs) to the UE, thereby increasing a system yield.

According to an embodiment, in operation 1845, the UE may receive, from the base station, a transmission power control command (TPC). For example, if a power headroom value reported to the base station by a specific UE is a negative value, the base station may allocate fewer resources to the UE or may decrease transmission power of the UE via the TPC. Accordingly, the system throughput may be increased, or unnecessary power consumption of the UE may be decreased.

According to an embodiment, in operation 1850, the UE may update transmission power, based on the TPC command. In this case, the TPC command may be transmitted to the UE via UE-specific DCI or group common DCI. Therefore, the base station may dynamically control transmission power of the UE via the TPC command.

According to an embodiment, in operation 1855, the UE may perform uplink transmission based on the updated transmission power.

**[PUSCH power control]**

PUSCH transmission power may be determined by means of Equation 8 below.

[Equation 8]

$$P_{PUSCH}(i, j, q_d, l) =$$

$$\min\left\{\begin{array}{c} P_{\text{CMAX,f,c}}(i), \\ P_{0_{\text{PUSCH}},\text{b,f,c}}(j) + 10\log_{10}\left(2^\mu \cdot M_{RB,b,f,c}^{PUSCH}(i)\right) + \alpha_{\text{b,f,c}}(j) \cdot \text{PL}_{\text{b,f,c}}(q_d) + \Delta_{\text{TF,b,f,c}}(i) + f_{b,f,c}(i,l) \end{array}\right\} \text{[dBm]}$$

According to an embodiment, in Equation 8, $P_{\text{CMAX,f,c}}(i)$ denotes maximum transmission power configured for the UE with respect to carrier f of serving cell c at PUSCH transmission occasion i. $P_{0_{\text{PUSCH,b,f,c}}}(j)$ denotes a reference transmission power configuration value according to activated uplink bandwidth part (BWP) b of the carrier f of the serving cell c, and has different values according to various transmission types j. $P_{0_{\text{PUSCH,b,f,c}}}(j)$ may have various values according to a case where PUSCH transmission corresponds to a message3 PUSCH for random access or a case where the PUSCH is a configured grant PUSCH, or according to a scheduled PUSCH. $M_{RB,b,f,c}^{PUSCH}(i)$ denotes the magnitude of a frequency to which a PUSCH is allocated. $\alpha_{\text{b,f,c}}(j)$ denotes a compensation ratio value for path loss of UL BWP b of the carrier f of the serving cell c, and may be configured by a higher signal and may have different values according to j. $\text{PL}_{\text{b,f,c}}(q_d)$ denotes a downlink path loss estimation value of the UL BWP b of the carrier f of the serving cell c, and uses a value measured through a reference signal in an activated downlink bandwidth part. The reference signal may be an SS/PBCH block or a CSI-RS.

According to an embodiment, the downlink path loss may be calculated as described above in Equation 7. In another embodiment of the disclosure, $\text{PL}_{\text{b,f,c}}(q_d)$ denotes a downlink path attenuation value and corresponds to path attenuation calculated by the UE as given in Equation 7. According to the higher signal configuration, the UE may calculate the path attenuation based on a reference signal resource associated with the SS/PBCH block or CSI-RS. As the reference signal resource, one of various reference signal resource sets may be selected by a higher signal or an L1 signal, and the UE may calculate the path attenuation, based on the reference signal resource. $\Delta_{\text{TF,b,f,c}}(i)$ is a value determined by a modulation and coding scheme (MCS) value of a PUSCH at the PUSCH transmission occasion i of the UL BWP b of the carrier f of the serving cell c. $f_{b,f,c}(i, l)$ denotes a power control adaptation value and may dynamically control a power value by a TPC command.

According to an embodiment, the TPC command is divided into an accumulated mode and an absolute mode, and one of the two modes is determined by a higher signal. The accumulated mode is a mode in which a currently determined power control adaptation value is accumulated to a value indicated by the TPC command, and the power control adaptation value may be increased or decreased according to the TPC command and has a relationship of $f_{b,f,c}(i, l)$ = $f_{b,f,c}(i - i_0, l)$ + $\Sigma\ \delta_{PUSCH,b,f,c}$. $\delta_{PUSCH,b,f,c}$ is a value indicated by the TPC command. The absolute mode has a value determined by the TPC command regardless of the currently determined power control adaptation value and has a relationship of $f_{b,f,c}(i, l)$ = $\delta_{PUSCH,b,f,c}$. Table 43 below shows values which may be indicated by the TPC command.

[Table 43]

| TPC command | | |
|---|---|---|
| **TPC Command Field** | **Accumulated $\delta_{\text{PUSCH},b,f,c}$ or $\delta_{\text{SRS},b,f,c}$ [dB]** | **Absolute $\delta_{\text{PUSCH},b,f,c}$ or $\delta_{\text{SRS},b,f,c}$ [dB]** |
| 0 | -1 | -4 |
| 1 | 0 | -1 |
| 2 | 1 | 1 |
| 3 | 3 | 4 |

[PUCCH power control]

According to an embodiment, Equation 9 below is an equation for determining PUCCH transmission power.

[Equation 9]

$$P_{PUCCH,b,f,c}(i, q_u, q_d, l) =$$

$$\min\left\{ \begin{array}{l} P_{\text{CMAX,f,c}}(i), \\ P_{0_{\text{PUCCH}},b,f,c}(q_u) + 10\log_{10}\left(2^\mu \cdot M_{RB,b,f,c}^{PUCCH}(i)\right) + \text{PL}_{b,f,c}(q_d) + \Delta_{\text{F}_{\text{PUCCH}}}(i) + \Delta_{\text{TF,b,f,c}}(i) + f_{b,f,c}(i,l) \end{array} \right\}$$

According to an embodiment, in Equation 9, $P_{0_{\text{PUCCH}},b,f,c}(q_u)$ denotes a reference transmission power configuration value, and may have different values according to various transmission types $q_u$ and may be changed by a higher signal such as an RRC or MAC CE. If the value is changed via a MAC CE, with respect to a PDSCH on which the MAC CE has been received, if a slot in which HARQ-ACK has been transmitted is k, the UE may determine that the value is to be applied from slot k + $k_{\text{offset}}$. $k_{\text{offset}}$ has different values according to respective subcarrier spacings, and may have, for example, 3ms. $M_{RB,b,f,c}^{PUCCH}(i)$ denotes the size of a frequency resource domain to which the PUCCH is allocated. $\text{PL}_{b,f,c}(q_d)$ denotes a path attenuation estimation value of the UE, and as described above in Equation 7, may be calculated by the UE, based on a specific reference signal among various CSI-RSs or SS/PBCHs according to the higher signal configuration and according to the type. The same $q_d$ is applied to repetition transmission PUCCHs. The same $q_u$ is applied to repetition transmission PUCCHs.

**[Regarding HARQ-ACK: Type 1 (semi-static) codebook]**

According to an embodiment, in a situation where the number of HARQ-ACK PUCCHs transmittable by a UE in one slot is limited to one, upon receiving a higher configuration of a semi-static HARQ-ACK codebook, the UE reports HARQ-ACK information for PDSCH reception or SPS PDSCH release within the HARQ-ACK codebook in a slot indicated by the value of a PDSCH-to-HARQ feedback timing indicator in DCI format 1_0 or DCI format 1_1. The UE may report an HARQ-ACK information bit value, through a NACK, in an HARQ-ACK codebook in a slot that is not indicated by a PDSCH-to-HARQ feedback timing indicator field in a DCI format 1_0 or a DCI format 1_1. If the UE reports only HARQ-ACK information regarding one PDSCH reception or one SPS PDSCH release in MAC occasions for candidate PDSCH reception, and if the report is scheduled by DCI format 1_0 including information in which a counter DAI field in the Pcell indicates 1, the UE determines one HARQ-ACK codebook for the corresponding SPS PDSCH release or corresponding PDSCH reception.

According to an embodiment, otherwise, the HARQ-ACK codebook determination method described below in detail is followed.

According to an embodiment, if a set of PDSCH reception candidate occasions in serving cell c is MA,c, MA,c may be obtained through the [pseudo-code 1] stages below.

[Start of pseudo-code 1]

**Step 1**: Initializing j to 0, and $M_{A,c}$ to an empty set. Initializing k, which is an HARQ-ACK transmission timing index, to 0.

**Step 2:** Configuring R to a set of respective rows in a table which includes slot information, start symbol information, and number of symbols or length information to which a PDSCH is mapped. If a PDSCH-available mapping symbol indicated by each value of R is configured as an UL symbol according to DL and UL configurations configured in an upper layer, a corresponding row is deleted from R.

**Step 3-1:** If the UE is able to receive up to one unicast PDSCH in one slot, and R is not an empty set, adding one to set $M_{A,c}$.

**Step 3-2:** If the UE is able to receive more than one unicast PDSCH in one slot, counting the number of PDSCHs allocatable to different symbols in the calculated R, and adding the corresponding number to $M_{A,c}$.

**Step 4:** Increasing k by 1, and starting steps again from step 2.

[End of Pseudo-code 1]

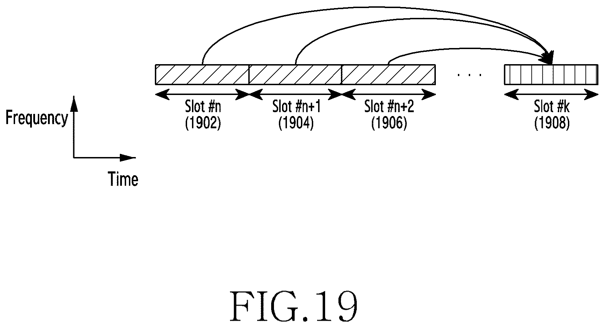

FIG. 19 is a diagram illustrating a procedure in which a UE generates a Type-1 (semi-static) HARQ-ACK codebook according to an embodiment of the disclosure.

According to an embodiment, taking the aforementioned pseudo-code 1 as an example of FIG. 19, in order to perform HARQ-ACK PUCCH transmission in slot#k 1908, all slot candidates available for PDSCH-to-HARQ-ACK timing capable of indicating slot#k 1908 may be considered. In FIG. 19, it may be assumed that HARQ-ACK transmission is possible in slot#k 1908 by a combination of PDSCH-to-HARQ-ACK timings at which only PDSCHs scheduled in slot#n 1902, slot#n+1 1904, and slot#n+2 1906 are possible. In addition, in consideration of time domain resource configuration information of the PDSCH available for scheduling in each of slots 1902, 1904, and 1906 and information indicating whether a symbol within the slot is for downlink or uplink, the maximum number of PDSCHs available for scheduling for each slot may be derived. For example, when two PDSCHs in slot 1902, three PDSCHs in slot 1904, and two PDSCHs in slot 1906 are available for maximum scheduling, the maximum number of PDSCHs included in the HARQ-ACK codebook transmitted in slot 1908 is seven in total. This may be referred to as cardinality of the HARQ-ACK codebook.

According to an embodiment, the aforementioned step 3-2 within a specific slot is described via [Table 44] (default PDSCH time domain resource allocation A for normal CP) below.

[Table 44]

| Row index | dmrs-TypeA-Position | PDSCH mapping type | $K_0$ | S | L | Ending | Order |
|---|---|---|---|---|---|---|---|
| 1 | 2 | Type A | 0 | 2 | 12 | 13 | 1x |
| | 3 | Type A | 0 | 3 | 11 | 13 | 1x |
| 2 | 2 | Type A | 0 | 2 | 10 | 11 | 1x |
| | 3 | Type A | 0 | 3 | 9 | 11 | 1x |
| 3 | 2 | Type A | 0 | 2 | 9 | 10 | 1x |
| | 3 | Type A | 0 | 3 | 8 | 10 | 1x |
| 4 | 2 | Type A | 0 | 2 | 7 | 8 | 1x |
| | 3 | Type A | 0 | 3 | 6 | 8 | 1x |
| 5 | 2 | Type A | 0 | 2 | 5 | 6 | 1x |
| | 3 | Type A | 0 | 3 | 4 | 6 | 1x |
| 6 | 2 | Type B | 0 | 9 | 4 | 12 | 2x |
| | 3 | Type B | 0 | 10 | 4 | 13 | 3 |
| 7 | 2 | Type B | 0 | 4 | 4 | 7 | 1x |
| | 3 | Type B | 0 | 6 | 4 | 9 | 2 |

(continued)

| Row index | dmrs-TypeA-Position | PDSCH mapping type | $K_0$ | S | L | Ending | Order |
|---|---|---|---|---|---|---|---|
| 8 | 2,3 | Type B | 0 | 5 | 7 | 11 | 1x |
| 9 | 2,3 | Type B | 0 | 5 | 2 | 6 | 1x |
| 10 | 2,3 | Type B | 0 | 9 | 2 | 10 | 2x |
| 11 | 2,3 | Type B | 0 | 12 | 2 | 13 | 3x |
| 12 | 2,3 | Type A | 0 | 1 | 13 | 13 | 1x |
| 13 | 2,3 | Type A | 0 | 1 | 6 | 6 | 1x |
| 14 | 2,3 | Type A | 0 | 2 | 4 | 5 | 1 |
| 15 | 2,3 | Type B | 0 | 4 | 7 | 10 | 1x |
| 16 | 2,3 | Type B | 0 | 8 | 4 | 11 | 2x |

According to an embodiment, Table 44 is a time resource allocation table on which the UE operates by default before receiving time resource allocation via a separate RRC signal. For reference, a PDSCH time resource assignment value is determined by dmrs-TypeA-Position, which is a UE-common RRC signal, in addition to separately indicating a row index value by RRC. In Table 44, the ending column and the order column are separately added values for the convenience of description and may not actually exist. The ending column may indicate an end symbol of a scheduled PDSCH, and the order column indicates a position value of a code located in a specific codebook in the semi-static HARQ-ACK codebook. The table is applied to time resource assignment applied to DCI format 1_0 of a common search area of a PDCCH.

According to an embodiment, in order to determine the HARQ-ACK codebook by calculating the maximum number of PDSCHs that do not overlap in a specific slot, the UE may perform the following steps.

Step 1: Among all rows of the PDSCH time resource allocation table, an allocation value of a PDSCH that ends first in a slot may be retrieved. In Table 44, it may be seen that row index 14 ends first. Row index 14 here is indicated as 1 in the order column. In addition, other row indexes that overlap with row index 14 by at least one symbol are indicated as 1x in the order column.

Step 2: Among the remaining row indexes which are not indicated in the order column, an allocation value of a PDSCH that ends first may be retrieved. In Table 44, this may correspond to a row having a row index of 7 and a dmrs-TypeA-Position value of 3. In addition, other row indexes that overlap with the row index by at least one symbol are indicated as 2x in the order column.

Step 3: Step 2 is repeated, and the order value is increased and displayed. For example, in Table 44, among row indexes that are not indicated in the order column, an allocation value of a PDSCH that ends first may be retrieved. In Table 44, this may correspond to a row having a row index of 6 and a dmrs-TypeA-Position value of 3. In addition, other row indexes that overlap with the row index by at least one symbol are indicated as 3x in the order column.

Step 4: If an order is indicated for all row indexes, termination is performed. The size of a corresponding order corresponds to the maximum number of PDSCHs available for scheduling without time overlap in a corresponding slot. Scheduling without time overlap may indicate that different PDSCHs are scheduled in a TDM manner.

According to an embodiment, in the order column of Table 44, the maximum order value may indicate the size of the HARQ-ACK codebook of the slot, and an order value may indicate an HARQ-ACK codebook point at which an HARQ-ACK feedback bit for the scheduled PDSCH is located. For example, row index 16 of Table 44 may indicate presence at a second code position in the semi-static HARQ-ACK codebook having a size of 3. If a set of PDSCH reception candidate occasions (occasion for candidates PDSCH receptions) in serving cell c is $M_{A,c}$, the UE that transmits HARQ-ACK feedback may obtain $M_{A,c}$ via steps in [pseudo-code 1] or [pseudo-code 2]. $M_{A,c}$ may be used for determining the number of HARQ-ACK bits to be transmitted by the UE. Specifically, the HARQ-ACK codebook may be configured using the cardinality of the $M_{A,c}$ set.

According to an embodiment, as another example, considerations required for determining the semi-static HARQ-ACK codebook (or type 1 HARQ-ACK codebook) may be as follows.

a) on a set of slot timing values $K_1$ associated with the active UL BWP

a) If the UE is configured to monitor PDCCH for DCI format 1_0 and is not configured to monitor PDCCH for DCI format 1_1 on serving cell c, $K_1$ is provided by the slot timing values {1, 2, 3, 4, 5, 6, 7, 8} for DCI format 1_0
b) If the UE is configured to monitor PDCCH for DCI format 1_1 for serving cell c, $K_1$ is provided by *dl-DataToUL-ACK* for DCI format 1_1

b) on a set of row indexes R of a table that is provided either by a first set of row indexes of a table that is provided by *PDSCH-TimeDomainResourceAllocationList* in *PDSCH-ConfigCommon* or by Default PDSCH time domain resource allocation A [6, TS 38.214], or by the union of the first set of row indexes and a second set of row indexes, if provided by *PDSCH-TimeDomainResourceAllocationList* in *PDSCH-Config,* associated with the active DL BWP and defining respective sets of slot offsets $K_0$, start and length indicators *SLIV,* and PDSCH mapping types for PDSCH reception as described in [6, TS 38.214]

c) on the ratio $2^{\mu_{DL}-\mu_{UL}}$ between the downlink SCS configuration $\mu_{DL}$ and the uplink SCS configuration $\mu_{UL}$ provided by *subcarrierSpacing* in *BWP-Downlink* and *BWP-Uplink* for the active DL BWP and the active UL BWP, respectively

d) if provided, on *TDD-UL-DL-ConfigurationCommon* and *TDD-UL-DL-ConfigDedicated* as described in Subclause 11.1.

According to an embodiment, as another example, a pseudo-code for HARQ-ACK codebook determination may be as follows.

[Start of pseudo-code2]

For the set of slot timing values $K_1$, the UE determines a set of $M_{A,c}$ occasions for candidate PDSCH receptions or SPS PDSCH releases according to the following pseudo-code. A location in the Type-1 HARQ-ACK codebook for HARQ-ACK information corresponding to a SPS PDSCH release is same as for a corresponding SPS PDSCH reception.

Set $j=0$ - index of occasion for candidate PDSCH reception or SPS PDSCH release

Set $B=\varnothing$

Set $M_{A,c}=\varnothing$

Set $c(K_1)$ to the cardinality of set $K_1$

Set $k=0$ - index of slot timing values $K_{1,k}$, in descending order of the slot timing values, in set $K_1$ for serving cell $c$

while $k<c(K_1)$

if $\mod(n_U-K_{1,k}+1,\max(2^{\mu_{UL}-\mu_{DL}},1))=0$

Set $n_D=0$ - index of a DL slot within an UL slot

while $n_D<\max(2^{\mu_{DL}-\mu_{UL}},1)$

Set R to the set of rows

Set $c(R)$ to the cardinality of R

Set $r=0$ - index of row in set R

if slot $n_U$ starts at a same time as or after a slot for an active DL BWP change on serving cell c or an active UL BWP change on the PCell and slot $\lfloor (n_U-K_{1,k})*2^{\mu_{DL}-\mu_{UL}} \rfloor +n_D$ is before the slot for the active DL BWP change on serving cell c or the active UL BWP change on the PCell

continue;

else

while $r<c(R)$

if the UE is provided *TDD-UL-DL-ConfigurationCommon* or *TDD-UL-DL-ConfigDedicated* and, for each slot from slot $\lfloor (n_U-K_{1,k})*2^{\mu_{DL}-\mu_{UL}} \rfloor +n_D \cdot N_{PDSCH}^{repeat}+1$ to slot $\lfloor (n_U-K_{1,k})*2^{\mu_{DL}-\mu_{UL}} \rfloor +n_D$, at least one symbol of the PDSCH time resource derived by row r is configured as UL where $K_{1,k}$ is the $k$-th slot timing value in set $K_1$,

$R=R/r$;

end if

$r=r+1$;

end while

if the UE does not indicate a capability to receive more than one unicast PDSCH per slot and $R\neq\varnothing$,

$M_{A,c}=M_{A,c}\bigcup j$;

$j=j+1$;

The UE does not expect to receive SPS PDSCH release and unicast PDSCH in a same slot;

else

Set $c(R)$ to the cardinality of R

Set m to the smallest last OFDM symbol index, as determined by the *SLIV*, among all rows of R

while $R\neq\varnothing$

Set $r=0$

while $r<c(R)$

if $S\leq m$ for start OFDM symbol index S for row r

$b_{r,k,n_D}=j$; - index of occasion for candidate PDSCH reception or SPS PDSCH release associated with row r

$R=R/r$;

$B=B\bigcup b_{r,k,n_D}$;

end if

$r=r-1$;

end while

$M_{A,c}=M_{A,c}\bigcup j$

$j=j+1$;

Set m to the smallest last OFDM symbol index among all rows of R;

end while

end if

end if

$n_D=n_D+1$;

end while

end if

$k=k+1$;

end while

[End of pseudo-code2]

According to an embodiment, a position of an HARQ-ACK codebook that includes HARQ-ACK information for DCI indicating DL SPS release in pseudo-code 2 may be based on a location at which a DL SPS PDSCH is received. For example, if a start symbol for transmission of the DL SPS PDSCH is a fourth OFDM symbol based on the slot and a length is 5 symbols, HARQ-ACK information including a DL SPS release indicating release for a corresponding SPS may be determined by assuming as if a PDSCH has been mapped, the PDSCH starting from the 4th OFDM symbol in the slot, in which the DL SPS release has been transmitted, and having a length of 5 symbols, and this HARQ-ACK information may be determined via a PDSCH-to-HARQ-ACK timing indicator and a PUSCH resource indicator included in control information indicating the DL SPS release. As another example, if a start symbol for transmission of the DL SPS PDSCH is a fourth OFDM symbol based on the slot and a length is 5 symbols, HARQ-ACK information including a DL SPS release indicating release for a corresponding SPS may be determined by assuming as if a PDSCH has been mapped, the PDSCH starting from the 4th OFDM symbol in the slot indicated by time domain resource allocation (TDRA) of DCI, which is the DL SPS release, and having a length of 5 symbols, and this HARQ-ACK information may be determined via a PDSCH-to-HARQ-ACK timing indicator and a PUSCH resource indicator included in control information indicating the DL SPS release.

**[HARQ-ACK: Related to Type 2 (dynamic) codebook]**

According to an embodiment, based on a PDSCH-to-HARQ_feedback timing value for PUCCH transmission of HARQ-ACK information in slot n for PDSCH reception or SPS PDSCH release, and K0 that is transmission slot position information of a PDSCH scheduled by DCI format 1_0 or 1_1, a UE may transmit HARQ-ACK information transmitted in one PUCCH in corresponding slot n. Specifically, for the HARQ-ACK information transmission described above, the UE may determine an HARQ-ACK codebook of a PDCCH transmitted in a slot determined by K0 and PDSCH-to-HARQ_feedback timing, based on a DAI included in DCI indicating the PDSCH or the SPS PDSCH release.

According to an embodiment, the DAI includes a counter DAI and a total DAI. The counter DAI is information in which the HARQ-ACK information corresponding to the PDSCH scheduled by DCI format 1_0 or DCI format 1_1 indicates a position in the HARQ-ACK codebook. Specifically, a value of the counter DAI in DCI format 1_0 or 1_1 indicates a cumulative value of PDSCH reception or SPS PDSCH release scheduled by DCI format 1_0 or DCI format 1_1 in specific cell c. The cumulative value is configured based on a serving cell and a PDCCH monitoring occasion in which the scheduled DCI exists.

According to an embodiment, a total DAI is a value indicating the size of the HARQ-ACK codebook. Specifically, the total DAI value may refer to the total number of PDSCHs or SPS PDSCH releases scheduled at and before the time when the DCI is scheduled. In addition, the total DAI is a parameter used when, in a carrier aggregation (CA) situation, HARQ-ACK information in serving cell c also includes HARQ-ACK information for a PDSCH scheduled in another cell including serving cell c. In other words, there is no total DAI parameter in a system operating with one cell.

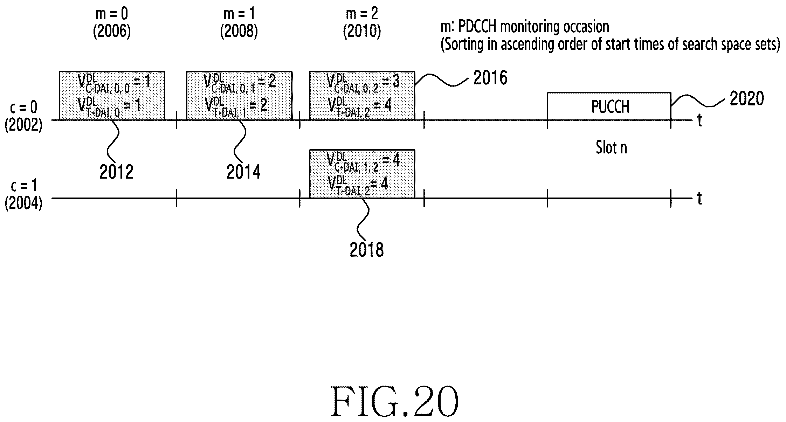

FIG. 20 is a diagram illustrating a procedure in which a UE generates a Type-2 (dynamic) HARQ-ACK codebook according to an embodiment of the disclosure.

According to an embodiment, an operation example for a DAI is described in FIG. 20. FIG. 20 shows, in a situation where two carriers are configured, when a UE transmits an HARQ-ACK codebook, which is selected based on a DAI, on a PUCCH 2020 in an n-th slot of carrier 0 2002, a change in values of a counter DAI (C-DAI) and a total DAI (T-DAI) indicated by DCI retrieved for each PDCCH monitoring occasion configured for each carrier. First, in DCI retrieved at m=0 2006, each of the C-DAI and the T-DAI may indicate a value 2012 of 1. In DCI retrieved at m=1 2008, each of the C-DAI and the T-DAI may indicate a value 2014 of 2. In DCI retrieved in carrier 0 (c=0) 2002 of m=2 2010, the C-DAI may indicate a value 2016 of 3. In DCI retrieved in carrier 1 (c=1) 2004 of m=2 2010, the C-DAI may indicate a value 2018 of 4. If carriers 0 and 1 are scheduled at the same monitoring occasion, both T-DAIs are indicated by 4.

According to an embodiment, in FIG. 19 and FIG. 20, HARQ-ACK codebook determination is performed in a situation where only one PUCCH including HARQ-ACK information is transmitted in one slot. This may be referred to as mode 1. As an example of a method in which one PUCCH transmission resource is determined within one slot, when PDSCHs scheduled by different DCIs are multiplexed with one HARQ-ACK codebook and transmitted in the same slot, a PUCCH resource selected for HARQ-ACK transmission is determined as a PUCCH resource indicated by a PUCCH resource field indicated in DCI by which a PDSCH is most recently scheduled. That is, a PUCCH resource indicated by a PUCCH resource field indicated in DCI scheduled before the aforementioned DCI is disregarded.

According to an embodiment, the following description defines HARQ-ACK codebook determination method and devices in a situation where two or more PUCCHs including HARQ-ACK information may be transmitted in one slot. This may be referred to as mode 2. A UE may be able to operate only in mode 1 (only one HARQ-ACK PUCCH is transmitted in one slot) or operate only in mode 2 (one or more HARQ-ACK PUCCHs are transmitted in one slot). Alternatively, for a UE supporting both mode 1 and mode 2, it may be possible that a base station configures, by upper-layer signaling, the UE to operate in only one mode, or that mode 1 and mode 2 are determined implicitly by a DCI format, an RNTI, a DCI specific field value, scrambling, etc. For example, a PDSCH scheduled by DCI format A and HARQ-ACK information associated therewith may be based on mode 1, and a PDSCH scheduled by DCI format B and HARQ-ACK information associated therewith may be based on mode 2. Whether the aforementioned HARQ-ACK codebook is semi-static or dynamic is determined by an RRC signal.

**[Related to initial access procedure]**

Hereinafter, a description is provided for a procedure in which a UE initially accesses a cell.

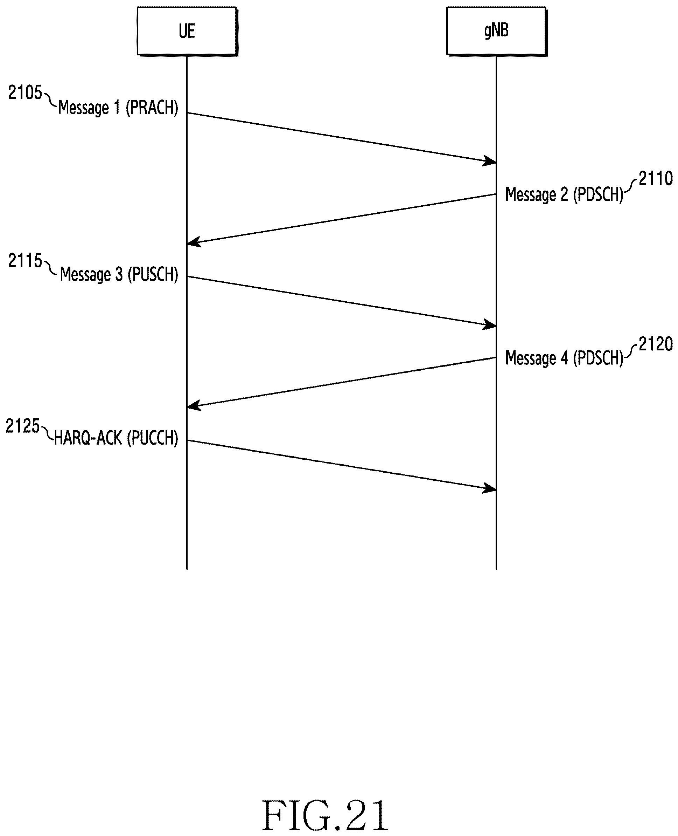

FIG. 21 is a diagram illustrating a procedure in which a UE and a base station perform transmission and reception to perform initial access according to an embodiment. According to an embodiment, the role of each message (hereinafter, used interchangeably with Msg.) is as follows.

- Msg1 (preamble transmission) 2105: A UE may select a random-access preamble from a set of predefined preambles. The random-access preamble may be divided into two categories (a short preamble format and a long preamble format). The UE may also select a random sequence number for the preamble. After selecting the preamble and the sequence number, the UE may transmit the preamble on a PRACH.
- Msg2 (e.g., random-access response (RAR)) 2110: When Msg1 is received, a gNB (5G base station) transmits a response referred to as Msg2. Msg2 includes several pieces of important information, such as a timing advance (TA) instruction for timing adjustment, a random-access preamble ID (RAPID) that matches the preamble transmitted by the UE, and an initial uplink grant for the UE. The gNB may assign, to the UE, a temporary identifier referred to as a random-access radio network temporary identifier (RA-RNTI). The Msg2 information is transmitted through a PDSCH.
- Msg3 2115: The UE may transmit Msg3 on a PUSCH by using an initial uplink grant provided in Msg2. Msg3 is a PUSCH that may transfer a specific RRC message (e.g., RrcRequest) or may be pure PHY data.
- Msg4 (contention resolution) 2120: After processing Msg3, the gNB may transmit Msg4 to the UE. Msg4 is MAC data for contention resolution. Since a contention resolution message includes identity of the UE, the base station may accurately identify the UE so as to identify that contention has been resolved. During this operation, a network may provide the UE with a cell radio network temporary identifier (C-RNTI).

Then, the UE may add, to a PUCCH, information on whether Msg4 reception is successful (or HARQ-ACK feedback) and transmit the PUCCH to the base station. This may be referred to as an HARQ PUCCH 2125 for the Msg4 PDSCH.

Hereinafter, satellite communication features will be described according to various embodiments of the disclosure. Satellites for communication may be classified into a low earth orbit satellite (LEO), a middle earth orbit satellite (MEO), a geostationary earth orbit satellite (GEO), and the like according to orbits of the satellites. In general, a GEO may refer to a satellite with an altitude of approximately 36,000 km, an MEO may refer to a satellite with an altitude of 5,000 km to 15,000 km, and an LEO may refer to a satellite with an altitude of 500 km to 1,000 km. Of course, according to various embodiments, this is merely an example, and the disclosure is not limited to the above-described example. According to an embodiment of the disclosure, a revolution period around the Earth varies depending on each altitude, wherein the GEO may have a revolution period around the Earth of approximately 24 hours, the MEO may have a revolution period around the Earth of approximately 6 hours, and the LEO may have a revolution period around the Earth of approximately 90 minutes to 120 minutes. The low earth orbit (up to 2,000 km) satellite has a relatively low altitude and may have an advantage over the geostationary orbit (36,000 km) satellite in terms of a loss and a propagation delay (e.g., time it takes for a signal transmitted from a transmitter to reach a receiver).

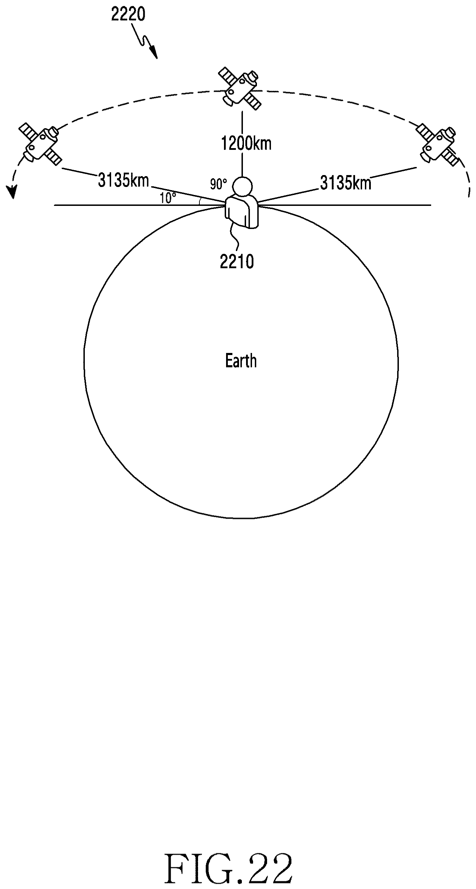

FIG. 22 is a diagram illustrating a revolution period of a communication satellite revolving around the Earth in accordance with an altitude or a height of the satellite according to an embodiment of the disclosure.

Assuming that a UE 2210 communicates with a satellite 2220 located at an altitude of 1200 km, the distance between the UE 2210 and the satellite 2220 may vary depending on the elevation angle between the satellite 2220 and the UE 2210. For example, if the elevation angle between the satellite 2220 and the UE 2210 is 90 degrees, the distance between the UE 2210 and the satellite 2220 may be 1200 km. However, if the elevation angle between the satellite 2220 and the UE 2210 is 10 degrees, the distance between the UE 2210 and the satellite 2220 may be approximately 3135 km. Therefore, in satellite communication, even if the UE 2210 is stationary, the distance between the satellite 2220 and the UE 2210 may change over time due to the satellite orbiting periodically like a low earth orbit satellite.

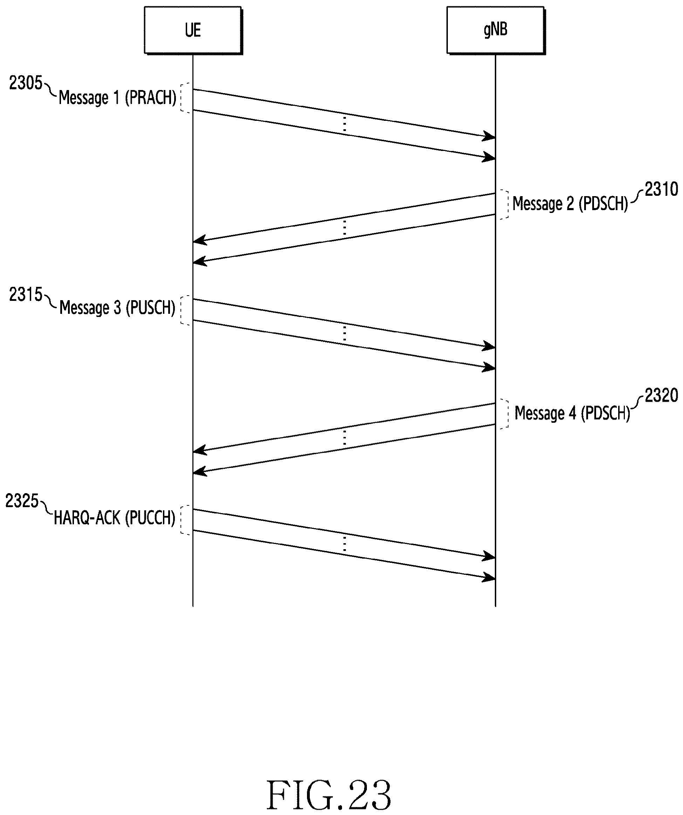

FIG. 23 illustrates a signal flow for performing initial access between a UE and a base station according to an embodiment of the disclosure.

The initial access may basically operate with single transmission. However, if the distance between a transmission end and a reception end is much longer than that of a terrestrial network, such as a satellite network (or non-terrestrial network (NTN)), it may be difficult for the reception end to receive, via only single transmission, a signal for initial access. Therefore, as illustrated in FIG. 23, supporting repetition transmission for each of signals 2305, 2310, 2315, 2320, and 2325 for initial access may be one of methods for increasing a reception signal strength.

Hereinafter, according to various embodiments, detailed descriptions will be provided for operations and methods for repetition transmission of the signals 2305, 2310, 2315, 2320, and 2325 for initial access. Referring to FIG. 23, illustrated is a case in which all repetition transmissions of the signals 2305, 2310, 2315, 2320, and 2325 for initial access transmitted and received between the UE and the base station are allowed. However, according to various embodiments, repetition transmission may be allowed for only at least one of the signals, and only single transmission may be performed for the remaining signals.

In the following description of the disclosure, upper layer signaling may include signaling corresponding to at least one signaling among the following signaling, or a combination of one or more thereof.

Master information block (MIB)

(System information block (SIB) or SIB X (X=1, 2, ...)

Radio resource control (RRC)

(Medium access control (MAC) control element (CE)

In addition, L1 signaling may refer to signaling corresponding to at least one signaling method among signaling methods using the following physical layer channels or signaling, or a combination of one or more thereof.

Physical downlink control channel (PDCCH)
Downlink control information (DCI)
UE-specific DCI
Group common DCI
Common DCI
Scheduling DCI (for example, DCI used for the purpose of scheduling downlink or uplink data)
Non-scheduling DCI (for example, DCI not used for the purpose of scheduling downlink or uplink data)
Physical uplink control channel (PUCCH)
Uplink control information (UCI)

In addition, in various embodiments of the disclosure, the term "terminal" may refer to any component, such as "user equipment (UE)", "mobile station", "subscriber station", "remote terminal", "wireless terminal", "receive point", or "user device". For convenience, the term "UE" described above may be used to indicate a device accessing a base station in various embodiments of the disclosure, regardless of whether a UE needs to be considered as a mobile device (e.g., a mobile phone or a smartphone) or a stationary device (e.g., a desktop computer or a vending machine).

In addition, in various embodiments of the disclosure, the term "timing advance (TA)" may be interchangeably used with "TA information", "TA value", or "TA index".

In various embodiments of the disclosure, data or control information that a base station transmits to a UE may be referred to as a first signal, and an uplink signal associated with the first signal may be referred to as a second signal. For example, the first signal may include DCI, a UL grant, a PDCCH, a PDSCH, an RAR, etc., and the second signal associated with the first signal may include a PUCCH, a PUSCH, msg3, etc.

In addition, there may be association between the first signal and the second signal. For example, when a first signal is a PDCCH including a UL grant for uplink data scheduling, a second signal corresponding to the first signal may be a PUSCH including uplink data. The difference (gap) between time points at which the first signal and the second signal are transmitted and received may be a predetermined value between the UE and the base station. Alternatively, the gap between time points at which the first signal and the second signal are transmitted and received may be indicated by the base station or may be determined by a value transferred via upper-layer signaling.

**<First embodiment: UE capability report>**

In initial access, a satellite (or a base station, hereinafter, "satellite" and "base station" are used interchangeably for convenience) may not know in advance whether a UE is capable of performing repetition transmission for signals related to initial access. Therefore, during initial access, it may be necessary for the base station to receive a repetition transmission capability report from the UE in advance. Alternatively, even if the UE has repetition transmission capability, the UE may not report the repetition transmission capability during the initial access if there is no need to transmit or receive repetition transmission-based information. Criteria for the UE to determine this may be based on measurement of a reception signal quality, such as RSRP, via an SS/PBCH block that the UE periodically receives from the satellite. Whether the UE needs to report repetition transmission capability may be determined depending on whether a measured result is greater than or smaller than a threshold value configured for the UE in advance via upper-layer signaling. In addition, if threshold value-related configuration information is not provided or a specific value is indicated, the UE may be assumed to report repetition transmission capability all the time.

According to an embodiment, the UE may report repetition transmission capability to the satellite via PRACH resource selection. Specifically, when the satellite provides configuration information of multiple PRACH resource sets to the UE in advance, the satellite may indicate that set A is a PRACH set for UEs having repetition transmission capability, and that set B is a PRACH set for other UEs. Accordingly, if the UE itself has repetition transmission capability, or if an RSRP reception signal measured via an SS/PBCH block is less than or equal to a specific threshold value in a situation where a threshold value is configured, the UE may transmit the repetition transmission capability via a PRACH resource belonging to set A. Therefore, the satellite may determine, via a PRACH resource selected by the UE, whether the UE has repetition transmission capability or has requested that repetition transmission is necessary.

According to an embodiment, the PRACH resource may include a time resource, a frequency resource, a code resource, or a combination of some or all thereof. The repetition transmission capability reported via the PRACH resource may include at least one or a combination of two or more of the following:

- Message 2 PDSCH
- Message 3 PUSCH
- Message 4 PDSCH
- HARQ-ACK PUCCH for Message 4
- PUSCH scheduled by DCI format 0_0 with CRC scrambled by C-RNTI or CS-RNTI
- PDSCH scheduled by DCI format 1_0 with CRC scrambled by C-RNTI, DCI format 1_0 with CRC scrambled by SI-RNTI, DCI format 1_0 with CRC scrambled by TC-RNTI, or DCI format 1_0 with CRC scrambled by RA-RNTI or CS-RNTI
- PUCCH scheduled by DCI format 1_0 with CRC scrambled by C-RNTI or CS-RNTI

According to an embodiment, the satellite may provide the aforementioned related configuration information in advance along with PRACH resource information. For example, the satellite may separately provide PRACH resource information for a UE supporting only message 3 PUSCH repetition transmission, PRACH resource information for a UE supporting both message 2 PDSCH repetition transmission and message 3 PUSCH repetition transmission, and the like, to a corresponding UE in advance via upper-layer signaling. The satellite may determine, according to a PRACH resource selected by a UE, a channel to which repetition transmission capability that the UE has is applied.

According to an embodiment, furthermore, when the aforementioned threshold value is configured, a threshold value related to message 3 PUSCH and a threshold value related to message 2 PDSCH may be the same or different.

According to an embodiment, the PUSCH scheduled by DCI format 0_0 with CRC scrambled by C-RNTI or CS-RNTI may be included in separate UE capability, or may be implicitly included when the UE has reported the message 3 PUSCH as UE capability.

According to an embodiment, the PDSCH scheduled by DCI format 1_0 with CRC scrambled by C-RNTI, DCI format 1_0 with CRC scrambled by SI-RNTI, DCI format 1_0 with CRC scrambled by TC-RNTI, or DCI format 1_0 with CRC scrambled by RA-RNTI or CS-RNTI may be included in separate UE capability, or may be implicitly included when the UE has reported the message 2 PDSCH or message 4 PDSCH as UE capability.

According to an embodiment, the PUCCH scheduled by DCI format 1_0 with CRC scrambled by C-RNTI or CS-RNTI may be included in separate UE capability, or may be implicitly included when the UE has reported, as UE capability, the message 2 PDSCH or the HARQ-ACK PUCCH for message 4.

According to an embodiment, the message 4 PDSCH may be included as separate UE capability, or may be implicitly included when the UE has reported the message 2 PDSCH as UE capability.

According to various embodiments of the disclosure, the UE may report repetition transmission capability to the satellite via message 3 information. According to an embodiment, the message 3 information may include at least one of or a combination of two or more of the following repetition transmission capabilities, by using specific bitmap information in LCID information included in the message 3 PUSCH transmitted by the UE.

- Message 4 PDSCH
- HARQ-ACK PUCCH for Message 4
- PUSCH scheduled by DCI format 0_0 with CRC scrambled by C-RNTI or CS-RNTI
- PDSCH scheduled by DCI format 1_0 with CRC scrambled by C-RNTI, DCI format 1_0 with CRC scrambled by SI-RNTI, DCI format 1_0 with CRC scrambled by TC-RNTI, or DCI format 1_0 with CRC scrambled by RA-RNTI or CS-RNTI
- PUCCH scheduled by DCI format 1_0 with CRC scrambled by C-RNTI or CS-RNTI

For example, the UE may report repetition transmission capability by using a specific codepoint or an index of an LCID. If a threshold value is configured, the UE may compare the threshold value with an RSRP strength measured via reception of an SS/PBCH, and may determine, based on a comparison result, whether to report the UE capability.

According to an embodiment, the UE may receive related upper-layer signaling configuration information from the base station in advance (e.g., before reporting repetition transmission capability via message 3 information). If, in relation to the aforementioned repetition transmission capability, a value configured by the base station for an upper-layer signal related to the number of repetition transmissions exists, the UE may determine that the repetition transmission capability is reported via the message 3 information. Alternatively, the UE may determine, via separate upper-layer signal configuration information, whether it is possible to report the repetition transmission capability via the message 3 information.

According to an embodiment, each of the aforementioned "PUSCH scheduled by DCI format 0_0 with CRC scrambled by C-RNTI or CS-RNTI", "PDSCH scheduled by DCI format 1_0 with CRC scrambled by C-RNTI, DCI format 1_0 with CRC scrambled by SI-RNTI, DCI format 1_0 with CRC scrambled by TC-RNTI, or DCI format 1_0 with CRC scrambled by RA-RNTI or CS-RNTI", or "PUCCH scheduled by DCI format 1_0 with CRC scrambled by C-RNTI or CS-RNTI" may be included as separate UE capability, respectively, or may be implicitly transferred together with another capability reporting when the UE performs the same.

According to various embodiments of the disclosure, the UE may be capable of supporting repetition transmission capability or requesting repetition transmission for all physical channels without distinguishing between PDSCH and PUSCH. The request may be transmitted to the satellite via message 1 or message 3. Based on this, the satellite may determine that the UE supports or has requested repetition transmission for all physical channels without distinguishing between physical channels. In addition, when the UE is provided with separate threshold value configuration information, the UE may measure an RSRP strength for an SS/PBCH based on the threshold value configuration information, and may accordingly determine whether to request repetition transmission.

The aforementioned UE capability information and related operations (hereinafter, including various embodiments, such as a repetition transmission indication operation, which will be described below) may be performed only in a non-terrestrial network (NTN), such as satellite communication. Alternatively, the UE capability information and related operations may be performed only in a frequency band allocated to the non-terrestrial network. Various signaling procedures according to embodiments of the disclosure may be performed in a band where an NTN satellite operates, for example, in the case of FR1, an example of a dedicated operating band of an NTN base station may be as follows.

| NTN satellite operating band | Uplink (UL) operating band Satellite Access Node receive / UE transmit $F_{UL,low}$ - $F_{UL,high}$ | Downlink (DL) operating band Satellite Access Node transmit / UE receive $F_{DL,low}$ - $F_{DL,high}$ | Duplex mode |
|---|---|---|---|
| n256 | 1980 MHz - 2010 MHz | 2170 MHz - 2200 MHz | FDD |
| n255 | 1626.5 MHz - 1660.5 MHz | 1525 MHz - 1559 MHz | FDD |
| n254 | 1610 - 1626.5 MHz | 2483.5 - 2500 MHz | FDD |
| NOTE: NTN satellite bands are numbered in descending order from n256. | | | |

Furthermore, as a prerequisite for various signaling procedures according to embodiments of the disclosure, a UE may receive an SIB (e.g., SIB 19) including information associated with NTN access from a base station. The SIB received by the UE from the base station may include at least one of NTN configuration information associated with satellite access of the UE, time information of a cell, a reference position of the cell, a distance from the reference position, or neighboring cell information.

However, according to various embodiments of the disclosure, this is merely an example and the disclosure is not limited thereto, and it is obvious that the disclosure is applicable even in a terrestrial network environment.

**<Second embodiment: Method of indicating repetition transmission by base station>**

According to various embodiments of the disclosure, when a UE has reported corresponding UE capability or has requested repetition transmission based on an RSRP value measured by the UE, as described above in the first embodiment, a base station (or satellite) may provide the UE with repetition transmission resources for at least one of "message 1", "message 2", "message 3", "message 4", "HARQ-ACK feedback for message 4", "PUSCH scheduled by DCI format 0_0 with CRC scrambled by C-RNTI or CS-RNTI", "PDSCH scheduled by DCI format 1_0 with CRC scrambled by C-RNTI, DCI format 1_0 with CRC scrambled by SI-RNTI, DCI format 1_0 with CRC scrambled by TC-RNTI, or DCI format 1_0 with CRC scrambled by RA-RNTI or CS-RNTI", or "PUCCH scheduled by DCI format 1_0 with CRC scrambled by C-RNTI or CS-RNTI".

According to an embodiment, the base station may provide one or multiple values in relation to a repetition transmission configuration value for each channel via upper-layer signaling configuration information. When a single value is provided via an upper-layer signal, the UE may determine that repetition transmission for a corresponding channel operates based on the value. When multiple values are provided via an upper-layer signal, the base station may indicate one of the multiple values via control information for scheduling of a corresponding channel.

For example, the base station provides DCI format 1_0 with CRC scrambled by RA-RNTI to schedule a message 2 PDSCH to the UE, and may indicate one of multiple repetition transmission values configured by an upper-layer signal, by using a repetition transmission field including one of 1 bit, 2 bits, or 3 bits in DCI format 1_0.

As another example, the base station may identify random-access response grant content field size information included in the message 2 PDSCH to schedule a message 3 PUSCH, and may indicate a repetition transmission value of the message 3 PUSCH by using two most significant bits (MSBs) of a MCS field in the information.

As another example, the base station may provide DCI format 1_0 with CRC scrambled by TC-RNTI to schedule a message 4 PDSCH, and may indicate repetition transmission by using 1 bit or 2 bits of an MSB (or least significant bit (LSB)) of a downlink assignment index (DAI) in DCI format 1_0, or may indicate repetition transmission by using 1 bit or 2 bits of a MSB (or LSB) of an MCS (or HARQ process number) field.

According to an embodiment, the base station and the UE may use other DCI fields.

As another example, a method of indicating the number of repetition transmissions for a PUSCH scheduled by DCI format 0_0 with CRC scrambled by C-RNTI or CS-RNTI may include indicating PUSCH repetition transmission by one of 1 bit, 2 bits, or 3 bits of an MSB (or LSB) by using at least one or a combination of some of a frequency resource allocation field, a time resource allocation field, a frequency hopping field, an MCS field, a new data indicator (NDI) field, a redundancy version (RV) field, an HARQ process field, or a transmission power control (TPC) field.

As another example, a method of indicating the number of repetition transmissions for a PDSCH scheduled by DCI format 1_0 with CRC scrambled by C-RNTI, DCI format 1_0 with CRC scrambled by SI-RNTI, DCI format 1_0 with CRC scrambled by TC-RNTI, or DCI format 1_0 with CRC scrambled by RA-RNTI or CS-RNTI may include indicating PDSCH repetition transmission by one of 1 bit, 2 bits, or 3 bits of an MSB (or LSB) by using at least one or a combination of some of a frequency resource allocation field, a time resource allocation field, a virtual resource block (VRB)-to-physical resource block (PRB) mapping field, an MCS field, an NDI field, an RV field, an HARQ process number field, or a DAI field.

As another example, a method of indicating the number of repetition transmissions for a PUCCH scheduled by DCI format 1_0 with CRC scrambled by C-RNTI or CS-RNTI may include indicating PUCCH repetition transmission by one of 1 bit, 2 bits, or 3 bits of an MSB (or LSB) by using at least one or a combination of some of a TPC field, a PUCCH resource field, or a PDSCH-to-HARQ_feedback timing field.

According to an embodiment, information on which DCI field is used to perform repetition transmission may be determined via a separate upper-layer signal.

According to various embodiments of the disclosure, the UE may determine the number of repetition transmissions at a specific time point, based on satellite position information received from the base station via an upper-layer signal, a valid time of the information, or the like.

According to an embodiment, the satellite position information is in the form of ephemeris information, and may include information on how the satellite will move during a specific period. Specifically, the satellite position information may provide coefficient values for respective variables in the form of a linear function, a quadratic function, or a parabolic function. In addition, valid time information for the provided values may be provided separately via an upper-layer signal. For example, the base station may provide information on a, b, and c according to a quadratic function in the form of $a(x-y)^2 + b(x-y) + c$, and separately provide a reference value for y. Here, the x value may include a time value calculated by the UE itself.

According to an embodiment, the UE may identify the position of the satellite via the information described above. The UE may identify the position of the UE via a global navigation satellite system (GNSS) (e.g., a satellite navigation system), and based on this, the UE may identify the distance between the satellite and the UE. Therefore, since the main cause of signal attenuation in UE-satellite communication is path attenuation, the UE may implicitly determine the number of repetition transmissions, based on the distance between the satellite and the UE at a specific time point, even if separate scheduling information is not provided for at least one or a plurality of the following channels. Alternatively, for the following channels, related information may be configured via an individual upper-layer signal, or related information may be configured via a common upper-layer signal.

- Message 1 PRACH
- Message 2 PDSCH
- Message 3 PUSCH
- Message 4 PDSCH

- HARQ-ACK PUCCH for Message 4
- PUSCH scheduled by DCI format 0_0 with CRC scrambled by C-RNTI or CS-RNTI
- PDSCH scheduled by DCI format 1_0 with CRC scrambled by C-RNTI, DCI format 1_0 with CRC scrambled by SI-RNTI, DCI format 1_0 with CRC scrambled by TC-RNTI, or DCI format 1_0 with CRC scrambled by RA-RNTI or CS-RNTI
- PUCCH scheduled by DCI format 1_0 with CRC scrambled by C-RNTI or CS-RNTI

According to various embodiments of the disclosure, in order for the UE to implicitly determine the number of repetition transmissions, the base station may provide information as in [Table 45] below via an upper-layer signal. For example, if the distance between the UE and the satellite calculated by the UE is within the range of X2-Y2, the UE may determine the number of repetition transmissions to be 2. As another example, if the distance between the UE and the satellite calculated by the UE is within the range of X4-Y4, the UE may determine the number of repetition transmissions to be 8. Here, Y4 may not exist or may have an infinite number (or a value of infinity). However, [Table 45] is merely an example, and according to various embodiments, repetition transmission values and specific numbers thereof are not limited thereto, and it is obvious that various values are available.

According to an embodiment, minimum/maximum UE-satellite distance ranges for the respective numbers of repetition transmissions may or may not overlap with each other. If the respective ranges overlap, the UE may select one of the repetition transmission values.

[Table 45]

| Number of repetition transmissions | Minimum UE-to-satellite distance | Maximum UE-to-satellite distance |
|---|---|---|
| 1 | X1 | Y1 |
| 2 | X2 | Y2 |
| 4 | X3 | Y3 |
| 8 | X4 | Y4 |

According to various embodiments of the disclosure, with respect to [Table 45], a method by which the UE determines, based on a UE-satellite distance, the number of repetition transmissions is described as an example. However, the base station may directly provide the UE with a range, to which the number of repetition transmissions is applied per time, via a separate upper-layer signal configuration. For example, the base station may indicate to the UE that repetition transmission is performed 2 times in a t1-t2 period, 4 times in a t2-t3 period, or 8 times in a t3-t4 period. To this end, the base station may directly indicate to the UE, via an upper-layer signal, time period information and the number of repetition transmissions applied by the UE at that time. Accordingly, the UE may perform repetition transmission for each channel by applying the number of repetition transmissions configured for each corresponding time period.

According to an embodiment, the aforementioned information transferred via the upper-layer signal may be included in information as SIB information in which the base station periodically provides the UE with common upper-layer signal information. The UE may periodically receive SIB information and determine the upper-layer signal information commonly applied to the system. However, a case may occur where the UE cannot receive the periodically transmitted SIB information. In this case, the UE may perform repetition transmission or perform only single transmission without performing repetition transmission, based on immediately previously received SIB information. Alternatively, the UE may not perform any operation until new SIB information is obtained. In addition, in the SIB, configuration information to be applied individually to the following channels may be provided, configuration information to be applied commonly to each corresponding group may be provided after dividing the channels into a downlink group and an uplink group, configuration information to be applied commonly to each corresponding group may be provided after dividing the channels into an initial-access-related channel group and the other channel groups, or configuration information to be applied commonly to all the channels regardless of the above may be provided. In this case, the information transferred via the upper-layer signal may include, as described above, at least one of the number of repetition transmissions, valid time information, the number of repetition transmission candidates, DCI field information in which the number of repetition transmissions is to be indicated, or time information (or satellite information) in which the number of repetition transmissions is to be implicitly applied, and it is obvious that the information is not limited thereto and may also include other information.

- Message 1 PRACH
- Message 2 PDSCH
- Message 3 PUSCH
- Message 4 PDSCH

- HARQ-ACK PUCCH for Message 4
- PUSCH scheduled by DCI format 0_0 with CRC scrambled by C-RNTI or CS-RNTI
- PDSCH scheduled by DCI format 1_0 with CRC scrambled by C-RNTI, DCI format 1_0 with CRC scrambled by SI-RNTI, DCI format 1_0 with CRC scrambled by TC-RNTI, or DCI format 1_0 with CRC scrambled by RA-RNTI or CS-RNTI
- PUCCH scheduled by DCI format 1_0 with CRC scrambled by C-RNTI or CS-RNTI

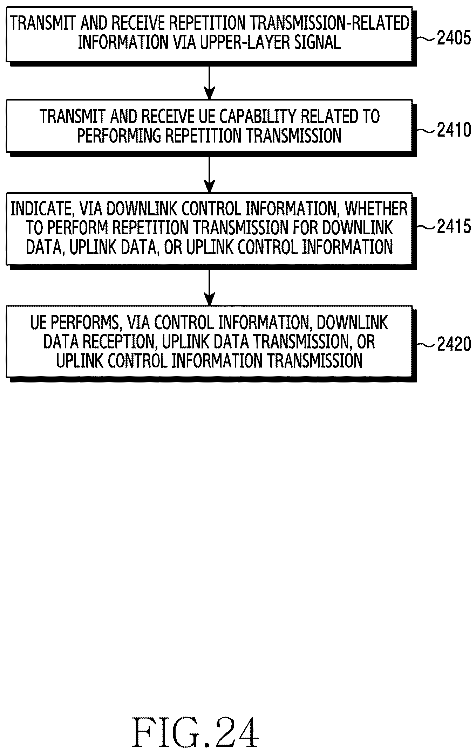

FIG. 24 illustrates an operation flow for a UE to repeatedly transmit and receive signals for channels according to an embodiment of the disclosure. Specifically, referring to FIG. 24, illustrated is a specific transmission and reception operation flow for the UE capability information or repetition transmission information described above.

In operation 2405, a UE may receive repetition transmission-related information from a base station via an upper-layer signal.

In operation 2410, the UE may report UE capability related to repetition transmission, as described in the first embodiment. Alternatively, instead of reporting the UE capability, the UE may transmit, to the base station, a request signal for requesting repetition transmission, based on a separately configured RSRP measurement signal, if a corresponding measurement value is equal to or smaller than a certain threshold. The request may be referred to as a repetition transmission request signal. According to an embodiment, the UE may determine whether to transmit the UE capability information or the repetition transmission request signal, via separate upper-layer signal configuration information received from the base station. Alternatively, based on whether an RSRP threshold is configured, the UE may transmit the repetition transmission request signal if the RSRP threshold is configured, or may report the UE capability if the RSRP threshold is not configured.

In operation 2415, the base station may indicate, to the UE via downlink control information, whether to perform repetition transmission for at least one of downlink data, uplink data, or uplink control information. According to an embodiment, in order to provide repetition transmission/reception on a specific channel, the base station may transmit upper-layer signal information to the UE. Specifically, a repetition transmission/reception value may include one or multiple values, and when multiple values are configured via an upper-layer signal, the UE may explicitly identify a repetition transmission value via DCI or may implicitly identify a repetition transmission value based on a UE-satellite distance or a repetition transmission value applied at a specific time.

In operation 2420, the UE may perform repetition transmission/reception for at least one of downlink data, uplink data, or uplink control information, based on the received control information. According to an embodiment, the UE may determine, based on the value configured via the upper-layer signal, whether to perform repetition transmission for an initial-access-related signal and a signal for at least one of PDSCH reception, PUSCH transmission, or PUCCH transmission, and if repetition transmission is determined, repetition transmission may be performed for each channel.

**<Third embodiment: Method of determining message 2 (e.g., random-access response (RAR)) window by UE>**

According to various embodiments of the disclosure, in response to PRACH transmission, a UE may detect DCI format 1_0 by using a CRC scrambled by a corresponding RA-RNTI in a window controlled by an upper layer.

According to an embodiment, the window may start at a first symbol of the earliest CORESET configured for the UE to receive a PDCCH for a Type1-PDCCH common search space (CSS) set, after the last symbol of a PRACH occasion corresponding to the PRACH transmission. In this case, subcarrier spacing may follow subcarrier spacing configured for the Type1-PDCCH CSS. If the UE acquires timing advance (TA) information via non-zero system information, or if the UE calculates TA by itself, the window may additionally start after (TTA + Kmac) msec.

According to an embodiment, a window length may be provided to the UE via separate upper-layer signal information "ra-ResponseWindow", and the unit of ra-ResponseWindow may include a slot unit based on the subcarrier spacing for the Type1-PDCCH CSS set.

According to an embodiment, if the UE requests repetition transmission of message 2 or reports UE capability related thereto to the base station, and if the base station schedules repetition transmission of message 2 for the UE, the UE may detect scheduling information within the window. The scheduling information may be provided to the UE from the base station via DCI format 1_0 with CRC scrambled by RA-RNTI. If the DCI information is repeatedly transmitted, the UE needs to clearly identify the definition of the window for detection of the DCI format.

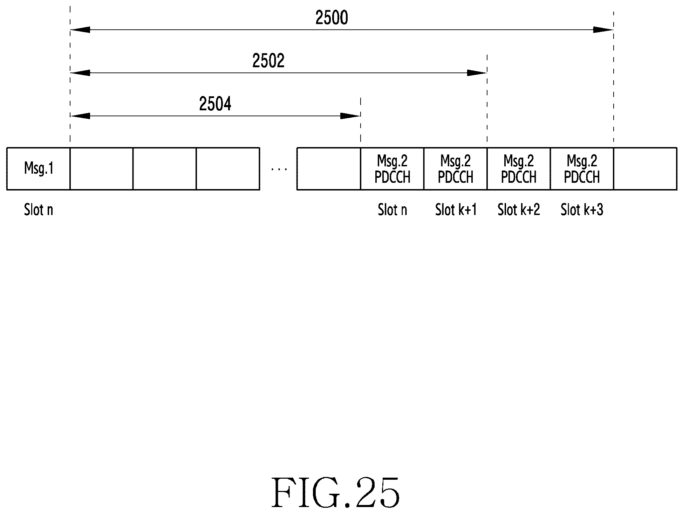

FIG. 25 illustrates a situation in which DCI for message 2 scheduling is repeatedly transmitted after transmission of a physical random-access channel (PRACH) according to an embodiment of the disclosure.

Referring to FIG. 25, illustrated is a situation in which DCI (Msg.2 PDCCH) for scheduling message 2 is repeatedly transmitted after a UE transmits a PRACH (e.g., Msg. 1) according to an embodiment.

According to an embodiment, if a window is configured for a period 2504 immediately after slot n in which the PRACH has been transmitted, the UE may re-perform PRACH transmission due to a failure in detecting the PDCCH for scheduling Msg.2 during the period.

According to an embodiment, if a window is configured for a period 2502 immediately after slot n in which the PRACH has been transmitted, the UE may identify whether Msg.2 is scheduled via the PDCCH for scheduling Msg.2, the PDCCH being received at least in slot k and slot k+1. However, in this case, since the UE is unable to additionally receive PDCCH information for scheduling Msg.2 in slot k+2 and slot k+3, a reception performance success rate may be likely to decrease. Therefore, the UE may not receive the PDCCH which provides scheduling information of Msg.2 and is repeatedly transmitted in slot k to slot k+3. Alternatively, because at least some PDCCH resources belong to the window period 2502, the UE may receive the PDCCH which provides scheduling information of Msg.2 and is repeatedly transmitted in slot k to slot k+3. Alternatively, the base station may perform repetition transmission of the PDCCH which provides the scheduling information of Msg.2 in slot k to slot k+3, but the UE may only perform reception of the PDCCH which provides the scheduling information of Msg.2 and is transmitted only in slots k and k+1 belonging to the window period 2502, and may perform control information detection based on this. According to various embodiments of the disclosure, FIG. 25 is merely an example, and it is obvious that the number of PDCCH repetition transmissions and transmission resource regions may be configured independently.

According to an embodiment, if a window is configured for a period 2500 immediately after slot n in which the PRACH has been transmitted, the UE may receive all PDCCHs for scheduling Msg.2, which are transmitted in slot k to slot k+3. The UE may detect the scheduling information of Msg.2 based on this.

According to various embodiments of the disclosure, various signal transmission and reception operations for repetition transmission between a UE and a base station (or a satellite) are disclosed. However, it is obvious that these operations may not necessarily be individually essential components. For example, various embodiments are not limited to the examples described above, and may include at least one of some, all, or a combination of some of the various operations.

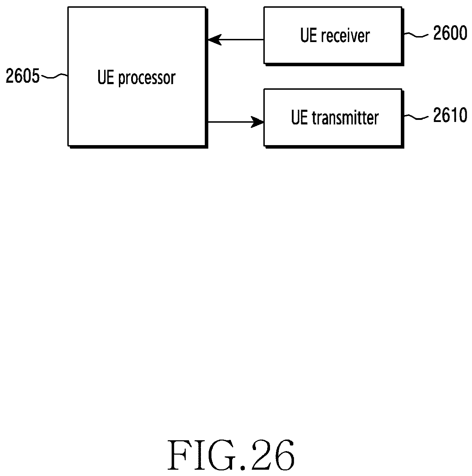

FIG. 26 illustrates a structure of a UE in a wireless communication system according to an embodiment of the disclosure.

Referring to FIG. 26, the UE may include a transceiver, which refers to a UE receiver 2600 and a UE transmitter 2610 as a whole, a memory (not illustrated), and a UE processor 2605 (e.g., UE controller, controller, or processor).

The UE transceiver 2600 and 2610, the memory, and the UE processor 2605 may operate according to the above-described communication methods between a UE and a base station according to various embodiments. However, components of the UE are not limited to the above-described example. For example, the UE may include a larger or smaller number of components than the above-described components. Furthermore, the transceiver, the memory, and the processor may be implemented in the form of a single chip.

According to an embodiment, the transceiver 2600 and 2610 may transmit/receive signals with base stations. The signals may include control information and data. To this end, the transceiver may include a radio frequency (RF) transmitter configured to up-convert and amplify the frequency of transmitted signals, an RF receiver configured to low-noise-amplify received signals and down-convert the frequency thereof, and the like. However, this is only an example of the transceiver, and the components of the transceiver are not limited to the RF transmitter and the RF receiver. In addition, the transceiver may receive signals through a radio channel, output the same to the processor, and transmit signals output from the processor through the radio channel.

According to an embodiment, the memory (not illustrated) may store programs and data necessary for the operation of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

According to an embodiment, the processor may control a series of processes so that the UE can operate according to the above-described embodiments of the disclosure. For example, the processor may control components of the UE to receive DCI configured in two layers so as to simultaneously receive multiple PDSCHs. The processor may include multiple processors, and the processor may perform operations of controlling the components of the UE by executing programs stored in the memory.

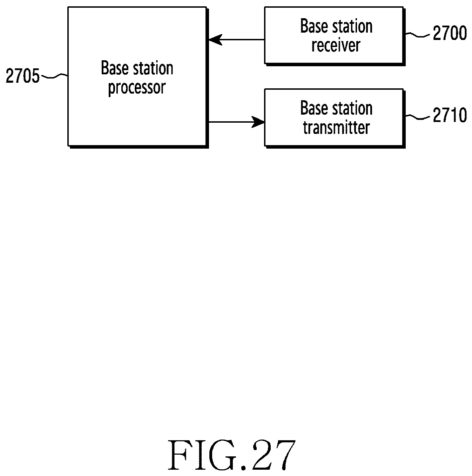

FIG. 27 illustrates a structure of a base station in a wireless communication system according to an embodiment of the disclosure.

Referring to FIG. 27, the base station may include a transceiver, which refers to a base station receiver 2700 and a base station transmitter 2710 as a whole, a memory (not illustrated), and a base station processor 2705 (e.g., base station controller, controller, or processor).

The base station transceiver 2700 and 2710, the memory, and the base station processor 2705 may operate according to the above-described communication methods between a base station and a UE according to various embodiments. However, components of the base station are not limited to the above-described example. For example, the base station may include a larger or smaller number of components than the above-described components. Furthermore, the transceiver, the memory, and the processor may be implemented in the form of a single chip.

According to an embodiment, the transceiver 2700 and 2710 may transmit/receive signals with UEs. The signals may include control information and data. To this end, the transceiver may include an RF transmitter configured to up-

convert and amplify the frequency of transmitted signals, an RF receiver configured to low-noise-amplify received signals and down-convert the frequency thereof, and the like. However, this is only an example of the transceiver, and the components of the transceiver are not limited to the RF transmitter and the RF receiver. In addition, the transceiver may receive signals through a radio channel, output the same to the processor, and transmit signals output from the processor through the radio channel.

According to an embodiment, the memory (not illustrated) may store programs and data necessary for the operation of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

According to an embodiment, the processor may control a series of processes so that the base station can operate according to the above-described embodiments of the disclosure. For example, the processor may control components of the base station to configure DCI configured in two layers including allocation information regarding multiple PDSCHs and to transmit the same. The processor may include multiple processors, and the processor may perform operations of controlling the components of the base station by executing programs stored in the memory.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

In addition, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A user equipment (UE) in a wireless communication system, the UE comprising:

   a transceiver; and
   a controller coupled to the transceiver,
   wherein the controller is configured to:

   transmit, to a base station, first information including the UE's capability regarding repetition transmission;
   receive, from the base station, second information indicating the repetition transmission; and
   based on the second information, receive one or more signals,
   wherein the first information or the second information is transmitted or received in an operating band associated with non-terrestrial networks (NTNs), and
   wherein the second information is received via radio resource control (RRC) signaling or downlink control information (DCI).

2. The UE of claim 1, wherein the first information is transmitted based on a comparison of a quality of a signal received from the base station with a threshold value.

3. The UE of claim 1, wherein the first information is included in at least one of a physical random-access channel (PRACH) preamble or message 3.

4. The UE of claim 1,

   wherein the second information comprises non-terrestrial network (NTN)-specific information associated with a position of the base station, and
   wherein the NTN-specific information comprises at least one of ephemeris information of the base station or information on a valid time associated with the ephemeris information.

5. A base station in a wireless communication system, the base station comprising

   a transceiver; and
   a controller coupled to the transceiver,
   wherein the controller is configured to:

   receive, from a user equipment (UE), first information including the UE's capability regarding repetition transmission;
   transmit, to the UE, second information indicating the repetition transmission; and
   based on the second information, transmit one or more signals,
   wherein the first information or the second information is received or transmitted in an operating band associated with non-terrestrial networks (NTNs), and
   wherein the second information is transmitted via radio resource control (RRC) signaling or downlink control information (DCI).

6. The base station of claim 5, wherein the first information is received based on a comparison of a quality of a signal transmitted from the base station with a threshold value.

7. The base station of claim 5, wherein the first information is included in at least one of a physical random-access channel (PRACH) preamble or message 3.

8. The base station of claim 5,

   wherein the second information comprises non-terrestrial network (NTN)-specific information associated with a position of the base station, and
   wherein the NTN-specific information comprises at least one of ephemeris information of the base station or information on a valid time associated with the ephemeris information.

9. A method performed by a user equipment (UE) in a wireless communication system, the method comprising:

transmitting, to a base station, first information including the UE's capability regarding repetition transmission;
receiving, from the base station, second information indicating the repetition transmission; and
based on the second information, receiving one or more signals,
wherein the first information or the second information is transmitted or received in an operating band associated with non-terrestrial networks (NTNs), and
wherein the second information is received via radio resource control (RRC) signaling or downlink control information (DCI).

10. The method of claim 9, wherein the first information is transmitted based on a comparison of a quality of a signal received from the base station with a threshold value.

11. The method of claim 9, wherein the first information is included in at least one of a physical random-access channel (PRACH) preamble or message 3.

12. The method of claim 9,

wherein the second information comprises non-terrestrial network (NTN)-specific information associated with a position of the base station, and
wherein the NTN-specific information comprises at least one of ephemeris information of the base station or information on a valid time associated with the ephemeris information.

13. A method performed by a base station in a wireless communication system, the method comprising:

receiving, from a user equipment (UE), first information includijng the UE's capability regarding repetition transmission;
transmitting, to the UE, second information indicating the repetition transmission; and
based on the second information, transmitting one or more signals,
wherein the first information or the second information is received or transmitted in an operating band associated with non-terrestrial networks (NTNs), and
wherein the second information is transmitted via radio resource control (RRC) signaling or downlink control information (DCI).

14. The method of claim 13, wherein the first information is received based on a comparison of a quality of a signal transmitted from the base station with a threshold value, and
wherein the first information is included in at least one of a physical random-access channel (PRACH) preamble or message 3.

15. The method of claim 13,

wherein the second information comprises non-terrestrial network (NTN)-specific information associated with a position of the base station, and
wherein the NTN-specific information comprises at least one of ephemeris information of the base station or information on a valid time associated with the ephemeris information.

FIG.1

FIG.2

BWP#1
(301)

BWP#2
(302)

Frequency

UE bandwidth
(300)

# FIG.3

Duration (404)

Frequency resources (403)

UE bandwidth part (410)

Frequency

Time

Slot (420)

Control resource set #1 (401)

Control resource set #2 (402)

FIG.4

FIG.5

FIG.6

TCT state #0 (700)    TCT state #1 (705)    TCT state #2 (710)

FIG.7

RRC configured TCI states (800)

| TCI #0 (805) | TCI #1 (810) | TCI #2 (815) | . . . | TCI #N (820) |

List of TCI states for CORESET (825)

| TCI #a (830) | TCI #b (835) | TCI #n (840) |

TCI indication via MAC CE (845)

# FIG.8

| Serving Cell ID (915) | | CORESET ID (920) | Oct 1 (900) |
|---|---|---|---|
| CORESET ID | TCI state ID (925) | | Oct 2 (905) |

# FIG.9

FIG.10

FIG.11

FIG.12

EP 4 727 239 A1

FIG.13

EP 4 727 239 A1

FIG.14

Single-cell LTE/NR
(1500)

Frequency aggregation
(1510)

Dual connectivity
(1520)

**gNB**
SDAP (1525)
PDCP (1530)
RLC (1535)
MAC (1540)
PHY (1545)

**UE**
PHY (1550)
MAC (1555)
RLC (1560)
PDCP (1565)
SDAP (1570)

**gNB**
SDAP
PDCP
RLC
MAC
PHY · · · PHY

**UE**
PHY · · · PHY
MAC
RLC
PDCP
SDAP

**gNB**
SDAP
PDCP
RLC
MAC
PHY

**SgNB**
RLC
MAC
PHY

**UE**
PHY
MAC
RLC
PDCP
SDAP

PHY
MAC
RLC

FIG.15

FIG.16

EP 4 727 239 A1

| Control information for TRP #0 | DCI #0 |
| Control information for TRP #1 | DCI #1 |
| ⋮ | ⋮ |
| Control information for TRP #(N-1) | DCI #(N-1) |

Case #1 (1700)

| Control information for TRP #0 | DCI #0 |
| Control information for TRP #1 | sDCI #0 |
| ⋮ | ⋮ |
| Control information for TRP #(N-1) | sDCI #(N-2) |

Case #2 (1705)

| Control information for TRP #0 | DCI |
| Control information for TRP #1 | sDCI |
| ⋮ | |
| Control information for TRP #(N-1) | |

Case #3 (1710)

| Control information for TRP #0 | Long DCI |
| Control information for TRP #1 | |
| ⋮ | |
| Control information for TRP #(N-1) | |

Case #4 (1715)

FIG.17

```
┌──────────────┐                                    ┌──────────────┐
│ Base station │                                    │      UE      │
└──────┬───────┘                                    └──────┬───────┘
       │                                                   │
       │   ┌───────────────────────────────────────────┐  │
       ├───┤ Perform downlink synchronization and       ├──┤
       │   │ acquire system information (1810)           │  │
       │   └───────────────────────────────────────────┘  │
       │                                                   │
       │   ┌───────────────────────────────────────────┐  │
       ├───┤ Perform uplink synchronization and         ├──┤
       │   │ establish RRC connection (1815)            │  │
       │   └───────────────────────────────────────────┘  │
       │                                                   │
       │        Receive RRC parameters (1820)             │
       ├─────────────────────────────────────────────────>│
       │                                                   │
       │    Receive path attenuation estimation signal    │
       │                  (1825)                           │
       ├─────────────────────────────────────────────────>│
       │                                                   │
       │              ┌────────────────────────────────────┤
       │              │ Estimate downlink path attenuation  │
       │              │ value and configure uplink          │
       │              │ transmission power value (1830)     │
       │              └────────────────────────────────────┤
       │                                                   │
       │          Report power headroom (1835)            │
       │<─────────────────────────────────────────────────┤
       │                                                   │
       ├──────────────────────────────────┐               │
       │ Optimize system operation based on│               │
       │ reported power headroom (1840)    │               │
       ├──────────────────────────────────┘               │
       │                                                   │
       │         Receive TPC command (1845)               │
       ├─────────────────────────────────────────────────>│
       │                                                   │
       │              ┌────────────────────────────────────┤
       │              │ Update transmission power based on  │
       │              │ TPC command (1850)                  │
       │              └────────────────────────────────────┤
       │                                                   │
       │        Perform uplink transmission (1855)        │
       │<─────────────────────────────────────────────────┤
       │                                                   │
```

FIG.18

FIG.19

EP 4 727 239 A1

m = 0
(2006)

m = 1
(2008)

m = 2
(2010)

m: PDCCH monitoring occasion
(Sorting in ascending order of start times of search space sets)

$V^{DL}_{C-DAI, 0, 0} = 1$
$V^{DL}_{T-DAI, 0} = 1$

$V^{DL}_{C-DAI, 0, 1} = 2$
$V^{DL}_{T-DAI, 1} = 2$

$V^{DL}_{C-DAI, 0, 2} = 3$
$V^{DL}_{T-DAI, 2} = 4$

2016

c = 0
(2002)

PUCCH

2020

t

Slot n

2012

2014

$V^{DL}_{C-DAI, 1, 2} = 4$
$V^{DL}_{T-DAI, 2} = 4$

c = 1
(2004)

t

2018

FIG.20

FIG.21

FIG.22

2305 — Message 1 (PRACH)

Message 2 (PDSCH) — 2310

2315 — Message 3 (PUSCH)

Message 4 (PDSCH) — 2320

2325 — HARQ-ACK (PUCCH)

FIG.23

TRANSMIT AND RECEIVE REPETITION TRANSMISSION-RELATED INFORMATION VIA UPPER-LAYER SIGNAL ~2405

TRANSMIT AND RECEIVE UE CAPABILITY RELATED TO PERFORMING REPETITION TRANSMISSION ~2410

INDICATE, VIA DOWNLINK CONTROL INFORMATION, WHETHER TO PERFORM REPETITION TRANSMISSION FOR DOWNLINK DATA, UPLINK DATA, OR UPLINK CONTROL INFORMATION ~2415

UE PERFORMS, VIA CONTROL INFORMATION, DOWNLINK DATA RECEPTION, UPLINK DATA TRANSMISSION, OR UPLINK CONTROL INFORMATION TRANSMISSION ~2420

# FIG.24

| Msg.1 | | | | ... | | Msg.2 PDCCH | Msg.2 PDCCH | Msg.2 PDCCH | Msg.2 PDCCH | |

Slot n | Slot n | Slot k+1 | Slot k+2 | Slot k+3

2500
2502
2504

# FIG.25

FIG.26

2705 — Base station processor ← Base station receiver — 2700

→ Base station transmitter — 2710

# FIG.27

## INTERNATIONAL SEARCH REPORT

| International application No. |
| --- |
| **PCT/KR2024/005791** |

| A. | CLASSIFICATION OF SUBJECT MATTER |
| --- | --- |

**H04W 72/1268**(2023.01)i; **H04W 72/232**(2023.01)i; **H04W 72/0446**(2023.01)i; **H04W 74/00**(2009.01)i; **H04W 8/24**(2009.01)i; **H04L 1/08**(2006.01)i

According to International Patent Classification (IPC) or to both national classification and IPC

| B. | FIELDS SEARCHED |
| --- | --- |

Minimum documentation searched (classification system followed by classification symbols)

H04W 72/1268(2023.01); H04B 7/185(2006.01); H04B 7/204(2006.01); H04W 36/00(2009.01); H04W 36/32(2009.01); H04W 72/231(2023.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NTN(non-terrestrial networks), satellite, UE, capability, repeat, RRC, DCI, threshold, quality, PRACH preamble, ephemeris

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2023-0098183 A (QUALCOMM INCORPORATED) 03 July 2023 (2023-07-03)<br>See paragraphs [0062]-[0078]; and figure 5. | 1-15 |
| Y | WO 2022-154560 A1 (LG ELECTRONICS INC.) 21 July 2022 (2022-07-21)<br>See paragraphs [0132]-[0246]; and figure 16. | 1-15 |
| Y | WO 2020-145559 A1 (KT CORPORATION) 16 July 2020 (2020-07-16)<br>See paragraphs [0218] and [0221]. | 2,6,10,14 |
| A | KR 10-2023-0017349 A (LG ELECTRONICS INC.) 03 February 2023 (2023-02-03)<br>See paragraphs [0151]-[0283]; and figures 9-13. | 1-15 |
| A | ZTE CORPORATION et al. Remaining issues on the TDM Solutions Enhancement. R2-2306306, 3GPP TSG-RAN WG2 Meeting #122. Inchon, Korea. 12 May 2023.<br>See section 2. | 1-15 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 August 2024** | **19 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | International application No. |
|---|---|
| Information on patent family members | PCT/KR2024/005791 |

| Patent document cited in search report | | | Publication date (day/month/year) | Patent family member(s) | | | Publication date (day/month/year) |
|---|---|---|---|---|---|---|---|
| KR | 10-2023-0098183 | A | 03 July 2023 | CN | 116368932 | A | 30 June 2023 |
| | | | | EP | 4241528 | A1 | 13 September 2023 |
| | | | | JP | 2023-548291 | A | 16 November 2023 |
| | | | | US | 11844115 | B2 | 12 December 2023 |
| | | | | US | 2022-0150984 | A1 | 12 May 2022 |
| | | | | WO | 2022-099310 | A1 | 12 May 2022 |
| WO | 2022-154560 | A1 | 21 July 2022 | EP | 4280686 | A1 | 22 November 2023 |
| | | | | KR | 10-2023-0129383 | A | 08 September 2023 |
| | | | | US | 2024-0080737 | A1 | 07 March 2024 |
| WO | 2020-145559 | A1 | 16 July 2020 | US | 11902815 | B2 | 13 February 2024 |
| | | | | US | 2022-0086671 | A1 | 17 March 2022 |
| KR | 10-2023-0017349 | A | 03 February 2023 | KR | 10-2573369 | B1 | 01 September 2023 |
| | | | | US | 11844040 | B2 | 12 December 2023 |
| | | | | US | 2022-0330191 | A1 | 13 October 2022 |
| | | | | US | 2023-0164722 | A1 | 25 May 2023 |
| | | | | WO | 2022-215901 | A1 | 13 October 2022 |

Form PCT/ISA/210 (patent family annex) (July 2022)